# EUROPEAN PATENT SPECIFICATION

(11) **EP 4 393 818 B1**
(45) Date of publication and mention of the grant of the patent: **04.11.2026**
(21) Application number: 23195289.6
(22) Date of filing: 05.09.2023
(51) Int. Cl.: B64C 37/02, B64U 10/13, B64U 20/40

(54) **AIRCRAFT APPARATUS (VARIANTS), SELF-PROPELLED MODULE, PAYLOAD, SYSTEM AND METHOD FOR MOVING PAYLOAD (VARIANTS)**
FLUGZEUGVORRICHTUNG (VARIANTEN), SELBSTANGETRIEBENES MODUL, NUTZLAST, SYSTEM UND VERFAHREN ZUR BEWEGUNG VON NUTZLAST (VARIANTEN)
APPAREIL D'AÉRONEF (VARIANTES), MODULE AUTOMOTEUR, CHARGE UTILE, SYSTÈME ET PROCÉDÉ DE DÉPLACEMENT DE CHARGE UTILE (VARIANTES)

(30) Priority: 28.12.2022 RU 2022135036
(43) Date of publication of application: 03.07.2024
(73) Proprietor: Andreev, Pavel Ruslanovich, 1086 Budapest (HU)
(72) Inventor: Andreev, Pavel Ruslanovich, 1086 Budapest (HU)
(74) Representative: Keller Schneider Patent- und Markenanwälte AG

(56) References cited:
- DE-A1- 102015 220 802
- US-A1- 2016 378 108
- US-A1- 2018 086 460
- US-A1- 2018 276 993
- US-A1- 2018 330 319
- US-A1- 2021 309 353

## Description

### FIELD OF THE INVENTION

The present invention relates to transport equipment, in particular to means and methods for moving a payload, specifically to a system and method for moving a payload which are based on the use of aircraft apparatuses, self-propelled modules and payloads and also to an aircraft apparatus, self-propelled module and payload, each of which may be used in such system and method individually or in combination with one another.

### BACKGROUND OF THE INVENTION

To date, a plurality of various scalable automated transport systems has been developed for transportation or delivery of a payload. Despite the acceptable speed and load capacity of such automated transport systems, the existing automated transport systems have a significant drawback in that it is impossible to automatedly redistribute a payload in the course of transportation or delivery of a payload to a point of destination.

There is therefore a need to develop methods and systems for moving a payload.

In particular, various transport systems which are based on the use of scalable automated aircraft apparatuses or other types of self-propelled devices which have various housing designs and which are provided with propulsion units enabling movement and navigation in the air space have become widespread.

For example, US patent application No. 20220144431 (hereinafter referred to as US 20220144431) published on May 12, 2022 provides a system for moving a payload in the form of a cluster means of transport, which system comprises detachably docked to one another aircraft apparatuses each of which has a housing provided with air propulsion units which enable movement of such cluster means of transport through the air and provided with docking modules which enable detachable connection of the housing of said aircraft apparatus to that of other aircraft apparatus while docking such aircraft apparatuses to one another, wherein said housing is further provided with a control module configured to receive control commands so as to enable detachable docking of the housing of said aircraft apparatus to that of at least one other aircraft apparatus.

It should be noted that in the system for moving a payload in the form of a cluster means of transport disclosed in US 20220144431, the payload may be in a fixed position with respect to the housing of a particular one of the aircraft apparatuses forming said cluster aircraft apparatus, which fact also makes it impossible to redistribute the payload in said means of transport.

Thus, the main disadvantage of the known system for moving a payload in the form of a cluster means of transport disclosed in US 20220144431 is that it is impossible to redistribute a payload in said means of transport.

Thus, there is an obvious need for further improvement of the known systems, methods, aircraft apparatuses and/or self-propelled modules for moving a payload, in particular to enable redistribution of a payload.

US 2018/0086460 A1 relates to the transfer of a payload from a originating drone to a receiving drone by a transfer sleeve.

Therefore, the technical problem solved by the present invention is to create a system, method, aircraft apparatus and self-propelled module for moving a payload, in each of which there is at least partially ameliorated at least the above disadvantage of the known system for moving a payload, of impossibility to redistribute a payload.

### DISCLOSURE

The object of the present invention is to create a system, method, aircraft and self-propelled module for moving a payload, solving each at least the above-mentioned technical problem of the prior art, as well as to expand the range of means for moving a payload.

A system for moving a payload is defined in claim 1. A method of moving a payload is defined in claim 39.

The task at hand is solved in the first aspect of the present invention by the fact that in the subject aircraft apparatus comprising: (i) a housing of the aircraft apparatus which housing is provided with one or more air propulsion units enabling movement of the aircraft apparatus through the air and one or more docking modules configured each to detachably connect said housing to the housing of other aircraft apparatus while docking said aircraft apparatuses to one another; and (ii) a control module configured to receive control commands so as to enable docking of said aircraft apparatus to at least one other aircraft apparatus; (a) the housing of the aircraft apparatus is further provided with one or more guides each of which is configured to mount or suspend thereon a payload and to move therealong said mounted payload; and (b) at least one of said guides is configured to detachably connect or dock to one or more guides of said connected housing of other aircraft apparatus to form a cluster guide.

Furthermore, the task at hand is solved in the second aspect of the present invention by the fact that in the subject aircraft apparatus comprising: (i) a housing of the aircraft apparatus which housing is provided with one or more air propulsion units enabling movement of the aircraft apparatus through the air and a control module; (a) the housing of the aircraft apparatus is further provided with one or more guides each of which is configured to mount or suspend thereon a payload and to move therealong said payload; (b) at least one of said guides is configured to detachably connect or dock to one or more guides of the housing of other aircraft apparatus to form a cluster guide while docking said aircraft apparatuses to one another; and (c) the control module is configured to receive control commands so as to enable docking of said aircraft apparatuses to one another.

Furthermore, the task at hand is solved in the third aspect of the present invention by the fact that in the subject cluster aircraft apparatus comprising: (i) two or more docked to one another aircraft apparatuses according to the first aspect of the present invention; (a) the control module further enables undocking of at least one of said docked to one another aircraft apparatuses so as to enable formation of a cluster guide from the guides of the remaining docked to one another aircraft apparatuses and/or enables docking of yet another aircraft apparatus according to the first aspect of the present invention to one of said docked to one another aircraft apparatuses so as to enable formation of a cluster guide from the guides of said docked to one another aircraft apparatuses.

Furthermore, the task at hand is solved in the fourth aspect of the present invention by the fact that in the subject cluster aircraft apparatus comprising: (i) two or more docked to one another aircraft apparatuses according to the second aspect of the present invention; (a) the control module further enables undocking of at least one of said docked to one another aircraft apparatuses so as to enable formation of a cluster guide from the guides of the remaining docked to one another aircraft apparatuses and/or enables docking of yet another aircraft apparatus according to the second aspect of the present invention to one of said docked to one another aircraft apparatuses so as to enable formation of a cluster guide from the guides of said docked to one another aircraft apparatuses.

Furthermore, the task at hand is solved in the fifth aspect of the present invention by the fact that the subject payload comprises: (i) a housing of the payload which housing is provided with one or more docking modules, at least one of which is configured to interact with at least one guide of the aircraft apparatus or self-propelled module so as to enable movement of the housing of the payload along said at least one guide, and/or provided with one or more guides, at least one of which is configured to interact with at least one docking module of the aircraft apparatus or with at least one docking module of the self-propelled module so as to enable movement of said aircraft apparatus or said self-propelled module along said at least one guide.

Furthermore, the task at hand is solved in the sixth aspect of the present invention by the fact that in the subject self-propelled module comprising: (i) a housing of the self-propelled module provided with one or more air propulsion units enabling movement of the aircraft apparatus through the air and provided with one or more additional means of movement; and (ii) a control unit configured to control the operation of said air propulsion units and to actuate at least one of said additional means of movement; (a) the housing of the self-propelled module is further provided with one or more docking modules each of which is configured to enable mounting or suspension of said self-propelled module on a guide and to enable movement of said self-propelled module along said guide and/or provided with one or more guides, at least one of which is configured to detachably interact with the docking module of the aircraft apparatus or the docking module of a payload.

Furthermore, the task at hand is solved in the seventh aspect of the present invention by the fact that the subject system for moving a payload comprises: (i) one or more aircraft apparatuses according to the first aspect of the present invention, at least one of which is detachably docked to one or more additional aircraft apparatuses according to the first aspect of the present invention or one or more cluster aircraft apparatuses according to the third aspect of the present invention by way of detachably connecting the docking modules thereof to one another so as to enable movement of the payload along a cluster guide formed from the guides of said docked to one another aircraft apparatuses; or (ii) one or more cluster aircraft apparatuses according to the third aspect of the present invention, at least one of which is detachably docked to one or more additional aircraft apparatuses according to the first aspect of the present invention or one or more cluster aircraft apparatuses according to the third aspect of the present invention by way of detachably connecting the docking modules thereof to one another so as to enable movement of the payload along a cluster guide formed from the guides of said docked to one another aircraft apparatuses.

Furthermore, the task at hand is solved in the eighth aspect of the present invention by the fact that the subject method of movement of a payload comprises the steps of: (i) docking at least one of one or more aircraft apparatuses according to the first aspect of the present invention or one or more cluster aircraft apparatuses according to the third aspect of the present invention to one or more additional aircraft apparatuses according to the first aspect of the present invention or one or more additional cluster aircraft apparatuses according to the third aspect of the present invention by way of connecting the docking modules of said aircraft apparatuses to be docked to one another to form a cluster guide from the guides of said aircraft apparatuses to be docked to one another; and (ii) moving the payload along said formed cluster guide into at least one of said docked to one another aircraft apparatuses.

An embodiment is possible, wherein, before the step of docking, there is performed rotation of the housing of the aircraft apparatus relative to the guide.

Furthermore, the task at hand is solved in the ninth aspect of the present invention by the fact that the subject system for moving a payload comprises: (i) one or more aircraft apparatuses according to the first aspect of the present invention or one or more cluster aircraft apparatuses according to the third aspect of the present invention; and (ii-i) one or more payloads according to the fifth aspect of the present invention, at least one of which is docked to at least one of said aircraft apparatuses by way of bringing at least one of the guides of said at least one payload into interaction with at least one docking module of said at least one aircraft apparatus so as to enable movement of said at least one aircraft apparatus along said at least one guide of the payload or by way of bringing at least one of the docking modules of said payload into interaction with at least one guide of said at least one aircraft apparatus so as to enable movement of said at least one payload along said at least one guide of the aircraft apparatus, or (ii-ii) one or more payloads according to the fifth aspect of the present invention, at least one of which is docked to at least one of said cluster aircraft apparatuses by way of bringing at least one of the guides of said at least one payload into interaction with at least one docking module of said at least one cluster aircraft apparatus so as to enable movement of said at least one cluster aircraft apparatus along said at least one guide of the payload or by way of bringing at least one of the docking modules of said payload into interaction with at least one guide of said at least one cluster aircraft apparatus so as to enable movement of said at least one payload along said at least one guide of the cluster aircraft apparatus.

An embodiment is possible, wherein, before the step of docking, there is performed rotation of the housing of the aircraft apparatus relative to the guide.

Furthermore, the task at hand is solved in the tenth aspect of the present invention by the fact that the subject method of movement of a payload comprises the steps of: (i) docking one or more payloads according to the fifth aspect of the present invention each to at least one of one or more aircraft apparatuses according to the first aspect of the present invention or one or more cluster aircraft apparatuses according to the third aspect of the present invention by way of bringing at least one of the guides of said payload into interaction with the docking module of said at least one aircraft apparatus so as to enable movement of said aircraft apparatus and docked thereto aircraft apparatuses along said at least one guide of the payload or by way of bringing at least one of the docking modules of said payload into interaction with the guide of said at least one aircraft apparatus so as to enable movement of the payload along said guide of the aircraft apparatus.

An embodiment is possible, wherein, before the step of docking, there is performed rotation of the housing of the aircraft apparatus relative to the guide.

Furthermore, the task at hand is solved in the eleventh aspect of the present invention by the fact that the subject system for moving a payload comprises: (i) one or more aircraft apparatuses according to the first aspect of the present invention or at least one cluster aircraft apparatus according to the third aspect of the present invention; and (ii) one or more self-propelled modules according to the sixth aspect of the present invention, at least one of which is docked to at least one of said aircraft apparatuses according to the first aspect of the present invention or to at least one of the aircraft apparatuses forming said at least one cluster aircraft apparatus according to the third aspect of the present invention by way of bringing at least one of the guides of said self-propelled module into interaction with the docking module of said at least one aircraft apparatus so as to enable movement of said aircraft apparatus and docked thereto aircraft apparatuses along said at least one guide of the self-propelled module or by way of bringing at least one of the docking modules of said self-propelled module into interaction with the guide of said at least one aircraft apparatus so as to enable movement of the self-propelled module along said guide of the aircraft apparatus.

Furthermore, the task at hand is solved in the twelfth aspect of the present invention by the fact that the subject method of movement of a payload comprises the steps of: (i) docking one or more self-propelled modules according to the sixth aspect of the present invention each to at least one of one or more aircraft apparatuses according to the first aspect of the present invention or one or more cluster aircraft apparatuses according to the third aspect of the present invention by way of bringing at least one of the guides of said self-propelled module into interaction with the docking module of said at least one aircraft apparatus so as to enable movement of said aircraft apparatus and docked thereto aircraft apparatuses along said at least one guide of the self-propelled module or by way of bringing at least one of the docking modules of said self-propelled module into interaction with the guide of said at least one aircraft apparatus so as to enable movement of the self-propelled module along said guide of the aircraft apparatus.

An embodiment is possible, wherein, before the step of docking, there is performed rotation of the housing of the self-propelled module relative to the guide.

Furthermore, the task at hand is solved in the thirteenth aspect of the present invention by the fact that the subject system for moving a payload comprises: (i) one or more payloads according to the fifth aspect of the present invention; and (ii) one or more self-propelled modules according to the sixth aspect of the present invention, at least one of which is detachably docked to at least one of said payloads by way of bringing at least one of the guides of said self-propelled module into interaction with the docking module of said at least one payload so as to enable movement of said payload along said at least one guide of the self-propelled module or by way of bringing at least one of the docking modules of said self-propelled module into interaction with the guide of said at least one payload so as to enable movement of said at least one self-propelled module along said at least one guide of the payload.

Furthermore, the task at hand is solved in the fourteenth aspect of the present invention by the fact that the subject method of movement of a payload comprises the steps of: (i) docking one or more self-propelled modules according to the sixth aspect of the present invention, each to at least one of one or more payloads according to the fifth aspect of the present invention by way of bringing at least one of the guides of said self-propelled module into interaction with the docking module of said at least one payload so as to enable movement of said payload along said at least one guide of the self-propelled module or by way of bringing at least one of the docking modules of said self-propelled module into interaction with the guide of said at least one payload so as to enable movement of the self-propelled module along said guide of the payload.

An embodiment is possible, wherein, before the step of docking, there is performed rotation of the housing of the aircraft apparatus relative to the guide.

Furthermore, the task at hand is solved in the fifteenth aspect of the present invention by the fact that in the subject aircraft apparatus comprising: (i) a housing of the aircraft apparatus which housing is provided with one or more air propulsion units enabling movement of the aircraft apparatus through the air; and (ii) a control module; (a) the housing of the aircraft apparatus is further provided with one or more guides each of which is configured to mount or suspend thereon a payload so as to enable simultaneous movement of said payload along said guide and movement of said guide with respect to said housing; and (b) at least one of said guides is configured to detachably connect or dock to one or more guides of the housing of other aircraft apparatus to form a cluster guide while docking said aircraft apparatuses to one another.

Furthermore, the task at hand is solved in the sixteenth aspect of the present invention by the fact that the subject cluster aircraft apparatus comprises: (i) two or more docked to one another aircraft apparatuses according to the fifteenth aspect of the present invention; wherein (a) the control module further enables undocking of at least one of said docked to one another aircraft apparatuses so as to enable formation of a cluster guide from the guides of the remaining docked to one another aircraft apparatuses and/or enables docking of yet another aircraft apparatus according to the fifteenth aspect of the present invention to one of said docked to one another aircraft apparatuses so as to enable formation of a cluster guide from the guides of said docked to one another aircraft apparatuses; wherein (b) the control module further enables movement of the payload along said cluster guide and movement of at least a portion of said cluster guide with respect to at least one of the housings of the docked to one another aircraft apparatuses.

Furthermore, the task at hand is solved in the seventeenth aspect of the present invention by the fact that in the subject aircraft apparatus comprising: (i) a housing of the aircraft apparatus which housing is provided with one or more air propulsion units enabling movement of the aircraft apparatus through the air and one or more docking modules configured each to detachably connect said housing to the housing of other aircraft apparatus while docking said aircraft apparatuses to one another; and (ii) a control module configured to receive control commands so as to enable docking of said aircraft apparatus to at least one other aircraft apparatus; (a) the housing of the aircraft apparatus is further provided with one or more guides each of which is configured to mount or suspend thereon a payload so as to enable simultaneous movement of said payload along said guide and movement of said guide with respect to said housing; and (b) at least one of said guides is configured to detachably connect or dock to one or more guides of said connected housing of other aircraft apparatus to form a cluster guide.

Furthermore, the task at hand is solved in the eighteenth aspect of the present invention by the fact that the subject cluster aircraft apparatus comprises: (i) two or more docked to one another aircraft apparatuses according to the seventeenth aspect of the present invention; wherein (a) the control module further enables undocking of at least one of said docked to one another aircraft apparatuses so as to enable formation of a cluster guide from the guides of the remaining docked to one another aircraft apparatuses and/or enables docking of yet another aircraft apparatus according to the seventeenth aspect of the present invention to one of said docked to one another aircraft apparatuses so as to enable formation of a cluster guide from the guides of said docked to one another aircraft apparatuses; wherein (b) the control module further enables movement of the payload along said cluster guide and movement of at least a portion of said cluster guide with respect to at least one of the housings of the docked to one another aircraft apparatuses.

Furthermore, the task at hand is solved in the nineteenth aspect of the present invention by the fact that the subject system for moving a payload comprises: (i) one or more aircraft apparatuses according to the second aspect of the present invention, at least one of which is detachably docked to one or more additional aircraft apparatuses according to the second aspect of the present invention or one or more cluster aircraft apparatuses according to the fourth aspect of the present invention by way of detachably connecting the guides thereof to one another so as to enable movement of the payload along a cluster guide formed from the guides of said docked to one another aircraft apparatuses; or (ii) one or more cluster aircraft apparatuses according to the fourth aspect of the present invention, at least one of which is detachably docked to one or more additional aircraft apparatuses according to the second aspect of the present invention or one or more cluster aircraft apparatuses according to the fourth aspect of the present invention by way of detachably connecting the guides thereof to one another so as to enable movement of the payload along a cluster guide formed from the guides of said docked to one another aircraft apparatuses.

Furthermore, the task at hand is solved in the twentieth aspect of the present invention by the fact that the subject method of movement of a payload comprises the steps of: (i) docking at least one of one or more aircraft apparatuses according to the second aspect of the present invention or one or more cluster aircraft apparatuses according to the fourth aspect of the present invention to one or more additional aircraft apparatuses according to the second aspect of the present invention or one or more additional cluster aircraft apparatuses according to the fourth aspect of the present invention by way of detachably connecting the guides of said aircraft apparatuses to be docked to one another to form a cluster guide from the guides of said aircraft apparatuses to be docked to one another; and (ii) moving the payload along said formed cluster guide into at least one of said docked to one another aircraft apparatuses.

An embodiment is possible, wherein, prior to the step of movement of the payload, there is performed rotation of the payload relative to the cluster guide.

Furthermore, the task at hand is solved in the twenty-first aspect of the present invention by the fact that the subject system for moving a payload comprises: (i) one or more aircraft apparatuses according to the fifteenth aspect of the present invention, at least one of which is detachably docked to one or more additional aircraft apparatuses according to the fifteenth aspect of the present invention or one or more cluster aircraft apparatuses according to the sixteenth aspect of the present invention by way of detachably connecting the guides thereof to one another so as to enable simultaneous movement of the payload along a cluster guide formed from the guides of said docked to one another aircraft apparatuses and movement of at least a portion of said cluster guide with respect to one or more housings of said docked to one another aircraft apparatuses, or (ii) one or more cluster aircraft apparatuses according to the sixteenth aspect of the present invention, at least one of which is detachably docked to one or more additional aircraft apparatuses according to the fifteenth aspect of the present invention or one or more cluster aircraft apparatuses according to the sixteenth aspect of the present invention by way of detachably connecting the guides thereof to one another so as to enable simultaneous movement of the payload along a cluster guide formed from the guides of said docked to one another aircraft apparatuses and movement of at least a portion of said cluster guide with respect to one or more housings of said docked to one another aircraft apparatuses.

Furthermore, the task at hand is solved in the twenty-second aspect of the present invention by the fact that the subject method of movement of a payload comprises the steps of: (i) docking at least one of one or more aircraft apparatuses according to the fifteenth aspect of the present invention or one or more cluster aircraft apparatuses according to the sixteenth aspect of the present invention to one or more additional aircraft apparatuses according to the fifteenth aspect of the present invention or one or more additional cluster aircraft apparatuses according to the sixteenth aspect of the present invention by way of detachably connecting the guides of said aircraft apparatuses to be docked to one another to form a cluster guide from the guides of said aircraft apparatuses to be docked to one another; and (ii) simultaneously moving at least a portion of said formed cluster guide with respect to one or more housings of said docked to one another aircraft apparatuses and moving the payload along said formed cluster guide into at least one of said docked to one another aircraft apparatuses.

Furthermore, the task at hand is solved in the twenty-third aspect of the present invention by the fact that the subject system for moving a payload comprises: (i) one or more aircraft apparatuses according to the seventeenth aspect of the present invention, at least one of which is detachably docked to one or more additional aircraft apparatuses according to the seventeenth aspect of the present invention or one or more cluster aircraft apparatuses according to the eighteenth aspect of the present invention by way of detachably connecting the docking modules thereof to one another so as to enable simultaneous movement of the payload along a cluster guide formed from the guides of said docked to one another aircraft apparatuses and movement of at least a portion of said cluster guide with respect to one or more housings of said docked to one another aircraft apparatuses, or (ii) one or more cluster aircraft apparatuses according to the eighteenth aspect of the present invention, at least one of which is detachably docked to one or more additional aircraft apparatuses according to the seventeenth aspect of the present invention or one or more cluster aircraft apparatuses according to the eighteenth aspect of the present invention by way of detachably connecting the docking modules thereof to one another so as to enable simultaneous movement of the payload along a cluster guide formed from the guides of said docked to one another aircraft apparatuses and movement of at least a portion of said cluster guide with respect to one or more housings of said docked to one another aircraft apparatuses.

Furthermore, the task at hand is solved in the twenty-fourth aspect of the present invention by the fact that the subject method of movement of a payload comprises the steps of: (i) docking at least one of one or more aircraft apparatuses according to the seventeenth aspect of the present invention or one or more cluster aircraft apparatuses according to the eighteenth aspect of the present invention to one or more additional aircraft apparatuses according to the seventeenth aspect of the present invention or one or more additional cluster aircraft apparatuses according to the eighteenth aspect of the present invention by way of detachably connecting the docking modules of said aircraft apparatuses to be docked to one another to form a cluster guide from the guides of said aircraft apparatuses to be docked to one another; and (ii) simultaneously moving at least a portion of said formed cluster guide with respect to one or more housings of said docked to one another aircraft apparatuses and moving the payload along said formed cluster guide into at least one of said docked to one another aircraft apparatuses.

The above aspects of the present invention, from the first one to the twenty-fourth one, provide each a technical result of increasing the efficiency of redistribution of a payload by means of using guides. The above technical advantage of the claimed group of technical solutions is not limiting. Additional advantages of the claimed group of technical solutions and individual technical solutions in said group, including particular embodiments thereof, will become apparent to one skilled from the following detailed description of the present invention and the accompanying drawings.

Furthermore, the above aspects of the present invention provide each an additional technical result of expanding the range of means for moving a payload.

### BRIEF DESCRIPTION OF DRAWINGS

The accompanying drawings which are included to provide further understanding of the principles of the present invention constitute a part hereof and are incorporated herein to illustrate the below embodiments and aspects of the present invention. The accompanying drawings, together with the description below, serve to explain the principles of the present invention. In the drawings:
Fig. 1 is a first illustrative embodiment of the system for moving a payload according to the present invention;
Fig. 2 is a second illustrative embodiment of the system for moving a payload according to the present invention;
Fig. 3.1 is one of illustrative embodiments of the self-propelled module according to the present invention;
Fig. 3.2 is another illustrative embodiment of the self-propelled module according to the present invention;
Fig. 3.3 is another illustrative embodiment of the self-propelled module according to the present invention and the cluster self-propelled module according to the present invention;
Fig. 4 is a schematic view of one of illustrative examples of the process of docking a payload to an aircraft apparatus and to a self-propelled module;
Fig. 5 is a schematic view of one of the illustrative examples of the process of docking a cluster aircraft apparatus to an aircraft apparatus provided to a payload mounted on a self-propelled module;
Fig. 6 is a schematic view of one of the illustrative examples of the process of replacing an aircraft apparatus in a cluster aircraft apparatus provided to a payload mounted on a self-propelled module with another aircraft apparatus, and also a view of the process of replacing a self-propelled module provided to a payload with a cluster self-propelled module;
Figs. 7.1 and 7.2 are schematic views of an illustrative example of the system comprising a cluster aircraft apparatus with a cluster guide and multiple payloads configured to move along the cluster guide;
Fig. 8 is a flow diagram of the first embodiment of the method for moving a payload;
Fig. 9 is a flow diagram of the second embodiment of the method for moving a payload;
Fig. 10 is a flow diagram of the third embodiment of the method for moving a payload;
Fig. 11 is a flow diagram of the fourth embodiment of the method for moving a payload;
Fig. 12 is a flow diagram of the fifth embodiment of the method for moving a payload;
Fig. 13 is a flow diagram of the sixth embodiment of the method for moving a payload; and
Fig. 14 is a flow diagram of the seventh embodiment of the method for moving a payload.

### DETAILED DESCRIPTION

Hereinafter, various exemplary embodiments of the present invention are described with reference to the accompanying drawings; however, it should be understood that the description below does not define or limit the scope of the present invention.

In the following description, a detailed description of known functions and designs will be omitted as this unimportant information may obscure the concept of the present invention.

It is to be understood that in the following description the terms such as "first", "second", "upper", "lower", "lateral", "front", "rear", etc. are used solely for convenience, and they should not be interpreted as limiting terms. In particular, as used in the present invention, unless explicitly stated otherwise in the description herein, the terms "first", "second", "third" or the like are used to distinguish elements, components, parts, assemblies, modules, blocks, embodiments or the like, to which they pertain, from one another and not meant to describe any particular relationship therebetween. Thus, for example, it should be understood that the use of the terms "first group" of self-propelled modules and "second group" of self-propelled modules is not intended to imply any particular order, type, chronology, hierarchy or ranking (for example) of/between groups of self-propelled modules in a plurality of self-propelled modules, nor is their use (by itself) intended to imply that "third group" of self-propelled modules, "fourth group" of self-propelled modules, etc. may further exist. Further, as is discussed herein in other contexts, reference to a "first group" and a "second group" does not preclude herein the two groups from being the groups of the same elements. Thus, for example, in some instances, self-propelled modules in a "first group" of self-propelled modules and in a "second group" of self-propelled modules may coincide in terms of design, while in other instances they may be different in terms of design.

References to an item in the singular should be understood to include such items in the plural, and vice versa, unless explicitly stated otherwise or clear from the context herein.

Grammatical conjunctions are intended to express any and all disjunctive and conjunctive combinations of conjoined clauses, sentences, words and the like, unless otherwise stated or clear from the context. Thus, the term "or" should be understood to generally mean "and/or" and so forth.

Recitation of ranges of values herein is not intended to be limiting, referring instead individually to any and all values falling within the range, unless otherwise indicated herein, and each separate value within such a range is incorporated into the description as if it was individually recited herein.

Words "about," "approximately" or the like, when accompanying a numerical value, are to be construed as including any deviation as would be understood by one of ordinary skill in the art to operate satisfactorily for an intended purpose. Ranges of values and/or numeric values are provided herein as examples only, and do not constitute a limitation on the scope of the described embodiments.

Any and all examples provided herein or at least a portion thereof, as well as corresponding phrases ("for example", "such as", "in particular" or the like), are used merely to facilitate understanding of the principles of the present invention and to provide for sufficient disclosure of the present invention; however, these phrases do not pose any limitations on the embodiments of the present invention, for description of which embodiments they are utilized herein, in particular they do not limit practical implementations of elements, components, parts, assemblies, modules, blocks, devices, means and/or the like utilized to disclose the principles of design and operation of the present invention.

### Terms and definitions used in the description herein

The term "illustrative" means a non-limiting example, instance or illustration. In a similar manner, the terms "for example" and "by way of example" used herein set off lists of one or more non-limiting examples, instances or illustrations. As used herein, circuitry is "configured" to perform a function whenever the circuitry comprises the necessary hardware and code (if any is necessary) to perform the function, regardless of whether performance of the function is blocked or forbidden (for example, by an operator-configurable setting, factory trim, etc.).

As used in the present invention, the term "correspondence" and derivatives thereof (i.e. adjective, verb, adverb) does not necessarily mean exact conformity or exact equality in/to/between whatsoever in any respect but may imply a departure or deviation from said equality within specified limits. For example, the term "corresponding coordinates", unless the description herein clearly dictates otherwise, means not only that these coordinates may be exactly equal to one another or may exactly coincide with one another but also implies that said equality or coincidence of coordinates may be established with some error (for example, with the error of operation of a GPS system) or within the bounds of a predetermined geographic region surrounding an exact geographic point or region to which these coordinates belong or an exact geographic location to which these coordinates belong.

**In** the context of the present invention, the term "self-propelled module", unless the description herein clearly dictates otherwise, refers to an independent apparatus or device structurally assembled from typical or standard (commercially available) parts, elements, blocks, assemblies, devices and/or the like and capable of moving under its own power through the air, over land (ground), over water, under water and/or over the surface of a stationary or movable physical object at least partially disposed in at least one of air space, ground space, surface space, and underwater space.

As used in the present invention, the term "unmanned aerial vehicle" (UAV), unless the description herein clearly dictates otherwise, refers to an unmanned aircraft which is configured to fly or which is capable of moving through the air in automatic mode, i.e. without involving a human or external control sources, or is capable of moving through the air in semi-automatic mode, i.e. with receipt of at least a portion of control commands from a human (for example, a pilot, an operator or the like) or an external source (for example, a control panel, control server, external control device or the like) via predetermined communication channels. Unlimited examples of UAVs are various multi-rotor UAVs, for example, multicopter drones; single-rotor UAVs, for example, unmanned helicopter; hybrid UAVs, for example, rotary wing drones; and the like.

In the context of the present invention, the term "housing", unless the description herein clearly dictates otherwise, refers to a framework, skeleton, shell, panelling, fuselage, load-bearing structure or body of a physical inanimate object, each of which may be formed from a single load-bearing element or a combination of connected to one another load-bearing elements, wherein the type, shape, overall dimensions, design features and/or material of such housing are not specifically limited in any way.

In the context of the present invention, the term "payload", unless the description herein clearly dictates otherwise, refers to people or living beings (in particular, to people or living beings as such or people or living beings placed into a capsule, cabin, accommodation module, cryomodule, rescue module, living compartment, living block and the like) or to cargo (to cargo as such or to cargo placed into crates, boxes, packages, bags, containers, reservoirs, vessels, tanks, canisters, receptacles, barrels, cisterns, cylinders, vessels, reservoirs, packs, bottles, flasks, glass containers, cylinders, cases, storage modules and the like) which may be accommodated in the housing of the means of transport performing the function of a carrier and intended for delivery, shipment or transportation of people, various living beings and/or various cargos through the air, over ground (land), over water and/or under water.

As used in the present invention, the term "module", unless the description herein clearly dictates otherwise, refers to a functional element or a combination of functional elements of a device in the form of a part, node, block or other assembly unit that performs certain technical functions that provide for the functioning of the device. The module generally may be implemented in practice using a combination of known structural elements, a combination of known structural elements and known hardware, a combination of known structural elements and known software and hardware or a combination of known hardware and known software. Accordingly, for example, the control module may be implemented using hardware and software. As used in the present invention, the module of integrated control may be a physical device, an apparatus or a plurality of modules implemented using hardware, for example, using an application-specific integrated circuit (ASIC) or a field-programmable gate array (FPGA) or a combination of hardware and software, for example, using a microprocessor system and a set of instructions implementing the functionality of the control unit, which (when executed) transform the microprocessor system into an application-specific device or system (for example, autopilot). Furthermore, each of the modules described herein or at least one of them, may be implemented in the form of a combination of hardware and software, wherein some of the functionality described herein with respect to one of the modules may be implemented by means of hardware only, whereas other functionality described herein in relation to the same module or other module may be implemented by way of using hardware in combination with software. Furthermore, in the context of the present invention, the docking module may be configured to detachably interact with at least one unmanned aerial vehicle, wherein the docking module may be implemented using a combination of known structural elements, a combination of known structural elements and hardware, a combination of structural elements and software and hardware or a combination of hardware and software.

As used in the present invention, the term "navigation command", unless the description herein clearly dictates otherwise, refers to an instruction directed to aircraft apparatuses and/or self-propelled modules being part of the system for moving a payload. Navigation commands may be presented or provided by the movement control system of the self-propelled module or the movement control system of the aircraft apparatus in the form of digital or analog data, instructions, control signals or the like. Navigation commands may be initially generated by, without limitation, an automatic operator, an operator (whether locally or remotely situated) and/or an obstacle-avoidance system. In the case of aircraft apparatuses, navigation commands may be communicated to, for example, a control unit for controlling an aircraft apparatus or the steering system of an aircraft apparatus, whereas in the case of self-propelled modules, navigation commands may be communicated, for example, to a control unit for controlling a self-propelled module or the steering system of a self-propelled module.

As used in the present invention, the term "manual control", unless the description herein clearly dictates otherwise, refers not only to control solely using human hands but also using human feet, fingers, voice, pupils or any suitable combination thereof. Thus, as used in the present invention, the term "manual control" refers to at least one of the following: buttons, levers, joysticks, toggle switches, pedals, touch screen, gesture control sensors, pupil-tracking scanners, microphone and/or the like.

As used in the present invention, the term "charging device", unless the description herein clearly dictates otherwise, refers to a device for replenishing the range of a self-propelled module or aircraft apparatus by way of recharging the battery thereof and/or by way of replenishing the fuel capacity thereof.

As used in the present invention, the term "database", unless the description herein clearly dictates otherwise, refers to any structured data set that does not depend on a specific structure, database management software, hardware of the computer that stores data, uses data or otherwise makes data available for use. The database may be present on the same hardware running the process that stores or uses the information stored in the database or it may be present on separate hardware, for example, a dedicated server or on a plurality of servers.

In the context of the present invention, the term "docking spot", unless the description herein clearly dictates otherwise, refers to a region of the surface of the housing of the self-propelled module/aircraft apparatus or other structural portion of the self-propelled module/aircraft apparatus, on which region said self-propelled module/aircraft apparatus comes into coupling, connects or interacts with another self-propelled module/aircraft apparatus or any other structure dockable to said self-propelled module/aircraft apparatus.

As used in the present invention, the term "parking station", unless the description herein clearly dictates otherwise, means an unmovable or movable structure adapted to accommodate unmanned aerial vehicles, store unmanned aerial vehicles and/or replenish (for example, recharge) therein the range of self-propelled modules or aerial vehicles.

As used in the present invention, the term "control device" refers to computing equipment executing a computer program for enabling receipt of requests (for example, from other computing devices) over a communication network, execution or processing of such requests and/or transmission of such requests over a communication network (for example, to other computing devices). The computing equipment executing a computer program may be, without limitation, a single physical computer or a single physical computer system. As used in the present invention, the use of the term "control device" does not mean that each computational task (for example, received instructions or commands) or any other specific task will be received, executed or cause performance by one and the same control device (i.e. by one and the same software and/or hardware), which means that any quantity of pieces of software or hardware may be involved in receiving/transmitting, executing or may cause performance of any task or request or the consequences of any task or request, where all that software and hardware may be implemented in the form of one or more control devices.

As used in the present invention, the term "server" refers to computing equipment executing a computer program for enabling receipt of requests (for example, from other computing devices) over a communication network, execution or processing of such requests and/or transmission of such requests over a communication network (for example, to other computing devices). The computing equipment executing a computer program may be, without limitation, a single physical computer or a single physical computer system. As used in the present invention, the use of the term "server" does not mean that each computational task (for example, received instructions or commands) or any other specific task will be received, executed or cause performance by one and the same server (i.e. one and the same software and/or hardware), which means that any quantity of pieces of software or hardware may be involved in receiving/transmitting, executing or may cause performance of any task or request or the consequences of any task or request, where all that software and hardware may be implemented in the form of one or more servers.

### First embodiment of system for moving payload

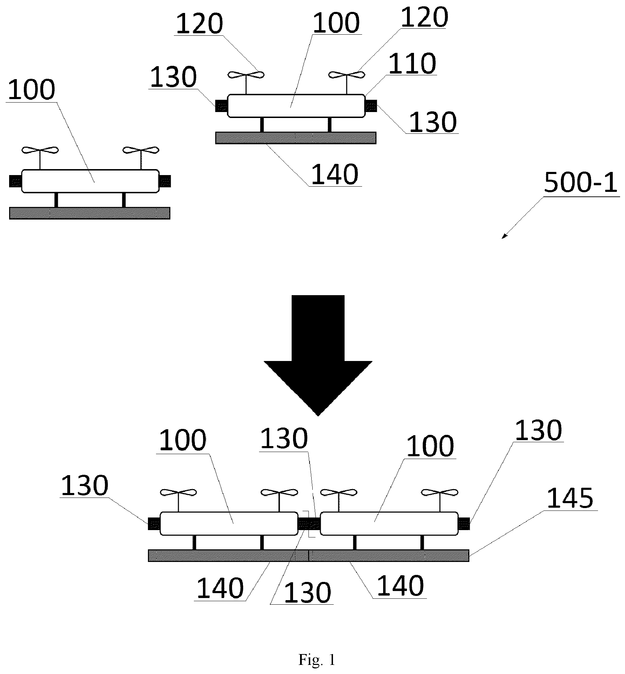

Fig. 1 is a first embodiment of a system 500-1 for moving a payload according to the present invention, comprising two aircraft apparatuses 100 configured to detachably connect to one another or to detachably dock to one another to form a cluster aircraft apparatus.

It should be noted that the system 500-1 may be comprised of two or more aircraft apparatuses 100 configured to detachably connect to one another to form a cluster aircraft apparatus, for example, three, four, five, six, seven, eight, nine, ten, eleven, twelve or more aircraft apparatuses configured each analogously to one of the embodiments of the aircraft apparatus 100 described herein.

It should also be noted that from the aircraft apparatuses 100 being part of the system 500-1 there may be formed or defined one or more cluster aircraft apparatuses (for example, one, two, three, four, five, six, seven, eight, ten, ten or more cluster aircraft apparatuses), wherein said cluster aircraft apparatuses may consist each of two or more aircraft apparatuses 100 and may have identical or different quantity of aircraft apparatuses forming those cluster aircraft apparatuses.

Each of the aircraft apparatuses 100 being part of the system 500-1 shown in Fig. 1 may be used to move or transport through the air a payload, in particular people, animals or other living organisms, means of transport, equipment, medicines or any other type of cargo. In particular, each of the aircraft apparatuses 100 may be implemented as any suitable unmanned aerial vehicle (UAV) known in the prior art.

Each of the aircraft apparatuses 100 being part of the system 500-1 shown in Fig. 1 comprises a framework or housing 110 of any suitable type which is provided with at least two air propulsion units 120 each of which is configured in the form of an air propeller and which are disposed or mounted on the housing 110 on the external side thereof and also comprises a control module (not shown) mounted in the interior of the housing 110 and configured to control the operation of the aircraft apparatus 100, including the operation of the propulsion units 120 thereof. The control module in each of the aircraft apparatuses 100 is also configured to present control commands to at least one of the air propulsion units 120 so as to actuate same or to the both air propulsion units 120 so as to actuate same, thus enabling movement through the air or flight of the aircraft apparatus 100, wherein the simultaneous operation of the both propulsion units 120 increases the carrying capacity of the aircraft apparatus 100.

Furthermore, at least one or each of the aircraft apparatuses 100 may comprise at least one of the following means of wireless communication: an SW band radio antenna, USW radio antenna, UHF radio antenna, an optical communication module, half-duplex/simplex satellite communication module, 2G/3G/4G/LTE/5G cellular communication module, wireless communication module, wired communication module and the like, thus allowing said aircraft apparatus 100 to receive navigation commands and/or control commands from the control device of the system 500-1 and, accordingly, allowing the control device of the system 500-1 to control the operation of said aircraft apparatus 100.

In turn, the control device of the system 500-1 is configured to receive and process data (including system requests) from the aircraft apparatuses 100, and is also configured to generate control instructions/commands and/or generate navigation instructions/commands based on said received data and the results of processing thereof so as to enable presenting or directing such generated control commands and/or navigation commands to at least one of the aircraft apparatuses 100, including in response to a request from said aircraft apparatus 100. In order to present navigation commands and/or control commands to at least one of the aircraft apparatuses 100 being part of the system 500-1, the control device of the system 500-1 is communicatively coupled, by means of a communication network (not shown) being part of the system 500-1, to said aircraft apparatuses 100.

The control module in each of the aircraft apparatuses 100 is communicatively coupled to the above means of wireless communication of the aircraft apparatus 100, thus allowing said control module to process navigation commands and/or control commands received, by said means of wireless communication of the aircraft apparatus, from the control device of the system 500-1, and to control the operation of said aircraft apparatus 100 depending on said navigation commands and/or control commands. In particular, in response to navigation commands and/or control commands from the control device of the system 500-1, the control module of the aircraft apparatus 100 may, for example, enable performance of the following operations: (i) altering the speed of flight of the aircraft apparatus 100, (ii) altering the direction of flight of the aircraft apparatus 100, (iii) directing the aircraft apparatus 100 from a parking station (not shown) or a current region of air space to a target region of air space in which it is contemplated to dock said aircraft apparatus 100 to at least one other aircraft apparatus, to at least one below-described self-propelled module 300 and/or to at least one below-described payload 200; (iv) docking the aircraft apparatus 100 to at least one other aircraft apparatus, to at least one below-described self-propelled module 300 and/or to at least one below-described payload 200; (v) undocking the aircraft apparatus 100 from at least one other aircraft apparatus, from at least one below-described self-propelled module 300 and/or from at least one below-described payload 200; and (vi) directing the aircraft apparatus 100 to one of parking stations (not shown) for accommodating therein or thereon so as to enable storage of said aircraft apparatus 100 in said parking station and/or so as to enable replenishment of the range (charging) of the aircraft apparatus 100. In some embodiments of the present invention, the control device (not shown) may as well not be part of the system 500-1.

In some embodiments of the present invention, the communication protocols and/or technical means used for communication between the control device of the system 500-1 and the aircraft apparatuses 100 may be at least partially different from one another and/or may at least partially coincide with one another. Furthermore, for communication there may be simultaneously used one or more communication protocols and corresponding technical means of communication.

In some embodiments of the present invention, the control device of the system 500-1 may be configured to organize safety while flight or movement through the air of the aircraft apparatuses 100 or cluster aircraft apparatuses formed from the aircraft apparatuses 100.

The control device of the system 500-1 presenting control commands and/or navigation commands to the control module of at least one or each of the aircraft apparatuses 100 being part of the system 500-1 shown in Fig. 1 is a single server which may be configured in the form of, for example, the Dell^{™} PowerEdge^{™} server which may use the Ubuntu Server operating system or Windows Server operating system. Furthermore, the control device of the system 500-1 may have or may acquire access to at least one database (not shown) via the communication network of the system 500-1 or otherwise or may comprise at least one local database stored on the storage device (not shown) or in the memory (not shown) of such control device.

In some embodiments of the present invention, the control device of the system 500-1 may be any other suitable hardware, application software, system software or any combination thereof.

In other embodiments of the present invention, the functions of the control device of the system 500-1 may be shared among multiple computer devices or computing devices, for example, may be implemented using multiple servers communicatively coupled to one another via the communication network of the system 500-1.

In other embodiments of the present invention, the functions of the control device of the system 500-1 may be performed by a control module of other aircraft apparatus identical to or distinct from the aircraft apparatus 100, by a group or combination of control modules of other aircraft apparatuses identical to or distinct from the aircraft apparatus 100, by the control unit of the below-described self-propelled module 300 or by any other suitable computing device configured to generate control commands and/or navigation commands and to present said generated commands to the control module of at least one or each of the aircraft apparatuses 100 being part of the system 500-1.

The communication network of the system 500-1 to which there are at least communicatively coupled the control device of the system 500-1 and the aircraft apparatuses 100 substantially allows the control device of the system 500-1 and the aircraft apparatuses 100 to exchange system and/or operational data between one another, which data they use to implement the functions or functional capabilities thereof described herein. Such communication network may be, for example, any suitable wireless communication link known in the prior art, such as a WiFi wireless technology-based communication link, 2G, 3G, 4G or 5G wireless technology-based communication link, LTE technology-based communication link and/or the like.

In one of the embodiments of the present invention, the system 500-1 may comprise two or more wireless networks configured each analogously to the above communication network of the system 500-1 for performance of communication between the control device of the system 500-1, aircraft apparatuses 100 and/or any other functional devices which may further be part of the system 500-1 and which are described herein, in the real-time mode or in real time.

The housing 110 in at least one or each of the aircraft apparatuses 100 being part of the system 500-1 shown in Fig. 1 may have any suitable shape and overall dimensions characteristic of any aircraft apparatus known in the prior art and may be made of any suitable material known in the prior art and typically used for the manufacture of the housings of aircraft apparatuses, in particular of a composite material (for example, composite sandwich panels), metal (for example, connected to one another metal channel beams), aluminum (for example, connected to one another aluminum carrying beams), plastic (for example, a solid piece of plastic), titanium material (for example, titanium sandwich panels), any other suitable material known in the prior art, including using any suitable combination of the above materials (for example, of a sandwich panel or titanium panels with an aluminum honeycomb core) and/or the like. Thus, the type, shape, overall dimensions, and material of the housing 110 in each of the aircraft apparatuses being part of the system 500-1 are not specifically limited in any way within the scope of the present invention. In particular, the housing 110 in at least one or each of the aircraft apparatuses 100 being part of the system 500-1 may have a shape which is generally identical to the housing of a helicopter or drone; one skilled in the art would however appreciate that the housing 110 may have any other shape similar to any other aircraft or air transport vehicle, for example, to an airplane, shuttle, hang glider, paraglider or any other analogous aircraft apparatus known in the prior art.

In one embodiment of the present invention, the housing 110 in at least one or each of the aircraft apparatuses 100 being part of the system 500-1 shown in Fig. 1 may be configured in the form of a regular or irregular three-dimensional geometric figure, for example, in the form of a cube, cuboid, ball or sphere, square pyramid, tetrahedron (triangular pyramid), hexagonal pyramid, triangular prism, hexahedron (octahedron), pentagonal prism, hexagonal prism, dodecahedron, ellipsoid, 20-sided polyhedron (icosahedron), cone, cylinder or any other known three-dimensional figure.

In another embodiment of the present invention, at least a portion of the housing 110 in at least one or each of the aircraft apparatuses 100 being part of the system 500-1 shown in Fig. 1 may have a sectional (longitudinal- or cross-sectional) shape of a triangle, square, circle, oval, rectangle, parallelogram, rhombus, trapezium, quadrilateral, pentagon, hexagon, heptagon, octagon, nonagon, decagon, icosagon or any other known regular or irregular geometric figure.

In yet another embodiment of the present invention, the housing 110 in at least one or each of the aircraft apparatuses 100 being part of the system 500-1 shown in Fig. 1 may be a skeleton, framework or bearing frame on which there may be attached panelling or which may be at least partially surrounded by a shell.

In other embodiments of the present invention, the housing 110 in at least one or each of the aircraft apparatuses 100 being part of the system 500-1 shown in Fig. 1 may be further provided with fins, wings and/or tail rotor, etc. to improve the aerodynamic characteristics of the aircraft apparatus 100 and improve the carrying capacity thereof by generating additional lift when in flight.

In some other embodiments of the present invention, the housing 110 in at least one or each of the aircraft apparatuses 100 being part of the system 500-1 shown in Fig. 1 may be further provided with at least one aircraft engine (not shown), and preferably two aircraft engines, for enabling the aircraft apparatus 100 to move through the air in the event of an emergency (for example, in the event of failure or breakdown of air propulsion units 120) or for increasing the speed of movement through the air of the aircraft apparatus 100 by enabling the operation of the aircraft engines further to or instead of the propulsion units 120 used to move the aircraft apparatus 100 through the air in a standard situation). It should be noted that each such aircraft engine may be, for example, a propeller engine, jet engine, combined aircraft engine or any other suitable aircraft engine known in the prior art. It should also be noted that in the case of using two aircraft engines in the aircraft apparatus 100 the designs and/or types thereof may coincide or be different from one another. Each such aircraft engine with which the housing 110 may be further provided may operate under control of the control module of the aircraft apparatus 100 which may present control commands to the control driver of the aircraft engine of the aircraft apparatus 100 so as to enable starting, stopping or altering of the operating mode of said aircraft engine (for example, altering of the operating parameters of the aircraft engine of the aircraft apparatus 100).

In some other embodiments of the present invention, the housing 110 in at least one or each of the aircraft apparatuses 100 being part of the system 500-1 shown in Fig. 1 may be further provided with at least one additional lift rotor (not shown) or rotor propulsion unit of any suitable type known in the prior art for enabling the aircraft apparatus 100 to move through the air (including in an emergency, for example, in the event of damage, failure and/or complete discharge of the aircraft apparatus 100) or for increasing the speed of movement through the air of the aircraft apparatus 100 by enabling the operation of the lift rotor or rotor propulsion unit further to or instead of the propulsion units 120 used to move the aircraft apparatus 100 through the air in a standard situation. Furthermore, in this embodiment of the present invention, the housing 110 in at least one or each of the aircraft apparatuses 100 being part of the system 500-1 shown in Fig. 1 may further comprise a power plant (not shown) which may be defined, for example, by one or two turboshaft engines and which may be operably coupled to each of the lift rotors of the aircraft apparatus 100 so as to enable supply of power thereto for actuating same. Each such power plant of the aircraft apparatus 100, which power plant is operably coupled to the lift rotors of the aircraft apparatus 100 which lift rotors may be further provided to the housing 110 in a manner to transfer driving force thereto, may operate under control of the control module of the aircraft apparatus 100 which control module may present control commands to the control driver of the power plant (not shown) of the aircraft apparatus 100 so as to enable starting, stopping or altering of the operating mode of said power plant (for example, altering of the operating parameters of the power plant of the aircraft apparatus 100) for altering the state of those lift rotors of the aircraft apparatus 100.

In other embodiments of the present invention, the housing 110 in at least one or each of the aircraft apparatuses 100 being part of the system 500-1 shown in Fig. 1 may be further provided with a landing gear (not shown) which may be a system of extendable supports or at least one rigidly secured support which may be provided to the housing 110 and which may be necessary for at least takeoff of the aircraft apparatus 100, landing of the aircraft apparatus 100 and/or accommodation of the aircraft apparatus in one of the parking stations for replenishing the range thereof. In particular, the landing gear of the aircraft apparatus 100 may be of a skid type, a wheel type, a tracked type, a float type or any other type known in the prior art. The type, shape, overall dimensions and material of the landing gear of the aircraft apparatus 100 are not specifically limited in any manner within the scope of the present invention. It should be noted that in this embodiment of the present invention, the landing gear of the aircraft apparatus 100 may at least provide for (i) bearing of static loading from its own weight while the aircraft apparatus 100 is in a parked state; and (ii) shock absorption of dynamic loads arising while landing of the aircraft apparatus 100 (including emergency landing) on the surface of the ground, water or that of another physical object at least partially present in the air space, on the ground space, in the water space and/or in underwater space, depending on a particular embodiment of the present invention.

In some other embodiments of the present invention, the housing 110 in at least one or each of the aircraft apparatuses 100 being part of the system 500-1 shown in Fig. 1 may as well not be provided with any type of landing gear. In one of the variations of such embodiment of the present invention, the bottom of the housing 110 in at least one or each of the aircraft apparatuses 100 being part of the system 500-1 shown in Fig. 1 may be provided with a shock-absorbing pad (not shown) made of an elastic material (for example, rubber) which shock-absorbing pad may be attached to said bottom from the external side thereof or with any other suitable support known in the prior art and used in the prior art for known aircraft apparatuses (in particular, for drones or other unmanned aerial vehicles).

Furthermore, as shown in Fig. 1, the housing 110 in each of the aircraft apparatuses 100 being part of the system 500-1 is provided with two docking modules 130 configured each to enable detachable connection of the housing 110 to the housing of other aircraft apparatus corresponding to or different from the aircraft apparatus 100 while docking of said aircraft apparatuses to one another, wherein the docking modules 130 are mounted at opposite ends, from the external side of said housing 110. In some embodiments of the present invention, the housing 110 of at least one or each of the aircraft apparatuses 100 being part of the system 500-1 shown in Fig. 1 may be provided with one or more docking modules 130, in particular with one, two, three, four, five, six, seven, eight, nine, ten or more docking modules 130. In other embodiments of the present invention, at least one of the docking modules 130 provided to the housing 110 in at least one or each of the aircraft apparatuses 100 being part of the system 500-1 shown in Fig. 1 may be mounted in the interior of said housing 110. In other embodiments of the present invention, at least one first docking module of the docking modules 130 provided to the housing 110 in at least one or each of the aircraft apparatuses 100 being part of the system 500-1 shown in Fig. 1 may be mounted in the interior of said housing 110, and at least one second docking module of said docking modules 130 may be mounted in the interior of said housing 110.

It should be noted that the docking modules 130 provided to the housing 110 in at least one or each of the aircraft apparatuses 100 being part of the system 500-1 shown in Fig. 1 allow to detachably connect to said housing 110 one or more additional housings 110 related to other aircraft apparatuses of the system 500-1, wherein said additional housings 110 may be detachably connected to said housing 110 from one and the same side or from distinct sides, and for providing for detachable connection of each such additional housing 110 there may be used one or more pairs of docking modules 130 (i.e., one docking module 130 from the side of the additional housing 110 to be connected and one docking module 130 from the side of the housing 110 to which said additional housing 110 is being detachably connected).

Furthermore, at least one or each of the docking modules 130 in at least one or each of the aircraft apparatuses 100 being part of the system 500-1 may be configured to enable detachable connection of the housing 110 to the housing 310 of the below-described self-propelled module 300 and/or to the housing 210 of the below-described bearing load 200. Thus, at least one of the docking modules 130 provided to the housing 110 in each of the aircraft apparatuses 100 being part of the system 500-1 may enter into detachable interaction with at least one of the identical docking modules which may be provided to the housing of other aircraft apparatus so as to provide for detachable connection of the housings thereof to one another and, therefore, to provide for detachable docking of said two aircraft apparatuses to one another to form a cluster aircraft apparatus.

In one of the embodiments of the present invention, the docking module 130 in at least one or each of the aircraft apparatuses 100 being part of the system 500-1 shown in Fig. 1 may be configured to interact with at least one of the fastening or connecting elements (for example, with a cam, hook, staple, eye, clamp, latch, electromechanical grip, magnetic grip and the like) which may be provided to the housing of other aircraft apparatus corresponding to or distinct from the aircraft apparatus 100 in a manner to provide for detachable connection of the housings of those aircraft apparatuses to one another for detachable docking of said two aircraft apparatuses to one another which docking results in a cluster aircraft apparatus.

Non-limiting examples of the docking modules 130 for providing for detachable fastening or connection of the housings 110 of the aircraft apparatuses to one another are the following fastening or connecting elements which must be provided to the docking modules 130 coming into interaction with one another at the corresponding docking spots of the housings 110 of the aircraft apparatuses: various suitable mechanical connecting or fastening means (brackets, grips, fasteners, mounting slots, cams, hooks, latches and the like), electromechanical means under control of the control module of the aircraft apparatus 100 (for example, electromechanical docking means for docking by a mating element to be docked, electromechanical means of gripping for gripping a mating element to be gripped or the like), electromagnetic means under control of the control module of the aircraft apparatus 100, magnetic means, vacuum grips under control of the control module of the aircraft apparatus 100 and/or the like. It should be noted that if the docking module 130 in one of the aircraft apparatuses 100 to be docked to one another is provided with any fastening or connecting element from the above mechanical connecting or fastening means, electromechanical means, electromagnetic means, magnetic means and vacuum grips, then the docking module 130 in the other one of said aircraft apparatuses 100 to be docked to one another must be provided with mating fastening or connecting means of a suitable type enabling formation of detachable connection between said docking modules 130.

In one of the embodiments of the present invention, the docking module 130 in at least one or each of the aircraft apparatuses 100 being part of the system 500-1 shown in Fig. 1 may be a rigid fastening or connecting structure which may be configured to detachably interact with the docking modules 130 of one or more other aircraft apparatuses 100 and which may be (i) secured on the housing 110 of the aircraft apparatus from the external side thereof or (ii) partially embedded or integrated into the body of the housing 110 of the aircraft apparatus in a manner to provide for access thereto from the external side of said housing 110.

In another embodiment of the present invention, the docking module 130 in at least one or each of the aircraft apparatuses 100 being part of the system 500-1 shown in Fig. 1 may be a movable fastening or connecting structure which may be under control of the control module of said aircraft apparatus 100 and which may be configured to detachably interact with the docking modules 130 of one or more other aircraft apparatuses 100, wherein said movable structure may be secured on the housing 110 of the aircraft apparatus from the external side thereof and may be configured to at least partially deploy, unfold or expand under control of the control module of said aircraft apparatus 100 so as to enable return thereof to the initial state under control of the control module of said aircraft apparatus 100. Alternatively, the movable fastening or connecting structure in the form of which the docking module 130 may be implemented may be fully mounted or secured in the housing 110 of the aircraft apparatus (i.e., in the internal space of the housing 110 of the aircraft apparatus) and may be configured to at least partially extend from said housing 110 and/or to deploy beyond the limits of said housing 110 under control of the control module of the aircraft apparatus 100 so as to enable return thereof to the initial state under control of the control module of the aircraft apparatus 100. In yet another alternative, the movable fastening or connecting structure in the form of which the docking module 130 may be implemented may be partially embedded or integrated into the body of the housing 110 of the aircraft apparatus and may be configured to at least partially deploy, unfold, expand or extend under control of the control module of the aircraft apparatus 100 so as to enable return thereof to the initial state under control of the control module of the aircraft apparatus 100. In yet another embodiment of the present invention, the docking module 130 in at least one or each of the aircraft apparatuses 100 being part of the system 500-1 shown in Fig. 1 may be an unmovable fastening or connecting structure which may be secured on the housing 110 of the aircraft apparatus from the external side thereof, secured in the interior of the housing 110 or partially embedded/integrated into the body of the housing 110, wherein access to free docking modules 130 for detachable interaction therewith of the docking modules 130 of other aircraft apparatuses 100 in a manner to provide for detachable connection of the housings 110 of such aircraft apparatuses 100 to be docked to one another may be provided under control of the control module of the aircraft apparatus 100, the housing 110 of which is provided with said free docking modules 130 by way of, for example, opening a barrier structure or covering structure which prevents the possibility of access to at least one of the free docking modules 130 from the external side of the housing 110 and which may be, for example, (i) a hatch, door or flaps provided in the body of the housing 110 or (ii) a hatch, door or flaps provided in a distinct protective housing surrounding or enclosing said at least one free docking module 130 or (iii) a combination of the above (i.e. combination of (i) and (ii)). In another embodiment of the present invention, the possibility of actuation of the docking module 130 in at least one or each of the aircraft apparatuses 100 being part of the system 500-1 shown in Fig. 1 so as to enable deployment, expansion, unfolding or extension thereof may be provided under control of the control module of the aircraft apparatus 100 by way of, for example, opening a barrier structure or covering structure which prevents the possibility of movement of the docking module 130 away from the housing 110 and which may be, for example, (i) a hatch, door or flaps provided in the body of the housing 110 or (ii) a hatch, door or flaps provided in a distinct protective housing surrounding or enclosing the docking module 130 or (iii) an element or plate secured on the housing 110 and preventing possibility of performing a deployment, expansion, unfolding or extension operation of the docking module 130 or (iv) a combination of the above (i.e., a combination of (i), (ii) and (iii)). In some other embodiment of the present invention, the docking module 130 in at least one or each of the aircraft apparatuses 100 being part of the system 500-1 shown in Fig. 1 may be an unmovable fastening or connecting structure which may be rigidly secured on the housing 110 of the aircraft apparatus from the external side thereof or partially embedded/integrated into the body of the housing 110 and which may be closed by a barrier structure or covering structure (for example, an external cover, casing or protective housing) preventing access to said unmovable structure from the external side of the housing 110 for interaction therewith of the docking modules 130 of one or more other aircraft apparatuses 100 and being under control of the control module of the aircraft apparatus 100 which is provided with said unmovable fastening or connecting structure, wherein access to such docking module 130 may be provided by way of, for example, opening, opening-out, opening-wide, displacing, sliding or removing said barrier structure or covering structure under control of said control module of the aircraft apparatus 100 so as to enable subsequent return thereof to the original position thereof under control of the control module of the aircraft apparatus 100 (as such need arises).

Thus, thanks to the presence of the docking module 130, to the housing 110 of at least one of the aircraft apparatuses 100 being part of the system 500-1 shown in Fig. 1 there may be detachably connected (i.e., connected with the possibility to be detached) the aircraft apparatuses 100 in a quantity required to provide for sufficient lift to move a payload through the air.

In one of the embodiments of the present invention, at least one of the docking modules 130 provided to the housing 110 in one of the aircraft apparatuses 100 being part of the system 500-1 may be brought into detachable interaction with one or more docking modules 130 provided to the housing 110 in other aircraft apparatus of said aircraft apparatuses 100, in particular with one docking module 130, two docking modules 130, three docking modules 130, four docking modules 130, five docking modules 130 and more docking modules 130 in said other aircraft apparatus 100. Thus, in this embodiment of the present invention, a case is possible where, in order to detachably dock two aircraft apparatuses 100 to one another, there may be necessary to bring only one docking module 130 provided to the housing 110 in the first aircraft apparatus 100 into detachable interaction with only one docking module 130 provided to the housing 110 in the second aircraft apparatus 100. Furthermore, in this embodiment of the present invention, another case is possible where, in order to detachably dock two aircraft apparatuses 100 to one another, there may be necessary to bring only one docking module 130 provided to the housing 110 in the first aircraft apparatus 100 into detachable interaction with two, three, four, five or more docking modules 130 provided to the housing 110 in the second aircraft apparatus 100. Furthermore, in this embodiment of the present invention, yet another case is possible where, in order to detachably dock two aircraft apparatuses 100 to one another, there may be necessary to bring two docking modules 130 provided to the housing 110 in the first aircraft apparatus 100 into detachable interaction with two, three, four, five or more docking modules 130 provided to the housing 110 in the second aircraft apparatus 100.

In another embodiment of the present invention, the docking modules 130 which may be provided to the housing 110 in any one of the aircraft apparatuses 100 being part of the system 500-1 shown in Fig. 1 may be provided on one and the same external side of said housing 110 or at least partially on distinct external sides of said housing 110.

In yet another embodiment of the present invention, to at least one or each of the docking modules 130 which may be provided to the housing 110 in at least one or each of the aircraft apparatuses 100 being part of the system 500-1 shown in Fig. 1 there may docked one aircraft apparatus 100, at least two aircraft apparatuses 100, one cluster aircraft apparatus, at least two cluster aircraft apparatuses or any possible combination thereof.

In some embodiments of the present invention, the cluster aircraft apparatus formed as a result of detachable connection to one another of the docking modules 130 relating to two or more aircraft apparatuses 100 to be docked to one another is a cluster or assemblable structure having any shape and geometric dimensions suitable for free movement of such structure through the air so as to enable movement through the air of a payload which may be disposed or mounted in at least a portion of the housings 110 related to the aircraft apparatuses 100 being part of said cluster aircraft apparatus and suitable for enabling docking of at least one additional (other) cluster aircraft apparatus and/or at least one additional aircraft apparatus 100 to said cluster aircraft apparatus by way of bringing the docking modules 130 thereof into detachable interaction.

It should be noted that the cluster aircraft apparatus shown in Fig. 1 and formed as a result of detachable connection of the housings 110 of two aircraft apparatuses 100 may respond as an integral whole to control commands and/or control instructions received from the control device of the system 500-1, i.e. the operation of the aircraft apparatuses 100 as part of such cluster aircraft apparatus may be synchronized (for example, using the control device of the system 500-1 or the control module of one of the aircraft apparatuses 100 forming such cluster aircraft apparatus). Furthermore, the aircraft apparatuses 100 forming such cluster aircraft apparatus may be electrically connected to one another to form a single power supply circuit and a cluster power source (for example, the cluster power source may be formed from batteries of docked to one another aircraft apparatuses 100) supplying power to or powering all said aircraft apparatuses 100 substantially simultaneously, thus making it possible to consider the range not of each such aircraft apparatus 100 individually but rather the range of a cluster aircraft apparatus as a whole. It should also be noted that the process of mutually docking the aircraft apparatuses 100 may take place directly in the air, wherein said process of docking may be started or may be launched in response to control commands presented by the control device of the system 500-1 to the aircraft apparatuses 100 to be docked to one another to form a cluster aircraft apparatus.

The quantity of the aircraft apparatuses 100 docked to one another to form a cluster aircraft apparatus may be from two or more units, wherein, in some embodiments of the present invention, the quantity of the aircraft apparatuses 100 docked to one another may be multiple units, multiple tens of units or even multiple hundreds of units. To provide for a required load capacity, there may be used multiple aircraft apparatuses 100 with the same load capacity or distinct load capacity; however, the total load capacity provided by those aircraft apparatuses 100 must correspond to said required load capacity, wherein the aircraft apparatuses 100 to be docked to one another may coincide as well as differ in terms of design, for example, in terms of overall dimensions and/or power and/or flying characteristics and/or type of a propulsion unit.

Furthermore, the housing 110 in each of the two aircraft apparatuses 100 being part of the system 500-1 shown in Fig. 1 is further provided with one rectilinear guide 140 which is configured to mount or suspend thereon a payload, including the below-described payload 200, and to rectilinearly move said mounted or suspended payload along said guide 140. It should be noted that the shape, length (spatial extent) or other geometric dimensions, as well as the sectional shape and material of manufacture of the guides 140 in any one of the aircraft apparatuses 100 being part of the system 500-1 shown in Fig. 1 are not specifically limited in any way, wherein the shape and/or geometric dimensions (for example, the length or spatial extent of the guide 140) of the guides 140 related to distinct aircraft apparatuses 100 being part of the system 500-1 may coincide with one another or may differ from one another.

According to one of the embodiments of the present invention, the housing 110 in at least one or each of the aircraft apparatuses 100 being part of the system 500-1 may be provided with one or more guides 140 (for example, two, three, four, five, six, seven, eight, nine, ten, and more guides 140) each of which may be configured to mount or suspend thereon a payload, including the below-described payload 200, and to move said mounted or suspended payload along said guide 140. In one of the variations of this embodiment of the present invention, the housing 110 in at least one or each of the aircraft apparatuses 100 being part of the system 500-1 may be provided with two or more guides 140, wherein at least some or all of said guides 140 may be disposed parallel to one another, perpendicular to one another and/or at a predetermined angle with respect to one another. In yet another variation of this embodiment of the present invention, the housing 110 in at least one or each of the aircraft apparatuses 100 being part of the system 500-1 may be provided with two or more guides 140, at least some of which or all of which may be connected to one another to define the path of movement of a payload in relation to said housing 110 of the aircraft apparatus. In another variation of this embodiment of the present invention, the housing 110 in at least one or each of the aircraft apparatuses 100 being part of the system 500-1 may be provided with two or more guides 140, wherein at least one of said guides 140 may be used to mount or suspend thereon a first payload so as to enable movement of the first payload along said at least one guide 140 and at least one other of said guides 140 may be used to mount or suspend thereon a second payload so as to enable movement of the second payload along said at least one other guide 140.

According to yet another embodiment of the present invention, all guides 140 provided to the housing 110 in at least one or each of the aircraft apparatuses 100 being part of the system 500-1 may be mounted or secured from the external side of said housing 110. According to another embodiment of the present invention, all guides 140 provided to the housing 110 in at least one or each of the aircraft apparatuses 100 being part of the system 500-1 may be mounted or secured in the interior of said housing 110 or in the internal space of said housing 110. According to another embodiment of the present invention, one portion of the guides 140 provided to the housing 110 in at least one or each of the aircraft apparatuses 100 being part of the system 500-1 may be partially mounted or secured from the external side of said housing 110 and the other portion of said guides 140 may be partially mounted or secured in the interior of said housing 110 or in the internal space of said housing 110.

According to some embodiments of the present invention, at least one or each of the guides 140 which may be provided to the housing 110 in at least one or each of the aircraft apparatuses 100 being part of the system 500-1 shown in Fig. 1 may be at least partially configured bendable or flexible, thus allowing to at least partially compensate for the loads exerted on said guide 140 by the payload mounted or suspended onto that guide 140 and moved along said guide 140 to position same in a proper spot relative to the housing 110 of the aircraft apparatus.

According to some other embodiments of the present invention, at least one or each of the guides 140 which may be provided to the housing 110 in at least one or each of the aircraft apparatuses 100 being part of the system 500-1 shown in Fig. 1 may be configured rectilinear or curvilinear, thus allowing to define not only a rectilinear path (rectilinear trajectory) of movement of a payload along said at least one guide 140 with respect to said housing 110 of the aircraft apparatus but also to define a curvilinear path (curvilinear trajectory) of movement of a payload along said guide 140 with respect to said housing 110 of the aircraft apparatus, and also to define a combined path (combined trajectory) of movement of a payload along said guide 140 with respect to said housing 110 of the aircraft apparatus which path has at least one rectilinear section of the path and at least one curvilinear section of the path.

According to some other embodiments of the present invention, at least one or each of the guides 140 which may be provided to the housing 110 in at least one or each of the aircraft apparatuses 100 being part of the system 500-1 shown in Fig. 1 may be configured T-shaped, Z-shaped, X-shaped, Y-shaped, inverted-U-shaped, E-shaped, U-shaped, N-shaped, L-shaped, F-shaped, O-shaped, H -shaped, V-shaped, inverted-L-shaped, C-shaped or W-shaped. It should be noted that in this embodiment of the present invention, at least one or each of the guides 140 which may be provided to the housing 110 in at least one or each of the aircraft apparatuses 100 being part of the system 500-1 shown in Fig. 1 may also have any other shape corresponding to any known symbol, any known letter, any known geometric shape, any known numeral or the like.

According to some other embodiments of the present invention, at least one or each of the guides 140 which may be provided to the housing 110 in at least one or each of the aircraft apparatuses 100 being part of the system 500-1 shown in Fig. 1 may be configured to enable movement of a payload along at least one of the three coordinate axes (in particular, along any one of the three coordinate axes, along any two of the three coordinate axes or along all three coordinate axes) or may be configured to move with respect to said housing 110 of the aircraft apparatus so as to enable movement of a payload mounted or suspended on the guide 140, relative to that housing 110 of the aircraft apparatus.

According to other embodiments of the present invention, the housing 110 in at least one or each of the aircraft apparatuses 100 being part of the system 500-1 shown in Fig. 1 may be provided with two or more parallel guides 140 configured to mount or suspend thereon a payload, including the below-described payload 200, and to substantially rectilinearly move therealong said mounted or suspended payload.

The guides 140 in the aircraft apparatuses 100 being part of the system 500-1 shown in Fig. 1 are configured to detachably connect to one another so as to enable formation of a rectilinear cluster guide 145. As shown in Fig. 1, the cluster guide in a cluster aircraft apparatus comprises detachably connected to one another two guides 140 each of which is mounted or secured on the external side of the housing 110 of the corresponding one of the two aircraft apparatuses 100. Thus, the cluster guide 145 may be formed as a result of docking two or more aircraft apparatuses 110 to one another to form a cluster aircraft apparatus. In other words, the cluster guide 145 is substantially a guide of a cluster aircraft apparatus and allows a payload, including the below-described payload 200, to be moved between the housings 110 of the aircraft apparatuses 100 forming said cluster aircraft apparatus, in particular to a vacant spot in at least one of said housings 110.

In one of the embodiments of the present invention, the cluster guide 145 may be formed from two or more distinct guides 140 each of which relates to one of the detachably docked to one another aircraft apparatuses 100, in particular it can be formed from two, three, four, five, six, seven, eight, nine, ten or more such distinct guides 140, wherein the shape, length (spatial extent) or other geometric dimensions, material of manufacture of the cluster guide 145 and/or the like are not specifically limited in any way. It should be noted that the cluster guide 145 formed as a result of detachable connection of distinct guides 140 may have a rectilinear shape or a curvilinear shape.

According to other embodiments of the present invention, at least one or each of the guides 140 which may be provided to the housing 110 in at least one or each of the aircraft apparatuses 100 being part of the system 500-1 shown in Fig. 1 may comprise two or more portions, at least one of which is configured movable, wherein said housing 110 of the aircraft apparatus may further comprise a drive device being under control of the control module of said aircraft apparatus 100 and operably coupled to said at least one movable portion of the guide 140 so as to enable movement of said at least one movable portion of the guide 140 with respect to the remaining portions of the guide 140 for altering the shape of said guide 140.

It should also be noted that the control device of the system 500-1 or the control module of one of the docked to one another aircraft apparatuses 100 used to form a cluster aircraft apparatus may further enable undocking of at least one of said docked to one another aircraft apparatuses 100 so as to enable formation of a cluster guide from the guides of the remaining docked to one another aircraft apparatuses (in particular, so as to alter the total spatial extent of the guide towards reduction and/or to alter the shape of the cluster guide) and/or enable docking of yet another additional aircraft apparatus 100 to one of said docked to one another aircraft apparatuses 100 so as to enable formation of a cluster guide from the guides of said docked to one another aircraft apparatuses (in particular, so as to alter the total spatial extent of the guide towards increase and/or to alter the shape of the cluster guide). Furthermore, the process of docking yet another additional aircraft apparatus 100 to one of said docked to one another aircraft apparatuses 100 so as to enable formation of a cluster guide from the guides of said docked to one another aircraft apparatuses 100 may be controlled also by the control module of said additional aircraft apparatus 100 to be docked.

In one of the embodiments of the present invention, at least one or each of the guides 140 which may be provided to the housing 110 in at least one or each of the aircraft apparatuses 100 being part of the system 500-1 shown in Fig. 1 may be mounted on a rotary device (not shown) mounted in said housing 110 of the aircraft apparatus so as to enable rotation of said guide 140 by a predetermined angle of rotation, thus allowing to alter the path or trajectory of movement of a payload along that guide 140 and/or allowing to connect said guide 140 mounted on the rotary device to at least one other guide being part of said guides 140 provided to said housing 110.

In another embodiment of the present invention, at least one or each of the guides 140 which may be provided to the housing 110 in at least one or each of the aircraft apparatuses 100 being part of the system 500-1 shown in Fig. 1 may be rotatably mounted on said housing 110 of the aircraft apparatus, wherein said housing 110 of the aircraft apparatus may further comprise a drive device (not shown) being under control of the control module of said aircraft apparatus 100 and operably coupled to said guide 140 or configured to interact with said guide 140 so as to enable rotation thereof by a predetermined angle of rotation, thus also allowing to alter the path or trajectory of movement of a payload along that guide 140 and/or allowing to connect said rotary guide 140 to at least one other guide being part of said guides 140 provided to said housing 110.

In yet another embodiment of the present invention, at least one or each of the guides 140 which may be provided to the housing 110 in at least one or each of the aircraft apparatuses 100 being part of the system 500-1 shown in Fig. 1 may be configured telescopic, wherein said housing 110 of the aircraft apparatus may further comprise a drive device (not shown) being under control of the control module of said aircraft apparatus 100 and operably coupled to said guide 140 or configured to interact with said guide 140 so as to enable at least partial extension thereof. It should be noted that in this embodiment of the present invention, the control module of the aircraft apparatus 100 may be further configured to enable at least partial or full retraction of the guide 140 which was previously fully or partially extended under control of said control module of the aircraft apparatus 100 so as to provide for return of that guide 140 to a partially retracted state or a fully retracted state. It should also be noted that in this embodiment of the present invention, in order to extend or retract the guide 140, the control module of the aircraft apparatus 100 may be further configured to present control commands to the drive device (not shown) operably coupled to said guide 140 for actuating same in a mode of operation enabling at least partial extension of the at least partially or completely extended guide 140 or at least partial or full retraction of the at least partially or completely extended guide 140, respectively.

In another embodiment of the present invention, the housing 110 in at least one or each of the aircraft apparatuses 100 being part of the system 500-1 shown in Fig. 1 may be configured to tilt or rotate by a predetermined angle with respect to at least one of the guides 140 with which said housing 110 of the aircraft apparatus may be provided.

In some other embodiment of the present invention, the housing 110 in at least one or each of the aircraft apparatuses 100 being part of the system 500-1 shown in Fig. 1 may be configured to alter the shape thereof and/or the dimensions thereof. In one of the variations of this embodiment of the present invention, the housing 110 in at least one or each of the aircraft apparatuses 100 being part of the system 500-1 shown in Fig. 1 may be a collapsible mesh (not shown) configured to surround the aircraft apparatus 100 while being deployed, wherein the aircraft apparatus 100 may further comprise a drive device (not shown) being under control of the control module of the aircraft apparatus 100 which control module, in turn, may receive control commands from the control device of the system 500-1 and operably coupled to said mesh of the aircraft apparatus 100 so as to enable unfolding or deployment thereof in response to control commands of the control device of the system 500-1. It should be noted that in this variation of the embodiment of the present invention, the mesh of the aircraft apparatus 100 may be present in two states: a folded or collapsed state which corresponds to the initial state of the mesh of the aircraft apparatus 100 and in which the mesh of the aircraft apparatus 100 may be present while movement of the aircraft apparatus 100 through the air and an unfolded state in which the mesh of the aircraft apparatus 100 may be present while docking of the aircraft apparatus 100 to at least one other aircraft apparatus to form a cluster aircraft apparatus, wherein the mesh of the aircraft apparatus 100 in the collapsed state has its minimum size and the mesh of the aircraft apparatus 100 in the unfolded state has its maximum size. In another variation of this embodiment of the present invention, the housing 110 in at least one or each of the aircraft apparatuses 100 being part of the system 500-1 shown in Fig. 1 may be formed from distinct functional portions (not shown) and may further comprise a drive device (not shown) operably coupled to said functional portions so as to enable expansion or deployment of those functional portions for altering the shape and/or dimensions of said housing 110 of the aircraft apparatus. In yet another variation of this embodiment of the present invention, the housing 110 in at least one or each of the aircraft apparatuses 100 being part of the system 500-1 shown in Fig. 1 may be formed from distinct controllable functional portions (not shown) and the control module of the aircraft apparatus 100 may be further communicatively coupled to said controllable functional portions so as to enable displacement (altering of spatial locations) of said functional portions with respect to one another in response to control commands of said control module which commands may be generated by the control module of the aircraft apparatus 100 in response to corresponding control commands of the control device of the system 500-1 for altering the shape and/or dimensions of said housing 110 of the aircraft apparatus. In another variation of this embodiment of the present invention, the housing 110 in at least one or each of the aircraft apparatuses 100 being part of the system 500-1 shown in Fig. 1 may be formed from distinct controllable functional portions (not shown), wherein the control module of the aircraft apparatus 100 may be communicatively coupled to said controllable functional portions so as to enable expansion or deployment of those functional portions in response to control commands of said control module which commands may be generated by the control module of the aircraft apparatus 100 in response to corresponding control commands of the control device of the system 500-1 for altering the shape and/or dimensions of said housing 110 of the aircraft apparatus.

In some other embodiment of the present invention, the housing 110 in at least one or each of the aircraft apparatuses 100 being part of the system 500-1 shown in Fig. 1 may be further provided with one or more controllable working members (not shown) configured to interact with a payload when actuated so as to enable mounting or suspension of said payload on at least one of the guides 140 of said housing 110 and to enable movement of said payload along said at least one guide 140 while actuation of said working members and may further comprise a drive device (not shown) being under control of the control module of said aircraft apparatus 100 and operably coupled to said controllable working members so as to enable actuation of at least one of same in response to control commands of the control module of the aircraft apparatus 100.

In other embodiments of the present invention, the housing 110 in at least one or each of the aircraft apparatuses 100 being part of the system 500-1 shown in Fig. 1 may be provided with two distinct guides and a movable connecting guide each of which is configured to mount or suspend thereon a payload and to move therealong said mounted or suspended payload and may further comprise a drive device (not shown) being under control of the control module of said aircraft apparatus 100 and operably coupled to said movable connecting guide so as to enable same to move for connecting said guides to one another.

In other embodiments of the present invention, the housing 110 in at least one or each of the aircraft apparatuses 100 being part of the system 500-1 shown in Fig. 1 may be further provided with a payload movement module (not shown) being under control of the control module of said aircraft apparatus 100 and configured to interact with a payload mounted or suspended on at least one of the guides 140 provided to said housing 110 of the aircraft apparatus so as to enable movement of said payload along said at least one guide 140. In one of the variations of the present invention, the payload movement module (not shown) can be a robotic manipulator or grip configured to grip and move a payload along at least one of the guides 140 provided to the housing 110 of the aircraft apparatus. In another variation of the present invention, the payload movement module (not shown) can be a pusher configured to momentarily exert force upon a payload while actuation of said pusher for moving that payload along at least one of the guides provided to the housing 110 of the aircraft apparatus, wherein said housing 110 of the aircraft apparatus may further comprise a drive device (not shown) being under control of the control module of said aircraft apparatus 100 and operably coupled to said pusher in a manner to actuate same. In yet another variation of this embodiment of the present invention, the payload movement module (not shown) may be movably mounted on at least one additional guide (not shown) distinct from the guides 140 for moving a payload along at least one guide 140. In another variation of this embodiment of the present invention, the payload movement module (not shown) may be further configured to demount a payload from at least one guide 140 provided to the housing 110 of the aircraft apparatus.

In some other embodiments of the present invention, the housing 110 in at least one or each of the aircraft apparatuses 100 being part of the system 500-1 shown in Fig. 1 may be further provided with one or more weight sensors (not shown) each of which is configured to measure the weight of a payload at one of the spots of said housing 110 of the aircraft apparatus for payload accommodation and which are configured to present readings thereof to the control module of said aircraft apparatus 100, wherein the control module of the aircraft apparatus 100 may enable presenting of control instructions to the payload movement module which may be further provided to said housing 110 of the aircraft apparatus to move a payload along at least one guide 140 according to said readings of the weight sensor.

In some other embodiments of the present invention, at least one of the guides 140 provided to the housing 110 in at least one or each of the aircraft apparatuses 100 being part of the system 500-1 shown in Fig. 1 may be further configured to demount a payload mounted on said at least one guide 140, thus allowing to remove said payload from said at least one guide 140 as such need arises, for example, in the event of damage to at least a portion of said at least one guide 140 or when it is necessary to remount or resuspend said payload onto other guide 140. In one of the variations of this embodiment of the present invention, at least one of the guides 140 provided to the housing 110 in at least one or each of the aircraft apparatuses 100 being part of the system 500-1 shown in Fig. 1 may have one or more payload demounting spots, thus also allowing to remove said payload from said at least one guide 140 as such need arises, for example, in the event of damage to at least a portion of said at least one guide 140 or when it is necessary to remount or resuspend said payload onto other guide 140.

In various embodiments of the present invention, at least one of the docking modules 130 provided to the housing 110 in at least one or each of the aircraft apparatuses 100 being part of the system 500-1 shown in Fig. 1 may be movably mounted on at least one of the guides 140 provided with said housing 110 of the aircraft apparatus, thus allowing to use the docking modules 130 not only to enable mutual docking of the housings 110 of the aircraft apparatuses but also for movable attachment of a payload on said guide 140, thus, in turn, expanding the variety of payloads that may be mounted or suspended on said guide 140 so as to move therealong with respect to the housing 110 of the aircraft apparatus.

In various other embodiments of the present invention, at least one of the guides 140 provided to the housing 110 in at least one or each of the aircraft apparatuses 100 being part of the system 500-1 shown in Fig. 1 may be further provided with a gripping mechanism (not shown) configured to grip a payload to enable same to be mounted or suspended on said at least one guide and configured to move along said at least one guide to enable said gripped payload to move along said at least one guide. In one of the variations of this embodiment of the present invention, the gripping mechanism (not shown) may be configured rotatable so as to enable rotation of said gripped payload with respect to said at least one guide.

In various other embodiments of the present invention, at least one of the guides 140 provided to the housing 110 in at least one or each of the aircraft apparatuses 100 being part of the system 500-1 shown in Fig. 1 may be configured movable, wherein said housing 110 of the aircraft apparatus may further comprise a guide movement module (not shown) being under control of the control module of said aircraft apparatus 100 and configured to operably interact with said movable guide 140 so as to enable same to move together with a payload mounted or suspended on said movable guide. In one of the variations of this embodiment of the present invention, the movable guide 140 may be further configured to mount or suspend thereon a payload so as to enable movement of said payload along said movable guide 140 while movement of that guide 140.

According to one of the embodiments of the present invention, the housing 110 of at least one or each of the docked to one another aircraft apparatuses 100 forming a cluster aircraft apparatus shown in Fig. 1 may be further provided with a payload movement module (not shown) being under control of the control module of said aircraft apparatus 100 and configured to interact with a payload mounted or suspended on at least one of the guides 140 provided to said housing 110 of the aircraft apparatus so as to enable movement of said payload along said at least one guide 140, wherein said control module may be further configured to present control commands to said payload movement module so as to enable movement of said payload from the aircraft apparatus 100 to be undocked to at least one of the remaining docked to one another aircraft apparatuses 100. Thus, in this embodiment of the present invention, the payload movement module (not shown) being under control of the control module (not shown) related to one of the aircraft apparatuses 100 docked to one another to form a cluster aircraft apparatus substantially allows to at least partially reload or unload a payload from the housing 110 of the aircraft apparatus to be undocked from said cluster aircraft apparatus to at least one of the housings 110 of other aircraft apparatuses being part of said cluster aircraft apparatus while said cluster aircraft apparatus is present in the air space (i.e. in the air). It should be noted that in this embodiment of the present invention, the payload movement module which may be further provided to the housing 110 of the aircraft apparatus may be, for example, a robotic arm, a robotic manipulator, a robotic grip, a controllable electromechanical grip, a controllable electromagnetic grip or another controllable technical means configured to grip a payload so as to enable movement thereof along at least one guide 140 or to continuously or periodically exert force upon a payload so as to enable movement thereof along at least one guide 140. It should be noted that in this embodiment of the present invention, the payload movement module which may be further provided to the housing 110 of the aircraft apparatus may be further configured to move under control of the control module of the aircraft apparatus 100 with respect to said housing 110 to enable movement of a payload along at least one guide 140. In particular, in this embodiment of the present invention, the payload movement module of the aircraft apparatus 100 may be mounted from the external or internal side of the housing 110 related to said aircraft apparatus 100 so as to move along a distinct guide which may be further provided to said housing 110 of the aircraft apparatus, may be mounted so as to move along said at least one guide 140 (i.e., on the same guide 140 on which the payload to be moved is mounted or suspended), may be mounted on a wheel base so as to move with respect to said housing 110 of the aircraft apparatus, may be configured in the form of a telescopic grip for gripping a payload configured to fold and unfold during which said telescopic grip pulls or pushes, respectively, said payload so as to enable movement of that payload along at least one guide 140 or the like. It should also be noted that in this embodiment of the present invention, the movability of the payload movement module of the aircraft apparatus 100 may be provided by a drive module or drive which may be further provided to the housing 110 of the aircraft apparatus and which may be operably coupled to said payload movement module so as to enable transmission of motion to said payload movement module while actuation of said drive being under control of the control module related to one of the docked to one another aircraft apparatuses 100 forming a cluster aircraft apparatus.

According to another embodiment of the present invention, the housing 110 of at least one or each of the docked to one another aircraft apparatuses 100 forming a cluster aircraft apparatus shown in Fig. 1 may be further provided with a payload movement module (not shown) being under control of the control module of said aircraft apparatus 100 and configured to interact with a payload mounted or suspended on at least one of the guides 140 provided to said housing 100 of the aircraft apparatus so as to enable movement of said payload along said at least one guide 140, wherein said control module may be further configured to present control commands to said payload movement module so as to enable receipt of said payload from at least one of the remaining docked to one another aircraft apparatuses 100 and to enable movement of said received payload into the aircraft apparatus to be undocked. Thus, in this embodiment of the present invention, the payload movement module (not shown) being under control of the control module (not shown) related to one of the aircraft apparatuses 100 docked to one another to form a cluster aircraft apparatus substantially allows to at least partially reload a payload to the housing 110 of the aircraft apparatus to be undocked from said cluster aircraft apparatus, from the housing 110 of any other aircraft apparatus 100 being part of said cluster aircraft apparatus or from the housings 110 of any other aircraft apparatuses being part of said cluster aircraft apparatus while said cluster aircraft apparatus is present in the air space (i.e. in the air). It should be noted that in this embodiment of the present invention, the payload movement module which may be further provided to the housing 110 of the aircraft apparatus may be, for example, a robotic arm, a robotic manipulator, a robotic grip, a controllable electromechanical grip, a controllable electromagnetic grip or another controllable technical means configured to grip a payload so as to enable movement thereof along at least one guide 140 or to continuously or periodically exert force upon a payload so as to enable movement thereof along at least one guide 140. It should be noted that in this embodiment of the present invention, the payload movement module which may be further provided to the housing 110 of the aircraft apparatus may be further configured to move under control of the control module of the aircraft apparatus 100 with respect to said housing 110 to enable movement of a payload along at least one guide 140. In particular, in this embodiment of the present invention, the payload movement module of the aircraft apparatus 100 may be mounted from the external or internal side of the housing 110 related to said aircraft apparatus 100 so as to move along a distinct guide which may be further provided to said housing 110 of the aircraft apparatus, may be mounted so as to move along said at least one guide 140 (i.e., on the same guide 140 on which the payload to be moved is mounted or suspended), may be mounted on a wheel base so as to move with respect to said housing 110 of the aircraft apparatus, may be configured in the form of a telescopic grip for gripping a payload configured to fold and unfold during which said telescopic grip pulls or pushes, respectively, said payload so as to enable movement of that payload along at least one guide 140 or the like. It should also be noted that in this embodiment of the present invention, the movability of the payload movement module of the aircraft apparatus 100 may be provided by a drive module or drive (not shown) which may be further provided to the housing 110 of the aircraft apparatus and which may be operably coupled to said payload movement module so as to enable transmission of motion to said payload movement module while actuation of said drive being under control of the control module related to one of the docked to one another aircraft apparatuses 100 forming a cluster aircraft apparatus.

According to another embodiment of the present invention, the control module in one of the aircraft apparatuses 100 forming a cluster aircraft apparatus may further enable direction of the aircraft apparatus 100 to be undocked to a parking station (not shown) provided with one or more charging devices (not shown) electrically connected each to at least one of the power sources of the parking station and enabling each connection thereto of at least one aircraft apparatus for at least partial charging or at least partial replenishment of the range of said aircraft apparatus 100 to be undocked such that said aircraft apparatus 100 transitions to a state with at least partially replenished range or fully replenished range, thus allowing same to redock with at least one of the docked to one another aircraft apparatuses 100 forming a cluster aircraft apparatus. It should be noted that each of the power sources of the parking station in this embodiment of the present invention may be one or more batteries, a generator based on an internal combustion engine, a generator based on a hydrogen engine, a solar panel and any other suitable energy source known in the prior art. It should also be noted that at least one or each of the charging devices (not shown) of the parking station in this embodiment of the present invention may be a wireless charging device, a wired charging device or a charging dock. Alternatively, at least one or each of the charging devices of the parking station may be configured, for example, in the form of a device for supplying electrical energy, a device for supplying liquid or gaseous fuel and/or the like. As yet another alternative, at least one or each of the charging devices of the parking station may be hydraulically connected to a pump (not shown) connected by a hydraulic line to a reservoir or container (not shown) with fuel in a manner to enable intake of fuel from said container so as to enable supply of said intaken volume of fuel to the fuel tank of the aircraft apparatus 100 which fuel tank is hydraulically connected to the fuel-powered engine of the aircraft apparatus 100, thus allowing to replenish the range of the aircraft apparatus 100 (in particular, due to at least partial replenishment of fuel volume in the fuel tank of the aircraft apparatus 100).

In one of the variations of this embodiment of the present invention, the control module in one of the aircraft apparatuses 100 forming a cluster aircraft apparatus may further enable docking of an aircraft apparatus with a replenished range to one of the docked to one another aircraft apparatuses 100 forming a cluster aircraft apparatus. In another variation of this embodiment of the present invention, the control module in one of the aircraft apparatuses 100 forming a cluster aircraft apparatus may be further configured to present control commands to the payload movement module (not shown) related to the aircraft apparatus to be docked so as to enable movement of a payload from said aircraft apparatus to be docked to at least one of the docked to one another aircraft apparatuses 100 forming a cluster aircraft apparatus.

According to another embodiment of the present invention, at least two of the aircraft apparatuses 100 to be docked to one another may be further provided each with an additional guide (not shown), wherein the control module in one of said aircraft apparatuses 100 may further enable movement of the payload movement module (not shown) along an additional cluster guide (not shown) formed from said additional guides of the aircraft apparatuses 100 upon docking of said aircraft apparatuses 100 to one another.

It should also be noted that at least one or each of the control units of the cluster aircraft apparatus shown in Fig. 1 and formed from docked to one another aircraft apparatuses 100 of Fig. 1 or the control device of the system 500-1 for moving a payload which system may comprise said cluster aircraft apparatus may be further configured to enable undocking of at least a portion or all of the aircraft apparatuses 100 of Fig. 1 forming said cluster aircraft apparatus. Furthermore, at least one or each of the control units of the cluster aircraft apparatus shown in Fig. 1 and formed from docked to one another aircraft apparatuses 100 of Fig. 1 or the control device of the system 500-1 for moving a payload which system may comprise said cluster aircraft apparatus may be further configured to enable detachable docking, to such cluster aircraft apparatus, of one or more additional aircraft apparatuses 100 shown in Fig. 1, one or more above cluster aircraft apparatuses formed each from docked to one another aircraft apparatuses 100 of Fig. 1, one or more below-described self-propelled modules, one or more below-described cluster self-propelled modules 300, one or more below-described payloads 200 and/or one or more below-described cluster payloads. It should also be noted that the process of detachably docking a cluster aircraft apparatus formed from docked to one another aircraft apparatuses 100 of Fig. 1 being part of the system 500-1 to one or more additional aircraft apparatuses 100 of Fig. 1, one or more additional cluster aircraft apparatuses formed each from docked to one another aircraft apparatuses 100 of Fig. 1, one or more below-described self-propelled modules, one or more below-described cluster self-propelled modules 300, one or more below-described payloads 200 and/or one or more below-described cluster payloads may be performed by way of bringing at least one or each of the docking modules 130 provided to the housings 110 of the aircraft apparatuses forming said cluster aircraft apparatus into detachable interaction with at least one of the auxiliary docking modules which may be provided to the housings of said one or more additional aircraft apparatuses 100 of Fig. 1, one or more additional cluster aircraft apparatuses, one or more self-propelled modules, one or more cluster self-propelled modules 300, one or more below-described payloads 200 and/or one or more below-described cluster payloads, respectively.

### Second embodiment of system for moving payload

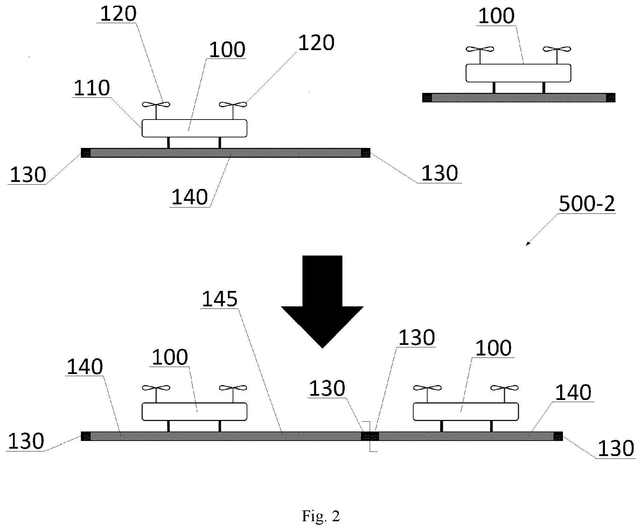

Fig. 2 is a second embodiment of a system 500-2 for moving a payload according to the present invention, comprising two aircraft apparatuses 100 configured to detachably connect to one another or to detachably dock to one another to form a cluster aircraft apparatus.

It should be noted that the system 500-2 is substantially a variant or variation of the system 500-1 shown in Fig. 1; therefore, similar functional components being part of the system 500-1 and system 500-2 and similar constituent elements being part of said similar functional components are referenced in Fig. 1 and Fig. 2 and in the text hereof using the same reference numbers. It should also be noted that, where applicable, the above embodiments of the system 500-1 also apply to or relate to the system 500-2 shown in Fig. 2 and, accordingly, particular embodiments of the present invention, alternative embodiments of the present invention and/or variations thereof described above in relation to the system 500-1 should be construed as embodiments of the system 500-2.

Analogously to the system 500-1 described above, the system 500-2 may be comprised of two or more aircraft apparatuses 100 configured to detachably connect to one another to form a cluster aircraft apparatus, for example, three, four, five, six, seven, eight, nine, ten, eleven, twelve or more aircraft apparatuses configured each analogously to one of the herein-described embodiments of the aircraft apparatus 100, wherein the aircraft apparatuses 100 in the system 500-2 may define or form one or more cluster aircraft apparatuses (for example, one, two, three, four, five, six, seven, eight, ten, ten or more cluster aircraft apparatuses) each of which is comprised of two or more aircraft apparatuses 100 and which have the same or different quantity of aircraft apparatuses 100 as part thereof.

Furthermore, analogously to the above system 500-1, each of the aircraft apparatuses 100 being part of the system 500-2 comprises a housing 110 provided with two air propulsion units 120 enabling movement of said aircraft apparatus 100 through the air, one guide 140 secured on the housing 110 from the external side thereof and configured to mount or suspend thereon a payload (including the below-described payload 200) and to move therealong said mounted or suspended payload and a control module configured to control the operation of said aircraft apparatus 100 (including to control the operation of the propulsion units 120 thereof) and configured to receive control commands and/or navigation commands from the control device being part of the system 500-2 so as to enable docking of said aircraft apparatus 100 to at least one other aircraft apparatus identical to or distinct from the aircraft apparatus 100. However, in contrast to the system 500-1 shown in Fig. 1, in the system 500-2 shown in Fig. 2 the docking modules 130 are rigidly attached to the opposite ends of said guide 140, thus allowing to detachably connect or dock to said guide 140 one or more other guides 140 provided to the housing 110 of one or more other aircraft apparatuses 100 being part of the system 500-2, thereby providing for detachable docking of the aircraft apparatuses 100 to one another, wherein the detachable docking of the guides 140 related to the housings 110 of the aircraft apparatuses 100 to one another is performed by way of bringing the docking modules 130 of the guides of said aircraft apparatuses into detachable interaction with one another. Analogously to the system 500-1, in the system 500-2, upon docking of the aircraft apparatuses 100 to one another, there is performed the docking of the guides 140 of those aircraft apparatuses 100 to form a cluster guide 145 shown in Fig. 2. Thus, at least one of the guides provided to the housing 110 in at least one or each of the aircraft apparatuses 100 being part of the system 500-2 is configured to detachably connect or dock to one or more other guides of the housing of at least one other aircraft apparatus 100 to form a cluster guide upon docking of such aircraft apparatuses 100 to one another.

In one of the embodiments of the present invention, the housing 110 of at least one or each of the aircraft apparatuses 100 being part of the system 500-2 may be provided with one or more air propulsion units enabling movement of said aircraft apparatus 100 through the air and one or more guides 140, at least one or each of which may be configured to mount or suspend thereon a payload (including the below-described payload 200) so as to enable movement of said payload along said guide 140 and may be configured to detachably connect or dock to one or more guides 140 which may relate to the housing 110 of at least one other aircraft apparatus 100 also being part of the system 500-2.

In another embodiment of the present invention, the housing 110 of at least one or each of the aircraft apparatuses 100 being part of the system 500-2 may be provided with one or more docking modules 130 provided on the guide 140 of said housing 110 in spots or regions of that guide 140 which allow to detachably connect or dock said guide to one or more guides 140 of the housing 110 of other aircraft apparatus 100 upon bringing the docking modules 130 of said aircraft apparatuses 100 to be docked to one another into detachable interaction with one another to form a cluster guide 145 from said docked to one another distinct guides 140 and which enable free movement of a payload along said cluster guide 145.

Furthermore, the control module (not shown) related to one of the aircraft apparatuses 100 being part of the system 500-2 shown in Fig. 2 and docked to one another to form a cluster aircraft apparatus further enables undocking of at least one of said docked to one another aircraft apparatuses 100 so as to enable formation of a cluster guide from the guides 140 of the remaining docked to one another aircraft apparatuses and/or enables docking of yet another aircraft apparatus 100 to one of said docked to one another aircraft apparatuses so as to enable formation of a cluster guide from the guides of said docked to one another aircraft apparatuses.

It should also be noted that at least one or each of the control units of the cluster aircraft apparatus shown in Fig. 2 and formed from docked to one another aircraft apparatuses 100 of Fig. 2 or the control device of the system 500-2 for moving a payload which system may comprise said cluster aircraft apparatus may be further configured to enable undocking of at least a portion or all of the aircraft apparatuses 100 of Fig. 2 forming said cluster aircraft apparatus. Furthermore, at least one or each of the control units of the cluster aircraft apparatus shown in Fig. 2 and formed from docked to one another aircraft apparatuses 100 of Fig. 2 or the control device of the system 500-2 for moving a payload which system may comprise said cluster aircraft apparatus may be further configured to enable detachable docking, to such cluster aircraft apparatus, of one or more additional aircraft apparatuses 100 shown in Fig. 2, one or more cluster aircraft apparatuses formed each from docked to one another aircraft apparatuses 100 of Fig. 2, one or more below-described self-propelled modules, one or more below-described cluster self-propelled modules 300, one or more below-described payloads 200 and/or one or more below-described cluster payloads. It should also be noted that the process of detachably docking a cluster aircraft apparatus formed from docked to one another aircraft apparatuses 100 of Fig. 2 being part of the system 500-2 to one or more additional aircraft apparatuses 100 of Fig. 2, one or more additional cluster aircraft apparatuses formed each from docked to one another aircraft apparatuses 100 of Fig. 2, one or more below-described self-propelled modules, one or more below-described cluster self-propelled modules 300, one or more below-described payloads 200 and/or one or more below-described cluster payloads may be performed by way of bringing at least one or each of the docking modules 130 provided to the guides 140 of the aircraft apparatuses forming said cluster aircraft apparatus into detachable interaction with at least one of the auxiliary docking modules which may be provided to the housings of said one or more additional aircraft apparatuses 100 of Fig. 2, one or more additional cluster aircraft apparatuses, one or more self-propelled modules, one or more cluster self-propelled modules 300, one or more below-described payloads 200 and/or one or more below-described cluster payloads, respectively.

### Third embodiment of system for moving payload

The third embodiment of the system for moving a payload is a variation of the system 500-2 described above with reference to Fig. 2; accordingly, similar functional components being part of the third embodiment of the system for moving a payload and similar constituent elements being part of said similar functional components are referenced in the text hereof using the same reference numbers as used in relation to the above system 500-2. It should also be noted that, where applicable, the above embodiments of the system 500-2 also apply to or relate to the third embodiment of the system for moving a payload; and, accordingly, particular embodiments of the present invention, alternative embodiments of the present invention and/or variations thereof described above with respect to the system 500-2 should be construed as embodiments of the third embodiment of the system for moving a payload.

Analogously to the system 500-2, the third embodiment of the system for moving a payload may comprise two or more aircraft apparatuses 100 configured to detachably connect to one another or to detachably dock to one another to form a cluster aircraft apparatus.

Furthermore, analogously to the above system 500-2, in the third embodiment of the system for moving a payload each of the aircraft apparatuses 100 comprises a housing 110 provided with two air propulsion units 120 enabling movement of said aircraft apparatus 100 through the air, one guide 140 secured on the housing 110 from the external side thereof and configured to mount or suspend thereon a payload and to move therealong said mounted or suspended payload and a control module configured to control the operation of said aircraft apparatus 100 (including to control the operation of the propulsion units 120 thereof) and configured to receive control commands and/or navigation commands from the control device being part of the third embodiment of the system for moving a payload so as to enable docking of said aircraft apparatus 100 to at least one other aircraft apparatus identical to or distinct from the aircraft apparatus 100.

Furthermore, analogously to the above system 500-2, in the third embodiment of the system for moving a payload the docking modules 130 are rigidly attached to the opposite ends of said guide 140, thus allowing to detachably connect or dock to said guide 140 one or more other guides 140 provided to the housing 110 of one or more other aircraft apparatuses 100 being part of the third embodiment of the system for moving a payload, thereby providing for detachable docking of the aircraft apparatuses 100 to one another, wherein the detachable docking of the guides 140 related to the housings 110 of the aircraft apparatuses 100 to one another is performed by way of bringing the docking modules 130 of the guides of said aircraft apparatuses into detachable interaction with one another.

Furthermore, analogously to the above system 500-2, in the third embodiment of the system for moving a payload, upon docking of the aircraft apparatuses 100 to one another, there is performed the docking of the guides 140 of those aircraft apparatuses 100 to form a cluster guide 145. Thus, at least one of the guides provided to the housing 110 in at least one or each of the aircraft apparatuses 100 being part of the third embodiment of the system for moving a payload is configured to detachably connect or dock to one or more other guides of the housing 110 of at least one other aircraft apparatus 100 to form a cluster guide 145 upon docking such aircraft apparatuses 100 to one another.

In contrast to the above system 500-2, in the third embodiment of the system for moving a payload at least one or each of one or more guides 140 provided to the housing 110 of at least one or each of the aircraft apparatuses 100 being part of the third embodiment of the system for moving a payload is at least partially or completely configured to move with respect to said housing 110 of the aircraft apparatus, thus allowing to further move a payload mounted or suspended on said movable guide with respect to said housing 110 while movement of said guide 140, wherein, simultaneously thereto, said payload may be moved immediately along said guide, thus not only increasing the speed of movement of said payload with respect to the housing 110 of the aircraft apparatus but also increasing the smoothness of movement of said payload in general, thereby reducing the vibration stress on said payload.

In particular, the movement of a payload along the guide 140 in the third embodiment of the system for moving a payload may be provided by means of using a payload movement module or a gripping mechanism for moving a payload which were described above with respect to the system 500-1, wherein such payload movement module or such gripping mechanism for moving a payload may be mounted on the housing 110 of the aircraft apparatus or on the guide 140 itself.

Furthermore, the movement of the guide 140 with respect to the housing 110 of the aircraft apparatus may be provided in the third embodiment of the system for moving a payload by means of using a guide movement module which may be mounted on the housing 110 of the aircraft apparatus and which may operably interact with said guide 140 so as to enable movement thereof with respect to said housing. In one of the embodiments of the present invention, such guide 140 may be mounted or secured immediately on the guide movement module which, in turn, may be mounted in the housing 110 of the aircraft apparatus, movably with respect to said housing 110, such that the movement of the guide movement module with respect to the housing 110 of the aircraft apparatus also leads to the movement of the guide mounted on said guide movement module, with respect to said housing 110. In another embodiment of the present invention, such guide 140 may be configured telescopic such that at least partial or complete folding/unfolding of said guide 140 leads to movement of a payload mounted or suspended on such guide 140 with respect to the housing 110 of the aircraft apparatus.

It should be noted that the guide movement module may be implemented analogously to the payload movement module or gripping mechanism for moving a payload which were described above relative to the system 500-1, therefore, the embodiments of the payload movement module or gripping mechanism for moving a payload described herein may be considered exemplary possible embodiments of the guide movement module.

It should also be noted that the guide movement module and the payload movement module may be configured as a single functional or drive device implementing the above functions of the guide movement module and the payload movement module, i.e., enabling movement of a payload along one or more guides 140 provided to the housing 110 of the aircraft apparatus and, simultaneously thereto, enabling movement of said guides 140 with respect to said housing 110.

In one of the embodiments of the present invention, the housing 110 of at least one or each of the aircraft apparatuses 100 being part of the third embodiment of the system for moving a payload may be provided with one or more air propulsion units enabling movement of said aircraft apparatus 100 through the air and one or more guides 140, at least one or each of which may be configured to mount or suspend thereon a payload (including the below-described payload 200) so as to enable movement of said payload along said guide 140 and may be configured to detachably connect or dock to one or more guides 140 which may relate to the housing 110 of at least one other aircraft apparatus 100 also being part of the third embodiment of the system for moving a payload.

In another embodiment of the present invention, the housing 110 of at least one or each of the aircraft apparatuses 100 being part of the third embodiment of the system for moving a payload may be provided with one or more docking modules 130 provided on the guide 140 of said housing 110 in spots or regions of that guide 140 which allow to detachably connect or dock said guide to one or more guides 140 of the housing 110 of other aircraft apparatus 100 upon bringing the docking modules 130 of said aircraft apparatuses 100 to be docked to one another into detachable interaction with one another to form a cluster guide 145 from said docked to one another distinct guides 140 and which enable free movement of a payload along said cluster guide 145.

Furthermore, the control module (not shown) related to one of the aircraft apparatuses 100 being part of the third embodiment of the system for moving a payload shown in Fig. 2 and docked to one another to form a cluster aircraft apparatus further enables undocking of at least one of said docked to one another aircraft apparatuses 100 so as to enable formation of a cluster guide 145 from the guides 140 of the remaining docked to one another aircraft apparatuses and/or enables docking of yet another aircraft apparatus 100 to one of said docked to one another aircraft apparatuses 100 so as to enable formation of a cluster guide 145 from the guides of said docked to one another aircraft apparatuses.

Furthermore, the control module (not shown) related to one of the aircraft apparatuses 100 being part of the third embodiment of the system for moving a payload and docked to one another to form a cluster aircraft apparatus provided with the above cluster guide 145 further enables movement of a payload (including the below-described payload 200) along said cluster guide 145 and, simultaneously thereto, enables movement of at least a portion of said cluster guide 145 with respect to at least one of the housings 110 of the docked to one another aircraft apparatuses 100.

It should also be noted that at least one or each of the control units of the cluster aircraft apparatus formed from the docked to one another aircraft apparatuses 100 being part of the third embodiment of the system for moving a payload or the control device of the third embodiment of the system for moving a payload which system may comprise said cluster aircraft apparatus may be further configured to enable undocking of at least some or all of the aircraft apparatuses 100 forming said cluster aircraft apparatus. Furthermore, at least one or each of the control units of the cluster aircraft apparatus formed from the docked to one another aircraft apparatuses 100 being part of the third embodiment of the system for moving a payload or the control device of the third embodiment of the system for moving a payload which system may comprise said cluster aircraft apparatus may be further configured to enable detachable docking, to such cluster aircraft apparatus, of one or more additional aircraft apparatuses 100 related to the third embodiment of the system for moving a payload, one or more cluster aircraft apparatuses formed each from the docked to one another aircraft apparatuses 100 related to the third embodiment of the system for moving a payload, one or more below-described self-propelled modules, one or more below-described cluster self-propelled modules 300, one or more below-described payloads 200 and/or one or more below-described cluster payloads. It should also be noted that the process of detachably docking a cluster aircraft apparatus formed from docked to one another aircraft apparatuses 100 related to the third embodiment of the system for moving a payload to one or more additional aircraft apparatuses 100 related to the third embodiment of the system for moving a payload, one or more additional cluster aircraft apparatuses formed each from docked to one another aircraft apparatuses 100 related to the third embodiment of the system for moving a payload, one or more below-described self-propelled modules, one or more below-described cluster self-propelled modules 300, one or more below-described payloads 200 and/or one or more below-described cluster payloads may be performed by way of bringing at least one or each of the docking modules 130 provided to the guides 140 of the aircraft apparatuses forming said cluster aircraft apparatus into detachable interaction with at least one of the auxiliary docking modules which may be provided to the housings of said one or more additional aircraft apparatuses 100 related to the third embodiment of the system for moving a payload, one or more additional cluster aircraft apparatuses related to the third embodiment of the system for moving a payload, one or more self-propelled modules, one or more cluster self-propelled modules 300, one or more below-described payloads 200 and/or one or more below-described cluster payloads, respectively.

### Fourth embodiment of system for moving payload

The fourth embodiment of the system for moving a payload is a variation of the system 500-1 described above with reference to Fig. 1; accordingly, similar functional components being part of the fourth embodiment of the system for moving a payload and similar constituent elements being part of said similar functional components are referenced in the text hereof using the same reference numbers as used in relation to the above system 500-1. It should also be noted that, where applicable, the above embodiments of the system 500-1 also apply to or relate to the fourth embodiment of the system for moving a payload; and, accordingly, particular embodiments of the present invention, alternative embodiments of the present invention and/or variations thereof described above with respect to the system 500-1 should be construed as embodiments of the third embodiment of the system for moving a payload.

Analogously to the system 500-1, the fourth embodiment of the system for moving a payload may comprise two or more aircraft apparatuses 100 configured to detachably connect to one another or to detachably dock to one another to form a cluster aircraft apparatus.

Furthermore, analogously to the above system 500-1, in the fourth embodiment of the system for moving a payload, each of the aircraft apparatuses 100 comprises a housing 110 provided with two air propulsion units 120 enabling movement of said aircraft apparatus 100 through the air, one guide 140 secured on the housing 110 from the external side thereof and configured to mount or suspend thereon a payload and to move therealong said mounted or suspended payload and a control module configured to control the operation of said aircraft apparatus 100 (including to control the operation of the propulsion units 120 thereof) and configured to receive control commands and/or navigation commands from the control device being part of the fourth embodiment of the system for moving a payload so as to enable docking of said aircraft apparatus 100 to at least one other aircraft apparatus identical to or distinct from the aircraft apparatus 100.

Furthermore, analogously to the above system 500-1, in the fourth embodiment of the system for moving a payload the docking modules 130 are mounted from the external side of the housing 110, thus allowing to detachably connect or dock, to at least one of those docking modules 130, one or more other docking modules 130 provided to the housing 110 of one or more other aircraft apparatuses 100 being part of the fourth embodiment of the system for moving a payload, thereby providing for detachable docking of the aircraft apparatuses 100 to one another. Thus, in the fourth embodiment of the system for moving a payload, detachable docking of the housings 110 of the aircraft apparatuses to one another is performed by way of bringing the docking modules 130 of those housings 110 into detachable interaction with one another.

Furthermore, analogously to the above system 500-1, in the fourth embodiment of the system for moving a payload, upon docking the aircraft apparatuses 100 to one another, there is performed detachable docking (i.e., a butt connection) or detachable connection of the guides 140 provided to the housings 110 to be docked to one another of the aircraft apparatuses to form a cluster guide 145. Thus, at least one of the guides provided to the housing 110 in at least one or each of the aircraft apparatuses 100 being part of the fourth embodiment of the system for moving a payload is configured to detachably connect or dock to one or more other guides of the housing 110 of at least one other aircraft apparatus 100 to form a cluster guide 145 upon docking such aircraft apparatuses to one another.

In contrast to the above system 500-1, in the fourth embodiment of the system for moving a payload at least one or each of one or more guides 140 provided to the housing 110 of at least one or each of the aircraft apparatuses 100 being part of the fourth embodiment of the system for moving a payload is at least partially or completely configured to move with respect to said housing 110 of the aircraft apparatus, thus allowing to further move a payload mounted or suspended on said movable guide with respect to said housing 110 while movement of said guide 140, wherein, simultaneously thereto, said payload may be moved immediately along said guide 140, thus not only increasing the speed of movement of said payload with respect to the housing 110 of the aircraft apparatus but also increasing the smoothness of movement of said payload in general, thereby reducing the vibration stress on said payload.

In particular, the movement of a payload along the guide 140 in the fourth embodiment of the system for moving a payload may be provided by means of using a payload movement module or a gripping mechanism for moving a payload which were described above with respect to the system 500-1, wherein such payload movement module or such gripping mechanism for moving a payload may be mounted on the housing 110 of the aircraft apparatus or on the guide 140 itself.

Furthermore, the movement of the guide 140 with respect to the housing 110 of the aircraft apparatus may be provided in the fourth embodiment of the system for moving a payload by means of using a guide movement module which may be mounted on the housing 110 of the aircraft apparatus and which may operably interact with said guide 140 so as to enable movement thereof with respect to said housing 110. In one of the embodiments of the present invention, such guide 140 may be mounted or secured immediately on the guide movement module which, in turn, may be mounted in the housing 110 of the aircraft apparatus, movably with respect to said housing 110, such that the movement of the guide movement module with respect to the housing 110 of the aircraft also leads to the movement of the guide 140 mounted on said guide movement module, with respect to said housing 110. In another embodiment of the present invention, such guide 140 may be configured telescopic such that at least partial or complete folding/unfolding of said guide 140 leads to movement of a payload mounted or suspended on such guide 140 with respect to the housing 110 of the aircraft apparatus.

It should be noted that the guide movement module may be implemented analogously to the payload movement module or gripping mechanism for moving a payload which were described above relative to the system 500-1, therefore, the embodiments of the payload movement module or gripping mechanism for moving a payload described herein may be considered exemplary possible embodiments of the guide movement module.

It should also be noted that the guide movement module and the payload movement module may be configured as a single functional or drive device implementing the above functions of the guide movement module and the payload movement module, i.e., enabling movement of a payload along one or more guides 140 provided to the housing 110 of the aircraft apparatus and, simultaneously thereto, enabling movement of said guides 140 with respect to said housing 110.

In one of the embodiments of the present invention, the housing 110 of at least one or each of the aircraft apparatuses 100 being part of the fourth embodiment of the system for moving a payload may be provided with one or more air propulsion units enabling movement of said aircraft apparatus 100 through the air and one or more guides 140, at least one or each of which may be configured to mount or suspend thereon a payload (including the below-described payload 200) so as to enable movement of said payload along said guide 140 and may be configured to detachably connect or dock to one or more guides 140 which may relate to the housing 110 of at least one other aircraft apparatus 100 also being part of the fourth embodiment of the system for moving a payload.

In another embodiment of the present invention, the housing 110 of at least one or each of the aircraft apparatuses 100 being part of the fourth embodiment of the system for moving a payload may be provided with one or more docking modules 130 provided on the housing 110 of the aircraft apparatus in spots or on regions of the body of that housing 110 allowing to detachably connect or dock said housing 110 to one or more housings 110 of other aircraft apparatuses 100 by way of bringing the docking modules 130 of said housings 110 into detachable interaction with one another and to detachably connect or dock at least one of the guides 140 provided to said housing 110 to one or more guides 140 of the housing 110 of one or more other aircraft apparatuses 100 to form a cluster guide 145 from said docked to one another distinct guides 140 and enabling free movement of a payload along said cluster guide 145.

Furthermore, the control module (not shown) related to one of the aircraft apparatuses 100 being part of the fourth embodiment of the system for moving a payload shown in Fig. 2 and docked to one another to form a cluster aircraft apparatus further enables undocking of at least one of said docked to one another aircraft apparatuses 100 so as to enable formation of a cluster guide 145 from the guides 140 of the remaining docked to one another aircraft apparatuses and/or enables docking of yet another aircraft apparatus 100 to one of said docked to one another aircraft apparatuses so as to enable formation of a cluster guide 145 from the guides of said docked to one another aircraft apparatuses.

Furthermore, the control module (not shown) related to one of the aircraft apparatuses 100 being part of the fourth embodiment of the system for moving a payload and docked to one another to form a cluster aircraft apparatus provided with the above cluster guide 145 further enables movement of a payload (including the below-described payload 200) along said cluster guide 145 and, simultaneously thereto, enables movement of at least a portion of said cluster guide 145 with respect to at least one of the housings 110 of the docked to one another aircraft apparatuses 100.

It should also be noted that at least one or each of the control units of the cluster aircraft apparatus formed from the docked to one another aircraft apparatuses 100 being part of the fourth embodiment of the system for moving a payload or the control device of the fourth embodiment of the system for moving a payload which system may comprise said cluster aircraft apparatus may be further configured to enable undocking of at least some or all of the aircraft apparatuses 100 forming said cluster aircraft apparatus. Furthermore, at least one or each of the control units of the cluster aircraft apparatus formed from the docked to one another aircraft apparatuses 100 being part of the fourth embodiment of the system for moving a payload or the control device of the fourth embodiment of the system for moving a payload which system may comprise said cluster aircraft apparatus may be further configured to enable detachable docking, to such cluster aircraft apparatus, of one or more additional aircraft apparatuses 100 being part of the fourth embodiment of the system for moving a payload, one or more above cluster aircraft apparatuses formed each from the docked to one another aircraft apparatuses 100 being part of the fourth embodiment of the system for moving a payload, one or more below-described self-propelled modules, one or more below-described cluster self-propelled modules 300, one or more below-described payloads 200 and/or one or more below-described cluster payloads. It should also be noted that the process of detachably docking a cluster aircraft apparatus formed from docked to one another aircraft apparatuses 100 being part of the fourth embodiment of the system for moving a payload to one or more additional aircraft apparatuses 100 related to the fourth embodiment of the system for moving a payload, one or more additional cluster aircraft apparatuses formed each from docked to one another aircraft apparatuses 100 related to the fourth embodiment of the system for moving a payload, one or more below-described self-propelled modules, one or more below-described cluster self-propelled modules 300, one or more below-described payloads 200 and/or one or more below-described cluster payloads may be performed by way of bringing at least one or each of the docking modules 130 provided to the housings 110 of the aircraft apparatuses forming said cluster aircraft apparatus into detachable interaction with at least one of the auxiliary docking modules which may be provided to the housings of said one or more additional aircraft apparatuses 100 related to the fourth embodiment of the system for moving a payload, one or more additional cluster aircraft apparatuses related to the fourth embodiment of the system for moving a payload, one or more self-propelled modules, one or more cluster self-propelled modules 300, one or more below-described payloads 200 and/or one or more below-described cluster payloads, respectively.

In particular, in view of the above description of embodiments of the aircraft apparatuses 100 and embodiments of the cluster aircraft apparatuses formed from docked to one another aircraft apparatuses 100, one of variations of the systems for moving a payload according to the present invention may comprise one or more aircraft apparatuses 100 according to the above second embodiment of the system 500-2 for moving a payload, at least one of which aircraft apparatuses may be detachably docked to one or more additional aircraft apparatuses according to the above second embodiment of the system 500-2 for moving a payload or one or more cluster aircraft apparatuses according to the above second embodiment of the system 500-2 for moving a payload by way of detachably connecting the guides 140 thereof to one another so as to enable movement of a payload (including the below-described payload 200 or the below-described cluster payload) along the cluster guide 145 formed from the guides 140 of said docked to one another aircraft apparatuses, or may comprise one or more cluster aircraft apparatuses according to the above second embodiment of the system 500-2 for moving a payload, at least one of which aircraft apparatuses may be detachably docked to one or more additional aircraft apparatuses 100 according to the above second embodiment of the system 500-2 for moving a payload or to one or more cluster aircraft apparatuses according to the above second embodiment of the system 500-2 for moving a payload by way of detachably connecting the guides 140 thereof to one another so as to enable movement of a payload (including the below-described payload 200 or the below-described cluster payload) along the cluster guide 145 formed from the guides 140 of said docked to one another aircraft apparatuses.

Furthermore, in view of the above description of embodiments of the aircraft apparatuses 100 and embodiments of the cluster aircraft apparatuses formed from docked to one another aircraft apparatuses 100, yet another variation of the system for moving a payload according to the present invention may comprise one or more aircraft apparatuses 100 according to the above third embodiment of the system for moving a payload, at least one of which aircraft apparatuses may be detachably docked to one or more additional aircraft apparatuses 100 according to the above third embodiment of the system for moving a payload or one or more cluster aircraft apparatuses according to the above third embodiment of the system for moving a payload by way of detachably connecting the guides 140 thereof to one another so as to enable simultaneous movement of a payload (including the below-described payload 200 or the below-described cluster payload) along the cluster guide 145 formed from the guides 140 of said docked to one another aircraft apparatuses and movement of at least a portion of said cluster guide 145 with respect to one or more housings 110 of said docked to one another aircraft apparatuses, or may comprise one or more cluster aircraft apparatuses according to the above third embodiment of the system for moving a payload, at least one of which aircraft apparatuses may be detachably docked to one or more additional aircraft apparatuses 100 according to the above third embodiment of the system for moving a payload or to one or more cluster aircraft apparatuses according to the above third embodiment of the system for moving a payload by way of detachably connecting the guides 140 thereof to one another so as to enable simultaneous movement of a payload (including the below-described payload 200 or the below-described cluster payload) along the cluster guide 145 formed from the guides 140 of said docked to one another aircraft apparatuses and movement of at least a portion of said cluster guide 145 with respect to one or more housings 110 of said docked to one another aircraft apparatuses.

Furthermore, in view of the above description of embodiments of the aircraft apparatuses 100 and embodiments of the cluster aircraft apparatuses formed from docked to one another aircraft apparatuses 100, yet another variation of the system for moving a payload according to the present invention may comprise one or more aircraft apparatuses 100 according to the first embodiment of the system 500-1 for moving a payload, at least one of which aircraft apparatuses may be detachably docked to one or more additional aircraft apparatuses according to the first embodiment of the system 500-1 for moving a payload or one or more cluster aircraft apparatuses according to the first embodiment of the system 500-1 for moving a payload by way of detachably connecting the docking modules 130 thereof to one another so as to enable movement of a payload (including the below-described payload 200 or the below-described cluster payload) along the cluster guide 145 formed from the guides 140 of said docked to one another aircraft apparatuses, or may comprise one or more cluster aircraft apparatuses according to the first embodiment of the system 500-1 for moving a payload, at least one of which aircraft apparatuses may be detachably docked to one or more additional aircraft apparatuses 100 according to the first embodiment of the system 500-1 for moving a payload or to one or more cluster aircraft apparatuses according to the first embodiment of the system 500-1 for moving a payload by way of detachably connecting the docking modules 130 thereof to one another so as to enable movement of a payload (including the below-described payload 200 or the below-described cluster payload) along the cluster guide 145 formed from the guides 140 of said docked to one another aircraft apparatuses.

Furthermore, in view of the above description of embodiments of the aircraft apparatuses 100 and embodiments of the cluster aircraft apparatuses formed from docked to one another aircraft apparatuses 100, some other variation of the system for moving a payload according to the present invention may comprise one or more aircraft apparatuses 100 according to the fourth embodiment of the system for moving a payload, at least one of which aircraft apparatuses may be detachably docked to one or more additional aircraft apparatuses according to the fourth embodiment of the system for moving a payload or one or more cluster aircraft apparatuses according to the fourth embodiment of the system for moving a payload by way of detachably connecting the docking modules 130 thereof to one another so as to enable simultaneous movement of a payload (including the below-described payload 200 or the below-described cluster payload) along the cluster guide 145 formed from the guides 140 of said docked to one another aircraft apparatuses and movement of at least a portion of said cluster guide 145 with respect to one or more housings 110 of said docked to one another aircraft apparatuses, or may comprise one or more cluster aircraft apparatuses according to the fourth embodiment of the system for moving a payload, at least one of which aircraft apparatuses may be detachably docked to one or more additional aircraft apparatuses 100 according to the fourth embodiment of the system for moving a payload or to one or more cluster aircraft apparatuses according to the fourth embodiment of the system for moving a payload by way of detachably connecting the docking modules 130 thereof to one another so as to enable simultaneous movement of a payload (including the below-described payload 200 or the below-described cluster payload) along the cluster guide 145 formed from the guides 140 of said docked to one another aircraft apparatuses and movement of at least a portion of said cluster guide 145 with respect to one or more housings 110 of said docked to one another aircraft apparatuses.

Furthermore, in some other embodiment of the present invention, at least one or each of one or more docking modules 130 which may be provided to the housing 110 in the aircraft apparatus 100 according to any one of the embodiments thereof described herein, known in the prior art or which would be appreciated by one skilled in the art may be arranged on one of the sides of the housing 110 of the aircraft apparatus, distinct from the remaining docking modules of said docking modules 130. In one of the variations of this embodiment of the present invention, one or more docking modules 130 which may be provided to the housing 110 in the aircraft apparatus 100 according to any one of embodiments thereof described herein, known in the prior art or appreciated by one skilled in the art may be arranged on one and the same side of the housing 110 of the aircraft apparatus or on different sides of the housing 110 of the aircraft apparatus.

Furthermore, in some other embodiment of the present invention, at least one or each of one or more guides 140 which may be provided to the housing 110 in the aircraft apparatus according to any one of the embodiments thereof described herein, known in the prior art or which would be appreciated by one skilled in the art may be arranged on one of the sides of the housing 110 of the aircraft apparatus, distinct from the remaining guides of said guides 140 of the aircraft apparatus. In one of the variations of this embodiment of the present invention, one or more guides 140 which may be provided to the housing 110 in the aircraft apparatus 100 according to any one of embodiments thereof described herein, known in the prior art or appreciated by one skilled in the art may be arranged on one and the same side of the housing 110 of the aircraft apparatus or on different sides of the housing 110 of the aircraft apparatus.

### Self-propelled modules

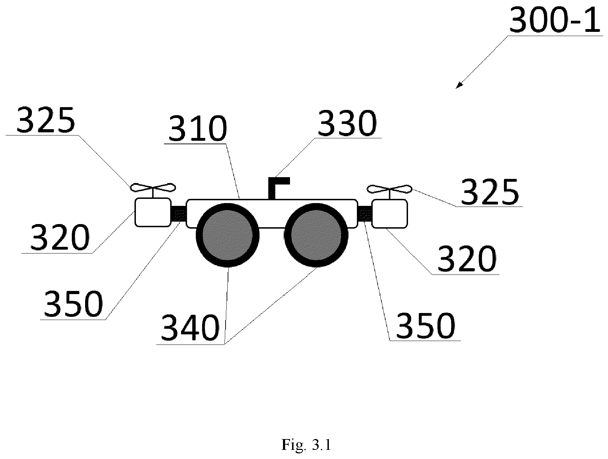

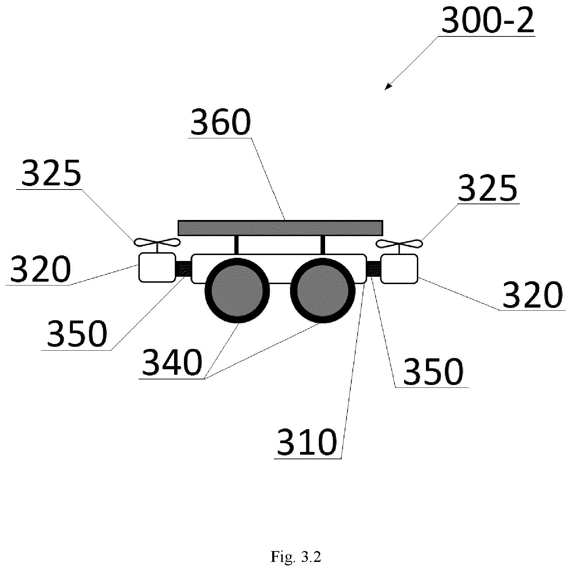

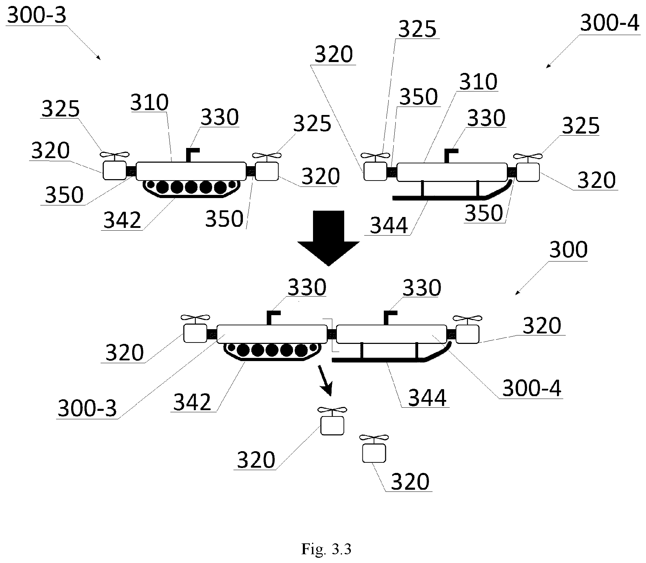

Figs. 3.1, 3.2, and 3.3 show illustrative self-propelled modules 300-1, 300-2, 300-3, 300-4 each of which may be configured to detachably dock to at least one of the above aircraft apparatuses 100 and/or to detachably dock to at least one of the below-described payloads 200, wherein at least a portion or each of said self-propelled modules 300-1, 300-2, 300-3, 300-4 may be initially accommodated, stored or parked in at least one of the parking stations (not shown) configured to charge such self-propelled modules or replenish the range of such self-propelled modules.

It should be noted that the self-propelled modules 300-1, 300-2, 300-3, 300-4 shown in Figs. 3.1, 3.2 and 3.3 are of different types characterized by different capabilities of movement of such self-propelled modules in space. It should also be noted that while the self-propelled modules 300-1, 300-2, 300-3, 300-4 shown in Figs. 3.1, 3.2 and 3.3 are shown solely as illustrative examples, one skilled in the art would readily appreciate that such self-propelled modules may also have other types known in the prior art, whereby the dimensions, material of manufacture, housing shape and the like of such self-propelled modules are not specifically limited in any way.

Fig. 3.1 shows a self-propelled module 300-1 comprising a housing 310 provided with one main docking module 330 and two unmanned aerial vehicles 320 each of which is provided with an air propeller 325 and each of which is detachably docked or connected to said housing 310 using a corresponding one of two auxiliary docking modules 350, wherein the main docking module 330 and auxiliary docking modules 350 may be configured analogously to the above docking module 130 according to any embodiment thereof described herein. It should be noted that the unmanned aerial vehicles 320 with the air propellers 325 thereof detachably connected to the housing 310 of the self-propelled module substantially function as air propulsion units for the self-propelled module 300-1, enabling that self-propelled module 300-1 to move in the air or fly. It should also be noted that each unmanned aerial vehicle 320 with the air propeller 325 thereof in the self-propelled module 300-1 is substantially an independent unmanned aerial vehicle provided with its own control module configured to control the operation of that unmanned aerial vehicle 320 and configured to receive navigation commands and/or control commands from at least the control unit of the self-propelled module 300-1 and/or from the herein-described control device of the system to enable the implementation of the process of controlling the operation of that unmanned aerial vehicle 320 based on said received navigation commands and/or control commands, and provided with docking means or a docking module akin to one of the docking modules described herein to enable detachable docking to an auxiliary docking module 350 related to the housing 310 of the self-propelled module, and, accordingly, to enable detachable docking of such unmanned aerial vehicle 320 to the housing 310 of the self-propelled module.

It should also be noted that the main docking module 330 provided to the housing 310 in the self-propelled module 300-1 may be brought into detachable interaction with at least one of the guides 140 which may be provided to the housing 110 of at least one of the aircraft apparatuses 100 in the above first, second, third and fourth embodiments of the system for moving a payload and/or may be brought into interaction with at least one of the guides 240 which may be provided to the housing 210 of at least one of the below-described payloads 200, thus enabling the self-propelled module 300-1 to be mounted or suspended on said at least one guide and enabling the self-propelled module 300-1 to move along said guide.

Furthermore, the housing 310 in the self-propelled module 300-1 shown in Fig. 3.1 is provided with a wheeled propulsion unit 340 in the form of a wheel base enabling movement of the self-propelled module 300-1 over the ground surface (over land) or over the surface of a stationary or movable physical object which may at least partially be present in air space, ground space, above-water space and/or underwater space. Thus, the wheeled propulsion unit 340 in the self-propelled module 300-1 shown in Fig. 3.1 is substantially an additional means of movement provided to the housing 310 of the self-propelled module further to the unmanned aerial vehicles 320 with the air propellers 325 thereof, detachably connected to said housing 310.

In one of the embodiments of the present invention, the housing 310 in the self-propelled module 300-1 shown in Fig. 3.1 may be provided with one or more air propulsion units (for example, one, two, three, four, five, six, seven, nine, ten or more air propulsion units) enabling the self-propelled module 300-1 to move through the air and undetachably secured to said housing 310.

In another embodiment of the present invention, the housing 310 in the self-propelled module 300-1 shown in Fig. 3.1 may be provided with one or more unmanned aerial vehicles 320 with the air propellers 325 thereof (for example, with one, two, three, four, five, six, seven, nine, ten or more such unmanned aerial vehicles) detachably secured to said housing 310 using auxiliary docking modules 350. In one of the variations of this embodiment of the present invention, at least one of the unmanned aerial vehicles 320 which may be detachably docked to the housing 310 of the self-propelled module may be provided with one or more air propellers 325 (for example, with one, two, three, four, five, six, seven, eight, nine, ten or more such air propellers 325) enabling the self-propelled module 300-1 to move in the air or fly.

In yet another embodiment of the present invention, the housing 310 in the self-propelled module 300-1 shown in Fig. 3.1 may be provided with one or more unmanned aerial vehicles 320 with the air propellers 325 thereof, detachably secured to the housing 310 of the self-propelled module, and may be further provided with one or more additional air propulsion units undetachably secured to the housing 310 of the self-propelled module.

Furthermore, the self-propelled module 300-1 comprises a control unit (not shown) mounted in the interior of the housing 310 and configured to control the operation of the self-propelled module 300-1, including to generally control the operation of the unmanned aerial vehicles 320 and particularly the operation of the air propellers 325 thereof.

The control unit of the self-propelled module 300-1 is configured to present control commands to at least one or each of the unmanned aerial vehicles 320 so as to enable actuation of the air propeller 325 of said unmanned aerial vehicle 320, thus enabling the self-propelled module 300-1 to move through the air or fly due to the thrust generated by said actuated air propeller 325, wherein the actuation of the air propellers 325 of the both unmanned aerial vehicles 320 performing the function of air propulsion units of the self-propelled module 300-1 in a manner to provide for substantially simultaneous or parallel operation thereof increases the carrying capacity of such self-propelled module 300-1.

Furthermore, the control unit of the self-propelled module 300-1 is configured to present control commands to at least one or each of the unmanned aerial vehicles 320 so as to enable undocking thereof from the housing 310 as a result of withdrawal of said unmanned aerial vehicle 320 from interaction with the corresponding auxiliary docking module 350.

The control unit of the self-propelled module 300-1 is also configured to present control commands to at least one of the unmanned aerial vehicles 320 present in the air space or accommodated in parking stations (not shown) so as to enable direction of said at least one unmanned aerial vehicle 320 to said self-propelled module 300-1 for detachable docking of said directed unmanned aerial vehicle 320 to the housing 310 of the self-propelled module by way of bringing that unmanned aerial vehicle 320 into interaction with one of free auxiliary docking modules 350.

Furthermore, the control unit of the self-propelled module 300-1 is configured to present control commands to an additional means of movement of the self-propelled module 300-1 in the form of a wheeled propulsion unit 340 to actuate same so as to enable that self-propelled module 300-1 to move over the ground surface (over land) or over the surface of a stationary or movable physical object which may at least partially be present in air space, ground space, above-water space and/or underwater space.

It should be noted that in order to enable the use of the self-propelled module 300-1 as part of one of the systems for moving a payload described herein, the control unit of the self-propelled module 300-1 is further configured to communicate via a communication network with the control module of at least one of the aircraft apparatuses 100 and/or with the control module of the payload 200 (if the latter is present in the housing of the payload 200). Furthermore, the control unit of the self-propelled module 300-1 may be further configured to receive and process navigation commands and/or control commands from a control device which may be part of any one of the systems for moving a payload described herein and to control the operation of the self-propelled module 300-1, including performance of the above functions assigned to the control unit of the self-propelled module 300-1, depending on said navigation commands and/or control commands.

Furthermore, the main docking module 330 provided to the housing 310 in the self-propelled module 300-1 may be brought into detachable interaction with at least one of the guides 140 with which the housing 110 of at least one of the aircraft apparatuses 100 forming the above cluster aircraft apparatus may be provided, thus enabling the self-propelled module 300-1 to be mounted or suspended on said at least one guide 140 and enabling the self-propelled module 300-1 to move along a cluster guide comprising said at least one guide 140 and related to said cluster aircraft apparatus and/or may be brought into interaction with at least one of the guides 240 which may be provided to the housing 210 of at least one of the below-described payloads 200 forming the below-described cluster payload, thus enabling the self-propelled module 300-1 to be mounted or suspended on said at least one guide 240 and enabling the self-propelled module 300-1 to move along a cluster guide comprising said at least one guide 240 and related to said cluster payload.

In one of alternative embodiments of the present invention, the housing 310 in the self-propelled module 300-1 may be provided, instead of the main docking module 330 shown in Fig. 3.1, with a guide 360 characteristic of the below-described self-propelled module 300-2, wherein such guide 360 may be brought into detachable interaction with at least one of the docking modules 130 which may be provided to the housing 110 of at least one of the aircraft apparatuses 100 in the above first and fourth embodiments of the system for moving a payload and/or may be brought into detachable interaction with at least one of the docking modules 230 which may be provided to the housing 210 of at least one of the below-described payloads 200, thus enabling, in such alternative embodiment of the present invention, docking of the self-propelled module 300-1 to said at least one aircraft apparatus 100 or said at least one payload 200 and enabling said at least one aircraft apparatus 100 or said at least one payload 200 to move along said guide 360 provided to the housing 310 in the self-propelled module 300-1. Furthermore, thanks to the guide 360 which may be provided to the housing 310 in the self-propelled module 300-1 according to this alternative embodiment of the present invention, the self-propelled module 300-1 may be detachably docked to at least one of the above aircraft apparatuses 100 forming a cluster aircraft apparatus, in particular by way of bringing the guide 360 into detachable interaction with at least one of the docking modules 130 which may be provided to the housing 110 of said at least one aircraft apparatus 100, and/or may be detachably docked to at least one of the below-described payloads 200 forming a cluster payload, in particular by way of bringing the guide 360 into detachable interaction with at least one of the docking modules 230 which may be provided to the housing 210 of said at least one payload 200.

Fig. 3.2 shows a self-propelled module 300-2 comprising a housing 310 provided with a single guide 360 and two unmanned aerial vehicles 320 each of which is provided with an air propeller 325 and each of which is detachably docked or connected to said housing 310 by means of a corresponding one of the two docking modules 350, wherein the auxiliary docking modules 350 may be configured analogously to the above docking module 130 according to any one of embodiments thereof described herein and the guide 360 may be configured analogously to the above guide 140 according to any one of embodiments thereof described herein. It should be noted that the unmanned aerial vehicles 320 with the air propellers 325 thereof, detachably connected to the housing 310 of the self-propelled module substantially perform the function of air propulsion units for the self-propelled module 300-2, enabling that self-propelled module 300-2 to move in the air or fly. It should also be noted that each unmanned aerial vehicle 320 with the air propeller 325 thereof in the self-propelled module 300-2 is substantially an independent unmanned aerial vehicle provided with its own control module configured to control the operation of that unmanned aerial vehicle 320 and configured to receive navigation commands and/or control commands from at least the control unit of the self-propelled module 300-2 and/or from the herein-described control device of the system to enable the implementation of the process of controlling the operation of that unmanned aerial vehicle 320 based on said received navigation commands and/or control commands, and provided with docking means or a docking module akin to one of the docking modules described herein to enable detachable docking to an auxiliary docking module 350 related to the housing 310 of the self-propelled module, and, accordingly, to enable detachable docking of such unmanned aerial vehicle 320 to the housing 310 of the self-propelled module.

It should also be noted that the guide 360 provided to the housing 310 in the self-propelled module 300-2 may be brought into detachable interaction with at least one of the docking modules 130 which may be provided to the housing 110 of at least one of the aircraft apparatuses 100 in the above first and fourth embodiments of the system for moving a payload and/or may be brought into detachable interaction with at least one of the docking modules 230 which may be provided to the housing 210 of at least one of the below-described payloads 200, thus enabling docking of the self-propelled module 300-2 to said at least one aircraft apparatus 100 or said at least one payload 200 and enabling said at least one aircraft apparatus 100 or said at least one payload 200 to move along said guide 360 provided to the housing 310 in the self-propelled module 300-2. Furthermore, thanks to the guide 360 provided to the housing 310 in the self-propelled module 300-2, the self-propelled module 300-2 may be detachably docked to at least one of the above aircraft apparatuses 100 forming a cluster aircraft apparatus, in particular by way of bringing the guide 360 into detachable interaction with at least one of the docking modules 130 which may be provided to the housing 110 of said at least one aircraft apparatus 100 and/or may be detachably docked to at least one of the below-described payloads 200 forming a cluster payload, in particular by way of bringing the guide 360 into detachable interaction with at least one of the docking modules 230 which may be provided to the housing 210 of said at least one payload 200.

Furthermore, analogously to the self-propelled module 300-1 shown in Fig. 3.1, the housing 310 in the self-propelled module 300-2 shown in Fig. 3.2 is provided with a wheeled propulsion unit 340 in the form of a wheel base enabling movement of the self-propelled module 300-2 over the ground surface (over land) or over the surface of a stationary or movable physical object which may at least partially be present in air space, ground space, above-water space and/or underwater space. Thus, the wheeled propulsion unit 340 in the self-propelled module 300-2 shown in Fig. 3.2 is substantially an additional means of movement provided to the housing 310 of the self-propelled module further to the unmanned aerial vehicles 320 with the air propellers 325 thereof, detachably connected to said housing 310.

In one of the embodiments of the present invention, the housing 310 in the self-propelled module 300-2 shown in Fig. 3.2 may be provided with one or more air propulsion units (for example, one, two, three, four, five, six, seven, nine, ten or more air propulsion units) enabling the self-propelled module 300-2 to move through the air and undetachably secured to said housing 310.

In another embodiment of the present invention, the housing 310 in the self-propelled module 300-2 shown in Fig. 3.2 may be provided with one or more unmanned aerial vehicles 320 with the air propellers 325 thereof (for example, with one, two, three, four, five, six, seven, nine, ten or more such unmanned aerial vehicles) detachably secured to said housing 310 using auxiliary docking modules 350. In one of the variations of this embodiment of the present invention, at least one of the unmanned aerial vehicles 320 which may be detachably docked to the housing 310 of the self-propelled module may be provided with one or more air propellers 325 (for example, with one, two, three, four, five, six, seven, eight, nine, ten or more such air propellers 325) enabling the self-propelled module 300-2 to move in the air or fly.

In yet another embodiment of the present invention, the housing 310 in the self-propelled module 300-2 shown in Fig. 3.2 may be provided with one or more unmanned aerial vehicles 320 with the air propellers 325 thereof, detachably secured to the housing 310 of the self-propelled module, and may be further provided with one or more additional air propulsion units undetachably secured to the housing 310 of the self-propelled module.

Furthermore, the self-propelled module 300-2 comprises a control unit (not shown) mounted in the interior of the housing 310 and configured to control the operation of the self-propelled module 300-2, including to generally control the operation of the unmanned aerial vehicles 320 and particularly the operation of the air propellers 325 thereof.

The control unit of the self-propelled module 300-2 is configured to present control commands to at least one or each of the unmanned aerial vehicles 320 so as to enable actuation of the air propeller 325 of said unmanned aerial vehicle 320, thus enabling the self-propelled module 300-2 to move through the air or fly due to the thrust generated by said actuated air propeller 325, wherein the actuation of the air propellers 325 of the both unmanned aerial vehicles 320 performing the function of air propulsion units of the self-propelled module 300-2 in a manner to provide for substantially simultaneous or parallel operation thereof increases the carrying capacity of such self-propelled module 300-2.

Furthermore, the control unit of the self-propelled module 300-2 is configured to present control commands to at least one or each of the unmanned aerial vehicles 320 so as to enable undocking thereof from the housing 310 as a result of withdrawal of said unmanned aerial vehicle 320 from interaction with the corresponding auxiliary docking module 350.

The control unit of the self-propelled module 300-2 is also configured to present control commands to at least one of the unmanned aerial vehicles 320 present in the air space or accommodated in parking stations (not shown) so as to enable direction of said at least one unmanned aerial vehicle 320 to said self-propelled module 300-2 for detachable docking of said directed unmanned aerial vehicle 320 to the housing 310 of the self-propelled module by way of bringing that unmanned aerial vehicle 320 into interaction with one of free auxiliary docking modules 350.

Furthermore, the control unit of the self-propelled module 300-2 is configured to present control commands to an additional means of movement of the self-propelled module 300-2 in the form of a wheeled propulsion unit 340 to actuate same so as to enable that self-propelled module 300-2 to move over the ground surface (over land) or over the surface of a stationary or movable physical object which may at least partially be present in air space, ground space, above-water space and/or underwater space.

It should be noted that in order to enable the use of the self-propelled module 300-2 as part of one of the systems for moving a payload described herein, the control unit of the self-propelled module 300-2 is further configured to communicate via a communication network with the control module of at least one of the aircraft apparatuses 100 and/or with the control module of the payload 200 (if such module is present in the housing of the payload 200). Furthermore, the control unit of the self-propelled module 300-2 may be further configured to receive and process navigation commands and/or control commands from a control device which may be part of any one of the systems for moving a payload described herein and to control the operation of the self-propelled module 300-2, including performance of the above functions assigned to the control unit of the self-propelled module 300-2, depending on said navigation commands and/or control commands.

Furthermore, the guide 360 provided to the housing 310 in the self-propelled module 300-2 may be brought into detachable interaction with at least one of the docking modules 130 with which the housing 110 of at least one of the aircraft apparatuses 100 forming the above cluster aircraft apparatus may be provided, thus enabling said cluster aircraft apparatus 100 to be mounted or suspended on said guide 360 and enabling the movement of said cluster aircraft apparatus along said guide 360, and/or may be brought into interaction with at least one of the docking modules 230 with which the housing 210 of at least one of the payloads 200 forming the below-described cluster payload may be provided, thus enabling said cluster payload to be mounted or suspended on said guide 360 and enabling said cluster payload to move along said guide 360.

In one of alternative embodiments of the present invention, the housing 310 in the self-propelled module 300-2 may be provided, instead of the guide 360 shown in Fig. 3.2, with the main docking module 330 characteristic of the above self-propelled module 300-1, wherein such main docking module 330 may be brought into detachable interaction with at least one of the guides 140 with which the housing 110 of at least one of the aircraft apparatuses 100 in the above first, second, third and fourth embodiments of the system for moving a payload may be provided and/or may be brought into detachable interaction with at least one of the guides 240 which may be provided to the housing 210 of at least one of the below-described payloads 200, thus enabling, in such alternative embodiment of the present invention, the self-propelled module 300-2 to dock to said at least one aircraft apparatus 100 or said at least one payload 200 and enabling said self-propelled module 300-2 to move along said at least one guide. Furthermore, thanks to the main docking module 330 which may be provided to the housing 310 in the self-propelled module 300-2 according to this alternative embodiment of the present invention, the self-propelled module 300-2 may be detachably docked to at least one of the above aircraft apparatuses 100 forming a cluster aircraft apparatus, in particular by way of bringing the docking module 330 into detachable interaction with at least one of the guides 140 which may be provided to the housing 110 of said at least one aircraft apparatus 100, and/or may be detachably docked to at least one of the below-described payloads 200 forming a cluster payload, in particular by way of bringing the docking module 330 into detachable interaction with at least one of the guides 240 which may be provided to the housing 210 of said at least one payload 200.

Fig. 3.3 shows a self-propelled module 300-3 comprising a housing 310 provided with one main docking module 330 and two unmanned aerial vehicles 320 each of which is provided with an air propeller 325 and each of which is detachably docked or connected to said housing 310 by means of the corresponding one of two auxiliary docking modules 350, and comprising a control unit (not shown) disposed in said housing 310. Thus, one skilled in the art would readily appreciate that the self-propelled module 300-3 is configured generally analogously to the above self-propelled module 300-1 shown in Fig. 3.1; accordingly, the description of the housing 310, main docking module 330, unmanned aerial vehicles 320, air propellers 325 of unmanned aerial vehicles and auxiliary docking modules 350 which description is provided above in relation to the self-propelled module 300-1, including descriptions of particular and alternative embodiments of the above functional components of the self-propelled module 300-1 should be construed as referring to the self-propelled module 300-3 as well. Furthermore, the above functional capabilities of the control unit of the self-propelled module 300-1 are equally applicable to the control unit of the self-propelled module 300-3 as well.

However, in contrast to the self-propelled module 300-1, in the self-propelled module 300-3, the housing is provided with a caterpillar propulsion unit 342 in the form of a caterpillar track performing the function of an additional means of movement enabling movement of the self-propelled module 300-3 over the ground surface (over land) with poorly passable road conditions. In other words, in the self-propelled module 300-3, the caterpillar propulsion unit 342 provided to the housing 310 of the self-propelled module complements the unmanned aerial vehicles 320 with the air propellers 325 thereof, detachably connected to said housing 310. In turn, the control unit of the self-propelled module 300-3 is configured to present control commands to the additional means of movement of the self-propelled module 300-3 in the form of a caterpillar propulsion unit 342 for actuating same so as to enable that self-propelled module 300-3 to move over a poorly passable ground surface (over land).

Furthermore, analogously to the self-propelled module 300-1, the main docking module 330 provided to the housing 310 in the self-propelled module 300-3 may be brought into detachable interaction with at least one of the guides 140 which may be provided to the housing 110 of at least one of the aircraft apparatuses 100 in the above first, second, third and fourth embodiments of the system for moving a payload and/or may be brought into interaction with at least one of the guides 240 which may be provided to the housing 210 of at least one of the below-described payloads 200, thus enabling the self-propelled module 300-3 to be mounted or suspended on said at least one guide and enabling the self-propelled module 300-3 to move along said at least one guide.

Furthermore, the main docking module 330 provided to the housing 310 in the self-propelled module 300-3 may be brought into detachable interaction with at least one of the guides 140 which may be provided to the housing 110 of at least one of the aircraft apparatuses 100 forming the above cluster aircraft apparatus, thus enabling the self-propelled module 300-3 to be mounted or suspended on said at least one guide 140 and enabling the self-propelled module 300-3 to move along a cluster guide comprising said at least one guide 140 and related to said cluster aircraft apparatus and/or may be brought into interaction with at least one of the guides 240 which may be provided to the housing 210 of at least one of the below-described payloads 200 forming the below-described cluster payload, thus enabling the self-propelled module 300-3 to be mounted or suspended on said at least one guide 240 and enabling the self-propelled module 300-3 to move along a cluster guide comprising said at least one guide 240 and related to said cluster payload.

In one of alternative embodiments of the present invention, the housing 310 in the self-propelled module 300-3 may be provided, instead of the main docking module 330, with a guide 360, wherein such guide may be brought into detachable interaction with at least one of the docking modules 130 which may be provided to the housing 110 of at least one of the aircraft apparatuses 100 in the above first and fourth embodiments of the system for moving a payload and/or may be brought into detachable interaction with at least one of the docking modules 230 which may be provided to the housing 210 of at least one of the below-described payloads 200, thus enabling, in such alternative embodiment of the present invention, docking of the self-propelled module 300-3 to said at least one aircraft apparatus 100 or said at least one payload 200 and enabling said at least one aircraft apparatus 100 or said at least one payload 200 to move along said guide 360 provided to the housing 310 in the self-propelled module 300-3. Furthermore, thanks to the guide 360 which may be provided to the housing 310 in the self-propelled module 300-3 according to this alternative embodiment of the present invention, the self-propelled module 300-3 may be detachably docked to at least one of the above aircraft apparatuses 100 forming a cluster aircraft apparatus, in particular by way of bringing the guide 360 into detachable interaction with at least one of the docking modules 130 which may be provided to the housing 110 of said at least one aircraft apparatus 100, and/or may be detachably docked to at least one of the below-described payloads 200 forming a cluster payload, in particular by way of bringing the guide 360 into detachable interaction with at least one of the docking modules 230 which may be provided to the housing 210 of said at least one payload 200.

Fig. 3.3 also shows a self-propelled module 300-4 comprising a housing 310 provided with one main docking module 330 and two unmanned aerial vehicles 320 each of which is provided with an air propeller 325 and each of which is detachably docked or connected to said housing 310 by means of the corresponding one of two auxiliary docking modules 350, and comprising a control unit (not shown) disposed in said housing 310. Thus, one skilled in the art would readily appreciate that the self-propelled module 300-3 is configured generally analogously to the above self-propelled module 300-1 shown in Fig. 3.1; accordingly, the description of the housing 310, main docking module 330, unmanned aerial vehicles 320, air propellers 325 of unmanned aerial vehicles and auxiliary docking modules 350 which description is provided above in relation to the self-propelled module 300-1, including descriptions of particular and alternative embodiments of the above functional components of the self-propelled module 300-1 should be construed as referring to the self-propelled module 300-4 as well. Furthermore, the above functional capabilities of the control unit of the self-propelled module 300-1 are equally applicable to the control unit of the self-propelled module 300-4 as well.

However, in contrast to the self-propelled module 300-1, in the self-propelled module 300-3, the housing is provided with a snowmobile propulsion unit 344 in the form of skids performing the function of an additional means of movement enabling movement of the self-propelled module 300-3 over a snowy or icy ground surface (over land). In other words, in the self-propelled module 300-4, the snowmobile propulsion unit 344 provided to the housing 310 of the self-propelled module complements the unmanned aerial vehicles 320 with the air propellers 325 thereof, detachably connected to said housing 310. In turn, the control unit of the self-propelled module 300-4 is configured to present control commands to one or each of the unmanned aerial vehicles 320 for actuating same in an operating mode enabling the self-propelled module 300-4 to move over snowy and/or icy ground with using an additional means of movement in the form of the snowmobile propulsion unit 344.

Furthermore, analogously to the self-propelled module 300-1, the main docking module 330 provided to the housing 310 in the self-propelled module 300-4 may be brought into detachable interaction with at least one of the guides 140 which may be provided to the housing 110 of at least one of the aircraft apparatuses 100 in the above first, second, third and fourth embodiments of the system for moving a payload and/or may be brought into interaction with at least one of the guides 240 which may be provided to the housing 210 of at least one of the below-described payloads 200, thus enabling the self-propelled module 300-4 to be mounted or suspended on said at least one guide and enabling the self-propelled module 300-4 to move along said at least one guide.

Furthermore, the main docking module 330 provided to the housing 310 in the self-propelled module 300-4 may be brought into detachable interaction with at least one of the guides 140 which may be provided to the housing 110 of at least one of the aircraft apparatuses 100 forming the above cluster aircraft apparatus, thus enabling the self-propelled module 300-4 to be mounted or suspended on said at least one guide 140 and enabling the self-propelled module 300-4 to move along a cluster guide comprising said at least one guide 140 and related to said cluster aircraft apparatus and/or may be brought into interaction with at least one of the guides 240 which may be provided to the housing 210 of at least one of the below-described payloads 200 forming the below-described cluster payload, thus enabling the self-propelled module 300-4 to be mounted or suspended on said at least one guide 240 and enabling the self-propelled module 300-3 to move along a cluster guide comprising said at least one guide 240 and related to said cluster payload.

In one of alternative embodiments of the present invention, the housing 310 in the self-propelled module 300-4 may be provided, instead of the main docking module 330, with a guide 360, wherein such guide may be brought into detachable interaction with at least one of the docking modules 130 which may be provided to the housing 110 of at least one of the aircraft apparatuses 100 in the above first and fourth embodiments of the system for moving a payload and/or may be brought into detachable interaction with at least one of the docking modules 230 which may be provided to the housing 210 of at least one of the below-described payloads 200, thus enabling, in such alternative embodiment of the present invention, docking of the self-propelled module 300-4 to said at least one aircraft apparatus 100 or said at least one payload 200 and enabling said at least one aircraft apparatus 100 or said at least one payload 200 to move along said guide 360 provided to the housing 310 in the self-propelled module 300-4. Furthermore, thanks to the guide 360 which may be provided to the housing 310 in the self-propelled module 300-4 according to this alternative embodiment of the present invention, the self-propelled module 300-4 may be detachably docked to at least one of the above aircraft apparatuses 100 forming a cluster aircraft apparatus, in particular by way of bringing the guide 360 into detachable interaction with at least one of the docking modules 130 which may be provided to the housing 110 of said at least one aircraft apparatus 100, and/or may be detachably docked to at least one of the below-described payloads 200 forming a cluster payload, in particular by way of bringing the guide 360 into detachable interaction with at least one of the docking modules 230 which may be provided to the housing 210 of said at least one payload 200.

Furthermore, as shown in Fig. 3.3, at least one or each of the control units of the self-propelled modules 300-3, 300-4, which control units are configured to mutually communicate over a communication network, may further enable detachable docking or detachable connection of those self-propelled modules 300-3, 300-4 to one another to form a cluster self-propelled module 300, wherein the docking of the self-propelled modules 300-3, 300-4 to one another may be performed by way of bringing a free auxiliary docking module 350 related to the self-propelled module 300-3 into detachable interaction with a free auxiliary docking module 350 related to the self-propelled module 300-4. To enable bringing of auxiliary docking modules 350 related to the self-propelled modules 300-3, 300-4 into detachable interaction with one another, the control unit of at least one or each of the self-propelled modules 300-3, 300-4 is configured to generate control commands enabling undocking, one-by-one, of an unmanned aerial vehicle from the housing 310 of each of the self-propelled modules 300-3, 300-4 to be docked to one another, thus, in turn, enabling release, one-by-one, of the auxiliary docking modules 350 in each of the self-propelled modules 300-3, 300-4, which may be involved or used for detachable docking or detachable connection of said self-propelled modules 300-3, 300-4 to one another. It should be noted that the unmanned aerial vehicles 320, each of which is undocked from the housing 310 of the corresponding one of the self-propelled modules 300-3, 300-4, may be directed to at least one parking station for replenishing the range thereof or parking and/or may be directed to other self-propelled modules which require unmanned aerial vehicles 320 for movement thereof through the air so as to enable detachable docking to free auxiliary docking modules of said other self-propelled modules. Furthermore, the control unit of at least one or each of the self-propelled modules 300-3, 300-4 may be further configured to generate control commands enabling detachable docking of one or more unmanned aerial vehicles 320 to the housing 310 of at least one or each of the self-propelled modules 300-3, 300-4 provided that there are present free auxiliary docking modules 350 with which said unmanned aerial vehicles 320 are to come into detachable interaction on said housing 310. Furthermore, the control unit of at least one or each of the self-propelled modules 300-3, 300-4 may be further configured to generate control commands enabling undocking of the self-propelled modules 300-3, 300-4 forming a cluster self-propelled module 300 to form two distinct self-propelled modules 300-3, 3004 each of which is provided with at least one free auxiliary docking module 350 released as a result of the completion of said process of undocking the self-propelled modules 300-3, 300-4.

In an alternative embodiment of the present invention, at least one or each of the control units of the self-propelled modules 300-3, 300-4 may enable the performance of the above process of undocking the unmanned aerial vehicles 320 from the housings 310 of the self-propelled modules 300-3, 300-4, followed by enabling the performance of the above process of detachably docking or detachably connecting the housings 310 of the self-propelled modules 300-3, 300-4 to one another in response to the control commands of the control device being part of the same system for moving a payload to which system said self-propelled modules 300-3, 300-4 relate. Furthermore, in this alternative embodiment of the present invention, such control device may also enable docking of one or more unmanned aerial vehicles 320 to the housing 310 of at least one or each of the self-propelled modules 300-3, 300-4 provided that there are present free auxiliary docking modules 350 with which said housing 310 must be provided and/or enable undocking of the self-propelled modules 300-3, 300-4 forming a cluster self-propelled module 300 to form two distinct self-propelled modules 300-3, 300-4 each of which has at least one free auxiliary docking module 350 released as a result of the completion of said process of undocking the self-propelled modules 300-3, 300-4.

In one of the embodiments of the present invention, the cluster self-propelled module 300 may be formed from two or more above self-propelled modules (two, three, four, five, six, seven, eight, nine, ten or more self-propelled modules) each of which may be of the type described herein or may be of any other type known in the prior art, wherein such cluster self-propelled module may comprise identical self-propelled modules (for example, only the self-propelled modules 300-1, the self-propelled modules 300-2, the self-propelled modules 300-3 or the self-propelled modules 300-4) as well as at least partially or completely different self-propelled modules in any combination of the types described herein and known in the prior art. Thus, the sizes, types, materials of manufacture and/or the like of the self-propelled modules being part of any cluster self-propelled module 300 are not specifically limited in any way. Furthermore, the cluster self-propelled module 300 formed from a pair, group or combination of identical or different self-propelled modules may have any size (including spatial extent) and/or any shape suitable for undocking of at least a portion or all of the self-propelled modules forming such cluster self-propelled module 300 and for detachable docking, to such cluster self-propelled module 300, of one or more additional self-propelled modules, one or more additional cluster self-propelled modules, one or more aircraft apparatuses 100, one or more cluster aircraft apparatuses, one or more payloads 200 and/or one or more cluster payloads.

It should also be noted that at least one or each of the control units of the cluster self-propelled module 300 or the control device of the system for moving a payload which system comprises said cluster self-propelled module 300 may be further configured to enable undocking of at least a portion or all of self-propelled modules forming said cluster self-propelled module 300. Furthermore, at least one or each of the control units of the cluster self-propelled module 300 or the control device of the system for moving a payload which system comprises said cluster self-propelled module 300 may be further configured to enable detachable docking, to such cluster self-propelled module 300, of one or more additional self-propelled modules, one or more additional cluster self-propelled modules, one or more above cluster aircraft apparatuses 100, one or more above cluster aircraft apparatuses, one or more below-described payloads 200 and/or one or more below-described cluster payloads. It should also be noted that, depending on the specific embodiment of the self-propelled modules being part of the cluster self-propelled module 300, the process of detachably docking said cluster self-propelled module 300 to one or more additional self-propelled modules, one or more additional cluster self-propelled modules, one or more above aircraft apparatuses 100, one or more above cluster aircraft apparatuses, one or more below-described payloads 200 and/or one or more below-described cluster payloads may be performed in two possible manners: 1) by way of bringing at least one or each of the main docking modules 330 provided to the housings 310 of the self-propelled modules forming said cluster self-propelled module 300 into detachable interaction with at least one of the guides which may be provided to the housings of said one or more additional self-propelled modules, one or more additional cluster self-propelled modules, one or more above aircraft apparatuses 100, one or more above cluster aircraft apparatuses, one or more below-described payloads 200 and/or one or more below-described cluster payloads, respectively; 2) by way of bringing at least one or each of the guides 360 provided to the housings 310 of the self-propelled modules forming said cluster self-propelled module 300 into detachable interaction with at least one of the main docking modules which may be provided to the housings of said one or more additional self-propelled modules, one or more additional cluster self-propelled modules, one or more above aircraft apparatuses 100, one or more above cluster aircraft apparatuses, one or more below-described payloads 200 and/or one or more below-described cluster payloads, respectively.

Thus, in view of the description provided above in relation to the self-propelled modules and cluster self-propelled modules, in the present invention there may be an embodiment of the system for moving a payload, comprising (i) one or more above aircraft apparatuses 100 or at least one above cluster aircraft apparatus formed from two or more aircraft apparatuses 100; and (ii) one or more above self-propelled modules, at least one or each of which is docked to at least one of the aircraft apparatuses 100 or at least one of the aircraft apparatuses 100 forming said at least one cluster aircraft apparatus, respectively, by way of bringing at least one of the guides of said self-propelled module into interaction with the docking module of said at least one aircraft apparatus so as to enable movement of said aircraft apparatus and the docked thereto aircraft apparatuses along said at least one guide of the self-propelled module or by way of bringing at least one of the docking modules of said self-propelled module into interaction with the guide of said at least one aircraft apparatus so as to enable movement of the self-propelled module along said guide of the aircraft apparatus.

In some embodiments of the present invention, the housing 310 of one of the self-propelled modules provided each with one or more main docking modules 330 and forming a cluster self-propelled module 300 may be further provided with a self-propelled module movement unit (not shown) being under control of the control unit of said self-propelled module and configured to move the self-propelled module along a guide related to the aircraft apparatus 100 or the payload 200 or along a cluster guide related to the above cluster aircraft apparatus or to the below-described cluster payload. It should be noted that in this embodiment of the present invention, the movement module of the self-propelled module may be generally configured analogously to the above payload movement module or guide movement module.

In other embodiments of the present invention, the control unit of one of the self-propelled modules provided each with one or more main docking modules 330 and forming a cluster self-propelled module 300 may be further configured to receive a movement pattern of the self-propelled module from the control device of the system for moving a payload which system comprises said cluster self-propelled module 300 so as to enable said self-propelled module to move along a guide related to the aircraft apparatus 100 or payload 200 or along a cluster guide related to the above cluster aircraft apparatus or to the below-described cluster payload by means of the movement module of the self-propelled module (not shown) in accordance with said movement pattern, wherein the movement pattern of the self-propelled module may be pre-generated based on data relating to said guide or said cluster guide and which data may be updated in the real-time mode or in real time according to changes in the structure or architecture of the system for moving a payload which system will be based on the above aircraft apparatus 100, payload 200, cluster aircraft apparatus or cluster payload.

In other embodiments of the present invention, instead of at least one or each of the unmanned aerial vehicles 320 which may be provided to the housing 310 of any one of the above self-propelled modules, there may be used the above aircraft apparatus 100, the housing 110 of which may be provided with docking modules 130 for detachable docking of the aircraft apparatus 100 to the housing 310 of the self-propelled module, wherein, to enable the movement of said self-propelled module through the air, at least one of said docking modules 130 of the aircraft apparatus must come into detachable interaction with one or more auxiliary docking modules 350 provided to the housing 310 of said self-propelled module such that the aircraft apparatus 100 docked to said self-propelled module may perform the function of an air propulsion unit instead of the unmanned aerial vehicle 320 or unmanned aerial vehicles 320.

In alternative embodiments of the present invention, an additional means of movement which may be provided to the housing 310 in one or more self-propelled modules may be configured, for example, at least in the form of one of the group of propulsion units comprising: a sail, marine propeller, Voith Schneider propeller, bladed propeller, water jet propulsion unit, paddle wheel, oar-type propulsion unit, fin propulsion unit, fishtail propulsion unit, wheeled chassis of one or more wheels, pneumatic-tire roller propulsion unit, rotary-cutting propulsion unit, caterpillar propulsion unit, half-track propulsion unit, ski-caterpillar propulsion unit, screw-type propulsion unit, walking-type propulsion unit, electromagnetic propulsion unit, jet propulsion unit, flapping-wing propulsion unit, walking wheeled propulsion unit, square wheel propulsion unit, vibration propulsion unit, amoebic type propulsion unit, sectional wheel propulsion unit and inertial propulsion unit. Furthermore, in other alternative embodiments of the present invention, the housing 310 in one or more self-propelled modules may be provided with two or more identical or different additional means of movement configured in the form of a propulsion unit of the above group of propulsion units of various types, for example, it may be provided with two identical oar-type propulsion units or may be provided with a combination of one bladed air propeller and one oar-type propulsion unit.

Furthermore, in some embodiment of the present invention, at least one or each of one or more auxiliary docking modules 350 which may be provided to the housing 310 in the self-propelled module according to any one of the embodiments thereof described herein, known in the prior art or appreciated by one skilled in the art may be arranged on one of the sides of the housing 310 of the self-propelled module, distinct from the remaining auxiliary docking modules of said auxiliary docking modules 350. In one of the variations of this embodiment of the present invention, one or more auxiliary docking modules 350 which may be provided to the housing 310 in the self-propelled module according to any one of embodiments thereof described herein, known in the prior art or appreciated by one skilled in the art may be arranged on one and the same side of the housing 310 of the self-propelled module or on different sides of the housing 310 of the self-propelled module.

Furthermore, in some other embodiment of the present invention, at least one or each of one or more main docking modules 330 which may be provided to the housing 310 in the self-propelled module according to any one of the embodiments thereof described herein, known in the prior art or appreciated by one skilled in the art may be arranged on one of the sides of the housing 310 of the self-propelled module, distinct from the remaining main docking modules of said main docking modules 330. In one of the variations of this embodiment of the present invention, one or more main docking modules 330 which may be provided to the housing 310 in the self-propelled module according to any one of embodiments thereof described herein, known in the prior art or appreciated by one skilled in the art may be arranged on one and the same side of the housing 310 of the self-propelled module or on different sides of the housing 310 of the self-propelled module.

Furthermore, in some other embodiment of the present invention, at least one or each of one or more guides 360 which may be provided to the housing 310 in the self-propelled module according to any one of the embodiments thereof described herein, known in the prior art or appreciated by one skilled in the art may be arranged on one of the sides of the housing 310 of the self-propelled module, distinct from the remaining guides 360 of the self-propelled module. In one of the variations of this embodiment of the present invention, one or more guides 360 which may be provided to the housing 310 in the self-propelled module according to any one of embodiments thereof described herein, known in the prior art or appreciated by one skilled in the art may be arranged on one and the same side of the housing 310 of the self-propelled module or on different sides of the housing 310 of the self-propelled module.

### Payload

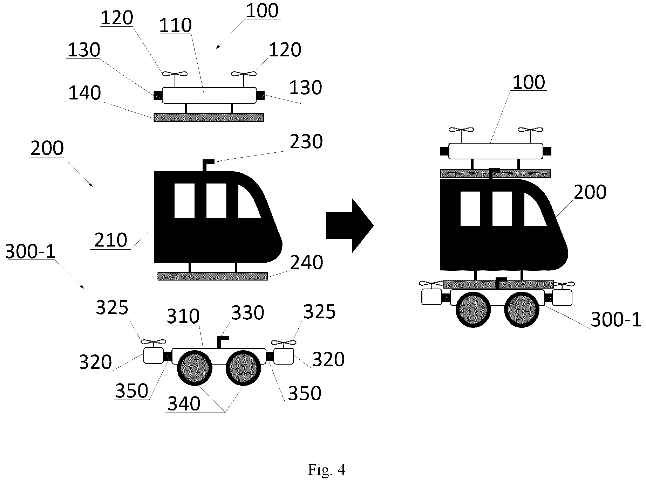

Figs. 4-6 show an illustrative embodiment of a payload 200 in the form of a passenger cabin comprising a housing 210 in the form of a fuselage configured to accommodate therein people (for example, one or more passengers and/or a pilot), various living beings and/or various cargos of any type. It should be noted that the payload 200 may be used to deliver, move or transport people, various living beings and/or cargos of various types (solid, gaseous, liquid, fluid, bulk, viscous, radioactive, chemical cargos and/or the like) through the air, over ground (land), over water and/or under water, thus allowing the payload to be referred to as a means of transportation, transporting module or transport module.

In one of the embodiments of the present invention, in the internal space of the housing 210 in the payload 200 there may be provided a pilot seat which may accommodate a pilot (not shown) capable of operating a means of transport, which will be based on one or more docked to one another payloads 200, by using the instrument panel and control elements which may also be disposed in said housing 210. Furthermore, in this embodiment of the present invention, in the internal space of the housing 210 in the payload 200, in addition to a pilot, there may be further accommodated at least one passenger, at least one luggage item of a passenger and/or at least one cargo item, wherein said pilot, passengers, cargo items and luggage items of passengers may be accommodated in corresponding spots in the common internal space or may be accommodated each in its distinct zone at least partially defined by one or more partitions or in a distinct compartment at least partially defined by one or more partitions.

In another embodiment of the present invention, the pilot seat may be disposed in the pilot cabin provided in the internal space of the housing 210 of the payload and separated by a partition from the remainder of the internal space of the housing 210 which, in turn, may be divided by another partition into a passenger compartment in which there may be installed one or more passenger seats for accommodating passengers therein and into a luggage compartment or cargo compartment in which there may be accommodated cargo (in particular, one or more cargo items) and/or there may be accommodated passenger luggage (in particular, one or more passenger luggage items), wherein said cargo items, passenger luggage items and/or passenger seats may be disposed on or attached to the bottom, floor, walls of the housing 210. In one of the variations of this embodiment of the present invention, the passenger compartment, instead of or further to passenger seats, may provide the following: (i) rails installed on the lateral walls, floor and/or ceiling of the housing 210 for accommodating passengers in any position in the housing 210, for example, sitting or standing on the floor of the housing 210; (ii) couches, beds or benches secured to the floor, walls and/or ceiling of the housing 210 for accommodating thereon passengers in a sitting, standing and/or lying position; (iii) specialized areas for accommodating disabled people in a sitting, standing and/or lying position; (iv) specialized areas for wheelchairs used by disabled people; (v) specialized areas for accommodating baby cots used by infants and (if necessary) specialized areas for accompanying persons; and/or (vi) specialized areas for accommodating gurneys for transporting patients used by bedridden patients. It should be noted that the quantity of passengers in the passenger compartment may be from one person to several tens or even hundreds of people without making any limitations, wherein said quantity of passengers is substantially limited only by the area of the passenger compartment within the internal space of the housing 210. In another variation of this embodiment of the present invention, in the cargo compartment of the housing 210 there may be enabled not only accommodation of cargo and/or passenger luggage on the floor of the fuselage 102 but also attachment thereof in the cargo compartment of the housing 210 using conventional fastening means known in the prior art, wherein in the cargo compartment of the housing 210 there may be further provided shelves, hangers, crates and other carrying means attached to the floor, ceiling and/or lateral walls of the housing 210 and allowing additional cargo items and/or passenger luggage items to be accommodated in the cargo compartment of the housing 210. In another variation of this embodiment of the present invention, the areas for passenger luggage, including shelves, hangers, boxes, and other carrying means for accommodating passenger luggage items, may only be provided in the passenger compartment of the housing 210 further to the above variants of means for accommodating passengers in said passenger compartment. One skilled in the art would readily appreciate that cargo items and/or passenger luggage items may be at least partially secured or fixed also from the external side of the housing 210 of a payload using suitable fastening means known in the prior art (for example, using a dedicated enclosed-type attached equipment used in airplanes, cars, motorcycles, helicopters, bicycles and the like). It should be noted that the above pilot cabin, passenger compartment and cargo compartment in the housing 210 of a payload may be configured in general analogously to the corresponding compartments of airplanes, helicopters, buses, cars, ships, power boats and the like.

In yet another embodiment of the present invention, the pilot seat may be disposed in the pilot cabin in the internal space of the housing 210 of the payload which pilot cabin is separated by a partition from the remaining portion of the internal space of the housing 210 in which portion, in turn, on the bottom, ceiling and/or floor of the housing 210 there may be accommodated or secured passengers (for example, in passenger seats), cargo items and passenger luggage items. Furthermore, an embodiment of the present invention is possible in which in the internal space of the housing 210 there may be accommodated only a pilot and passengers; an embodiment of the present invention is possible in which in the internal space of the housing 210 there may be accommodated only a pilot and cargo; an embodiment of the present invention is possible in which in the internal space of the housing 210 there may be accommodated only passengers and cargo; an embodiment of the present invention is possible in which in the internal space of the housing 210 there may be accommodated only passengers; an embodiment of the present invention is possible in which in the internal space of the housing 210 there may be accommodated only a pilot in the pilot seat; and an embodiment of the present invention is possible in which in the internal space of the housing 210 there may be accommodated only cargo.

It should be noted that the control elements which may be installed in the internal space of the housing 210, which internal space is defined by the walls of the housing 210 from the internal side thereof, in the payload shown in Figs. 3-6 substantially allow to control the payload 200 in semi-automatic mode (i.e. a combination of manual control by a pilot and automatic control using autopilot) and enable manual input, by the pilot present in the pilot seat and monitoring the readings of the instruments on the instrument panel, of at least one control command. The control elements of the housing 210 must be communicatively coupled to the below-described control unit (not shown) being part of the payload 200 so as to enable each of said control commands of the pilot to be presented to said control unit of the payload 200, wherein some of said control commands of the pilot may substantially override the corresponding control commands of the control unit of the payload 200 generated by the control unit of the payload 200 while controlling the means of transport which is based on one or more docked to one another payloads 200 in automatic mode (i.e., in the autopilot mode). In one of the embodiments of the present invention, there may be not provided the participation of a pilot in the process of controlling the means of transport based on one or more docked to one another payloads 200 and, therefore, the above instrument panel, control elements and pilot seat may not be present in the internal space of the housing 210 of the payload, and the control of the means of transport based on one or more docked to one another payloads 200 may be performed substantially fully in the automatic mode (i.e., in the autopilot mode) by using the below-described control module of the payload 210 which module, in turn, may receive control commands from the control device of the system for moving a payload which system may comprise said payload 200. In another embodiment of the present invention, the above control elements and/or the above instrument panel in the housing 210 of the payload may be comprised in the below-described control module of the payload 200, thus allowing that control module to simultaneously enable manual control of the means of transport based on one or more docked to one another payloads 200 by means of a pilot and automatic control of such means of transport in the autopilot mode.

Furthermore, as shown in Figs. 4-6, the housing 210 of a payload is provided with a docking module 230 which is secured on the housing 210 from the external side thereof and which is configured to interact with at least one guide which may be configured in the form of a guide 140 of an aircraft apparatus, a cluster guide 145 of a cluster aircraft apparatus, a guide 360 of a self-propelled module or a cluster guide of a cluster self-propelled module 300 so as to enable the housing 210 of the payload to move along said at least one guide. Thus, the payload 200 may be mounted or suspended, by means of the docking module 230, on a guide and also may move in one direction or another along said guide so as to occupy a proper spatial position in relation to the housing of a functional object which is provided with said guide (i.e., for example, in relation to the housing 110 of an aircraft apparatus, the housing 110 of at least one of aircraft apparatuses 100 forming a cluster aircraft apparatus, the housing 310 of a self-propelled module or the housing 310 of at least one of self-propelled modules forming a cluster self-propelled module 300).

In one of the embodiments of the present invention, the housing 210 of the payload may be provided with one or more docking modules 230 (for example, one, two, three, four, five, six, seven, eight, nine, ten or more docking modules 230), at least one of which may be configured to interact with at least one guide 140 of an aircraft apparatus, at least one guide 140 of at least one of aircraft apparatuses 100 forming a cluster aircraft apparatus, at least one guide 360 of a self-propelled module or at least one guide 360 of at least one of self-propelled modules forming a cluster self-propelled module 300 so as to enable the housing 210 of the payload to move along said at least one guide.

It should be noted that at least one or each of the docking modules 230 in the payload 200 may be generally configured analogously to the above docking module 130 of an aircraft apparatus, the above docking module 330 of a self-propelled module or the above auxiliary docking module 350 of a self-propelled module.

Furthermore, as shown in Figs. 4-6, the housing 210 of the payload is provided with a guide 240 which is configured to interact with at least one docking module which may be configured in the form of a docking module 130 of an aircraft apparatus, a docking module 130 of one of aircraft apparatuses forming a cluster aircraft apparatus, a docking module 330 of a self-propelled module or docking module 330 of one of self-propelled modules forming a cluster self-propelled module 300 so as to enable movement of a functional object which is provided with said docking module (i.e. the aircraft apparatus 100, cluster aircraft apparatus, self-propelled module or cluster self-propelled module 300) along said guide 240, thus allowing the aircraft apparatus 100, cluster aircraft apparatus, self-propelled module or cluster self-propelled module 300, respectively, to take a proper spatial position in relation to the housing 210 of the payload.

In another embodiment of the present invention, the housing 210 of the payload may be provided with one or more guides 240 (for example, one, two, three, four, five, six, seven, eight, nine, ten or more guides 240), at least one of which may be configured to interact with at least one docking module 130 of an aircraft apparatus, at least one docking module 130 of one of aircraft apparatuses 100 forming a cluster aircraft apparatus, at least one docking module 330 of a self-propelled module, at least one docking module 330 of one of self-propelled modules forming a cluster self-propelled module 300 so as to enable movement of a functional object which is provided with said docking module (i.e., the aircraft apparatus 100, cluster aircraft apparatus, self-propelled module or cluster self-propelled module 300) along said at least one guide 240, thus allowing the aircraft apparatus 100, cluster aircraft apparatus, self-propelled module or cluster self-propelled module 300, respectively, to take a proper spatial position in relation to the housing 210 of the payload.

It should be noted that at least one or each of the guides 240 in the payload 200 may be generally configured analogously to the above guide 140 of an aircraft apparatus or the above guide 360 of a self-propelled module.

In yet another embodiment of the present invention, the housing 210 of a payload may be provided with only at least one docking module 230 or only at least one guide 240.

In some embodiment of the present invention, at least one or each of one or more docking modules 230 which may be provided to the housing 210 in the payload 200 may be arranged on one of the sides of the housing 210 of a payload distinct from the remaining docking modules of said docking modules 230. In one of the variations of this embodiment of the present invention, one or more docking modules 230 which may be provided to the housing 210 in the payload 200 may be arranged on one and the same side of the housing 210 of a payload or on different sides of the housing 210 of a payload.

In some other embodiment of the present invention, at least one or each of one or more guides 240 which may be provided to the housing 210 in the payload 200 may be arranged on one of the sides of the housing 210 of a payload, distinct from the remaining guides of said guides 240.

In another embodiment of the present invention, at least two of the guides 240 which may be provided to the housing 210 in the payload 200 may be arranged on one of the sides of the housing 210 of a payload, distinct from the remaining guides of said guides 240.

In some other embodiment of the present invention, at least one or each of the guides 240 which may be provided to the housing 210 in the payload 200 may be arranged on one side of the housing 210 of the payload other than the sides of the housing 210 of the payload on which there are arranged the docking modules 230.

In other embodiments of the present invention, at least one or each of the guides 240 which may be provided to the housing 210 in the payload 200 may be configured rectilinear or curvilinear. In other embodiments of the present invention, at least one or each of the guides 240 which may be provided to the housing 210 in the payload 200 may be configured in the form of a regular or irregular geometric figure.

It should be noted that the self-propelled module 200 may also comprise a control unit (not shown) mounted in the internal space of the housing 210 so as to control the operation of docking and/or undocking, to/from the housing 210 of a payload, of one or more aircraft apparatuses 100, one or more cluster aircraft apparatuses, one or more self-propelled modules, one or more cluster self-propelled modules 300, one or more additional payloads 200 and/or one or more cluster payloads formed from two or more docked to one another payloads 200, wherein for docking to the housing 210 of a payload of at least one of said functional objects there may be used one or more docking modules 230 and/or one or more guides 240.

It should also be noted that detachable docking of two or more payloads 200 to one another to form a cluster payload may be performed under control of at least one or each of the control units of said payloads 200 configured to mutually exchange data over a communication network and/or under control of the control device of the system for moving a payload which system may comprise said payloads 200 to be docked to one another, wherein, to implement said process of mutually docking, there may be used the docking modules 230 coming into detachable interaction with one another while docking of payloads 200 to be docked to one another and/or guides 240 coming into detachable interaction with one another (for example, by means of auxiliary docking modules which may be provided to those guides 240) while docking of the payloads 200 to be docked to one another and/or guides 240 coming into detachable interaction with the docking modules 230 while docking of the payloads 200 to be docked to one another. Furthermore, at least one or each of the control units of the payloads 200 docked to one another to form a cluster payload may be further configured to generate control commands enabling undocking of said payloads 200 to form distinct payloads 200 each of which is provided with at least one free docking module 230 and/or at least one free guide 240.

In one of the embodiments of the present invention, the cluster payload may be formed from two or more above payloads 200 (for example, two, three, four, five, six, seven, eight, nine, ten or more payloads), each of which may be of the type described herein or may be of any other type known in the prior art or appreciated by one skilled in the art, wherein such cluster payload may comprise payloads 200 of an identical type (for example, only cabins with passengers) as well as at least partially or completely different payloads 200 in any combination of the types described herein and known in the prior art (for example, one cabin with passengers and one bag with bulk cargo). Thus, the sizes, types, materials of manufacture and/or the like of the payloads 200 being part of any cluster payload are not specifically limited in any way. Furthermore, the cluster payload formed from a pair, group or combination of identical or different payloads 200 may have any size (including spatial extent or overall dimensions) and/or any shape suitable for undocking at least some or all of payloads 200 forming such cluster payload and for detachable docking, to such cluster payload, one or more additional payloads 200, one or more additional cluster payloads, one or more self-propelled modules, one or more cluster self-propelled modules 300, one or more aircraft apparatuses 100 and/or one or more cluster aircraft apparatuses.

It should also be noted that at least one or each of the control units of the cluster payload or the control device of the system for moving a payload which system comprises said cluster payload may be further configured to enable undocking of at least a portion or all of the payloads 200 forming said cluster payload. Furthermore, at least one or each of the control units of the cluster payload or the control device of the system for moving a payload which system comprises said cluster payload may be further configured to enable detachable docking, to such cluster payload, one or more additional payloads 200, one or more additional cluster payloads, one or more aircraft apparatuses 100, one or more cluster self-propelled modules, each of which is formed from one or more aircraft apparatuses 100, one or more self-propelled modules and/or one or more cluster self-propelled modules 300. It should also be noted that, depending on a particular embodiment of the payloads 200 being part of the cluster payload, the process of detachably docking said cluster payload to one or more additional payloads 200, one or more additional cluster payloads, one or more self-propelled modules, one or more cluster self-propelled modules 300, one or more aircraft apparatuses 100 and/or one or more above cluster aircraft apparatuses may be performed in two possible manners: 1) by way of bringing at least one or each of the docking modules 230 provided to the housings 210 of payloads forming said cluster payload into detachable interaction with at least one of the guides which may be provided to the housings of said one or more additional payloads 200, one or more additional cluster payloads, one or more self-propelled modules, one or more cluster self-propelled modules 300, one or more aircraft apparatuses 100 and/or one or more cluster aircraft apparatuses, respectively; and/or 2) by way of bringing at least one or each of the guides 240 provided to the housings 210 of the payloads forming said cluster payload into detachable interaction with at least one of the docking modules which may be provided to the housings of said one or more additional payloads 200, one or more additional cluster payloads, one or more self-propelled modules, one or more cluster self-propelled modules 300, one or more aircraft apparatuses 100 and/or one or more cluster aircraft apparatuses, respectively.

Thus, in view of the description provided above with respect to payloads and cluster payloads, in the present invention there may be an embodiment of the system for moving a payload, comprising (i) one or more above aircraft apparatuses 100 or one or more above cluster aircraft apparatuses, each of which comprises two or more docked to one another aircraft apparatuses 100; and (ii-1) one or more payloads 200, at least one of which is docked to at least one of said aircraft apparatuses 100 by way of bringing at least one of the guides 240 of said at least one payload 200 into interaction with at least one docking module 130 of said at least one aircraft apparatus 100 so as to enable movement of said at least one aircraft apparatus 100 along said at least one guide 240 of the payload or by way of bringing at least one of the docking modules 230 of said payload 200 into interaction with at least one guide 140 of said at least one aircraft apparatus 100 so as to enable movement of said at least one payload 200 along said at least one guide 140 of the aircraft apparatus, or (ii-2) one or more payloads 200, at least one of which is docked to at least one of said cluster aircraft apparatuses 100 by way of bringing at least one of the guides 240 of said at least one payload 200 into interaction with at least one docking module 130 of said at least one cluster aircraft apparatus so as to enable movement of said at least one cluster aircraft apparatus along said at least one guide 240 of the payload or by way of bringing at least one of the docking modules 230 of said payload 200 into interaction with at least one guide 140 of said at least one cluster aircraft apparatus so as to enable movement of said at least one payload 200 along said at least one guide 140 of the cluster aircraft apparatus.

Furthermore, in view of the description provided above with respect to payloads and cluster payloads, in the present invention there may be yet another embodiment of the system for moving a payload, comprising (i) one or more payloads 200; and (ii) one or more above self-propelled modules, at least one of which is detachably docked to at least one of said payloads 200 by way of bringing at least one of the guides 360 of said self-propelled module into interaction with the docking module 230 of said at least one payload 200 so as to enable movement of said payload 200 along said at least one guide 360 of the self-propelled module or by way of bringing at least one of the docking modules 330 of said self-propelled module into interaction with the guide 240 of said at least one payload 200 so as to enable movement of said at least one self-propelled module along said at least one guide 240 of the payload.

According to one variation of this embodiment of the present invention, such system for moving a payload may further comprise one or more additional self-propelled modules which may be detachably docked to at least one of the payloads 200 such that the guides 360 of at least a portion of said docked self-propelled modules form a cluster guide for moving therealong said at least one payload 200.

According to another variation of this embodiment of the present invention, such system for moving a payload may further comprise one or more additional self-propelled modules, each of which may be docked to at least one of the self-propelled modules already being part of said system.

In particular, Fig. 4 shows the process of docking the above payload 200 to the above wheeled self-propelled module 300-1 by way of bringing the guide 240 of the payload into detachable interaction with the docking module 330 of the self-propelled module and to the above aircraft apparatus 100 by way of bringing the guide 140 of the aircraft apparatus into detachable interaction with the docking module 230 of the payload, such that it results in a means of transport configured to move over the ground surface (over land) while using the wheeled self-propelled module 300-1 and configured to move in air space or fly while using the aircraft apparatus 100 docked to the payload 200.

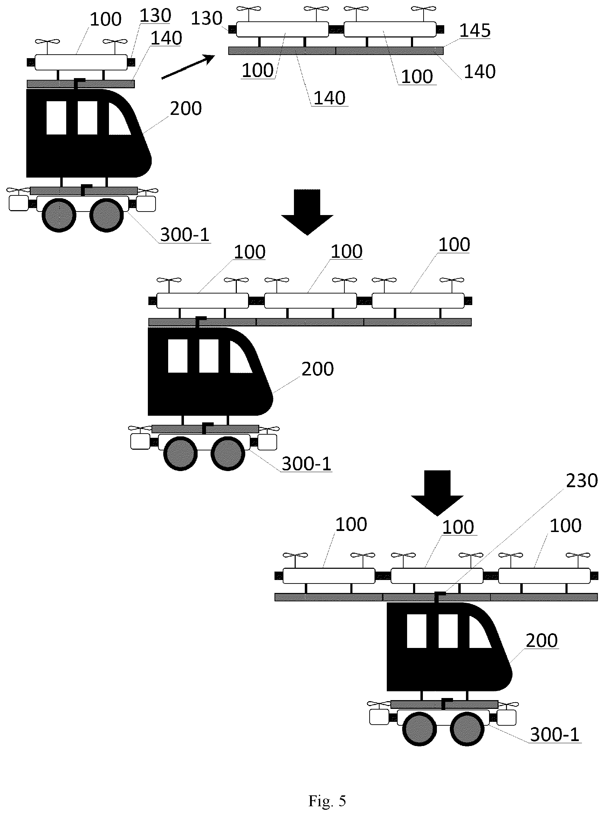

Furthermore, Fig. 5 shows the process of docking the payload 200 docked to the above wheeled self-propelled module 300-1 and to the above aircraft apparatus 100 in accordance with Fig. 4, to the above cluster aircraft apparatus formed from two detachably docked to one another aircraft apparatuses 100 and provided with a cluster guide 145 formed from two connected guides 140, by way of bringing the docking module 130 of the aircraft apparatus into detachable interaction with one of the free docking modules 130 of the cluster aircraft apparatus so as to provide for connection of the guide 140 of the aircraft apparatus to the cluster guide 145 of the cluster aircraft apparatus, such that it results in a means of transport configured to move over the ground surface (over land) while using the wheeled self-propelled module 300-1 and configured to move in air space or fly while using the expanded cluster aircraft apparatus. As shown in Fig. 5, the resulting means of transport is formed from the payload 200 mounted on the self-propelled module 300-1 and detachably docked to the expanded cluster aircraft apparatus provided with an expanded cluster guide formed from three connected guides 140, and formed from three docked to one another aircraft apparatuses 100, wherein the docking module 230 with which the housing of the payload 200 is provided is brought into detachable interaction with one of the three guides 140 forming said expanded cluster guide. Furthermore, as shown in Fig. 5, thanks to the fact that the docking module 230, by means of which the payload 200 is mounted or suspended on the expanded cluster guide of the means of transport, is brought into detachable interaction with one of the three guides 140 forming said expanded cluster guide, the payload 200 may be moved with respect to the expanded cluster aircraft apparatus by way of moving the docking module 230 along said expanded cluster guide so as to provide for occupying, by the payload 200 together with the self-propelled module 300-1, the desired position with respect to said expanded cluster aircraft apparatus to improve the flying characteristics of the means of transport.

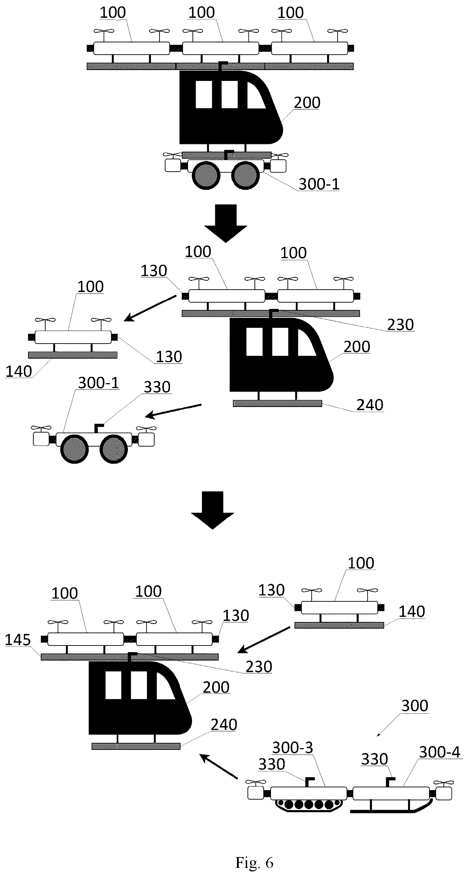

Furthermore, Fig. 6 shows the process of undocking one of the aircraft apparatuses 100 forming the expanded cluster aircraft apparatus in the means of transport of Fig. 5 by way of withdrawing the docking module 130 related to said aircraft apparatus 100 to be undocked and the docking module 130 related to the aircraft apparatus 100 to which said aircraft apparatus to be undocked as part of said expanded cluster aircraft apparatus was immediately detachably docked from interaction with one another. Fig. 6 also shows the process of undocking the wheeled self-propelled module 300-1 from the payload 200 by way of withdrawing the docking module 330 of the self-propelled module from interaction with the guide 240 of the payload, as a result of which the payload 200 is caused to be docked only to the cluster aircraft apparatus provided with the cluster guide 145 formed from two connected guides 140, and formed from two docked to one another aircraft apparatuses 100. Furthermore, Fig. 6 shows the process of docking other aircraft apparatus 100 to a cluster aircraft apparatus to which the payload 200 is detachably docked and which is formed from two docked to one another aircraft apparatuses 100 by way of bringing the docking module 130 of the aircraft apparatus 100 to be docked into detachable interaction with one of the free docking modules 130 of the cluster aircraft apparatus so as to provide for connection of the guide 140 of the aircraft apparatus to be docked to the cluster guide 145 of the cluster aircraft apparatus. Fig. 6 also shows the process of docking the cluster self-propelled module 300 formed from two docked to one another above self-propelled modules 300-3, 300-4 by way of bringing one of the docking modules 330 of such cluster self-propelled module 300 to the guide 240 of a payload so as to provide for obtaining an altered means of transport configured to move in air space. In particular, the resulting altered means of transport shown in Fig. 6 is formed from a payload 200 detachably docked to a cluster aircraft apparatus provided with a cluster guide 145 formed from two connected guides 140, and formed from two docked to one another aircraft apparatuses 100, wherein the docking module 230 with which the housing of the payload 200 is provided is brought into detachable interaction with one of the two guides 140 forming said cluster guide 145.

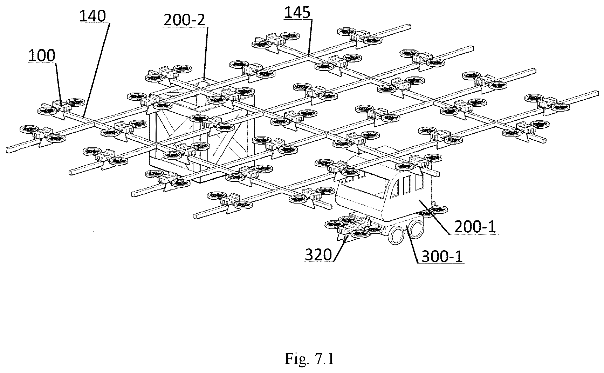

Fig. 7.1 is an illustrative example of the system comprising a cluster aircraft apparatus with a cluster guide 145 and two payloads 200 configured to move along the cluster guide 145.

The cluster aircraft apparatus is formed by a plurality of aircraft apparatuses 100 with guides 140 which are connected to one another to form a branched cluster guide 145.

On the cluster guide 145 there are mounted, movably therealong, two payloads 200. The first payload 200-1 is a fuselage for accommodating cargo and passengers, whereby to the first payload 200-1 there is further docked a self-propelled module 300-1. To the self-propelled module 300-1 there are docked aircraft apparatuses 320.

The second payload 200-2 is a container, for example, a crate for transporting goods and equipment.

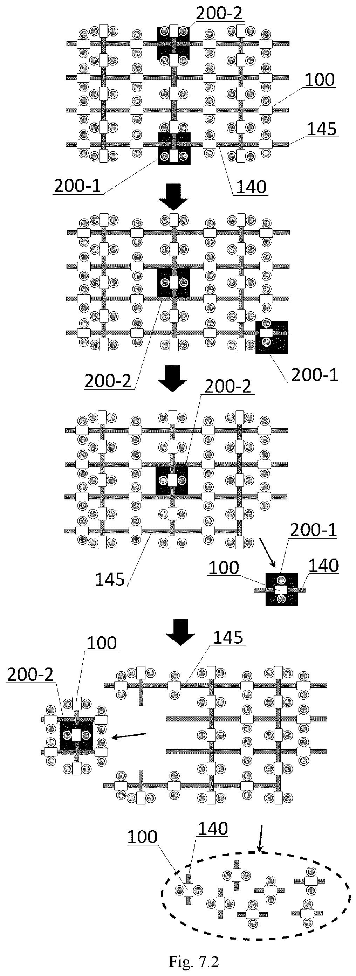

Fig. 7.2 schematically shows a non-limiting illustrative example of a method for moving payloads 200 (200-1 and 200-2) along a cluster guide 145. Furthermore, Fig. 7.2 shows that at least one or each of the payloads 200 (200-1, 200-2), following being moved along the branched cluster guide 145 to a predetermined position, may be undocked together with a predetermined portion of said cluster guide 145 so as to provide for altering of movement patterns of the remaining payloads of said payloads 200 mounted or suspended on said branched cluster guide 145. Said undocked portion of the cluster guide 145 consists of one or more guides 140 of one or more aircraft apparatuses 100 connected to one another.

Following undocking of the last payload 200 (200-2), the cluster guide 145 may continue the flight as part of a cluster aircraft apparatus of a plurality of aircraft apparatuses 100 with corresponding guides 140 or may be partially or completely separated with allocation to distinct aircraft apparatuses 100 with corresponding distinct guides 140. Thereafter, said aircraft apparatuses may form one or more new cluster guides 145 for moving one or more payloads 200.

### Methods of movement of payload

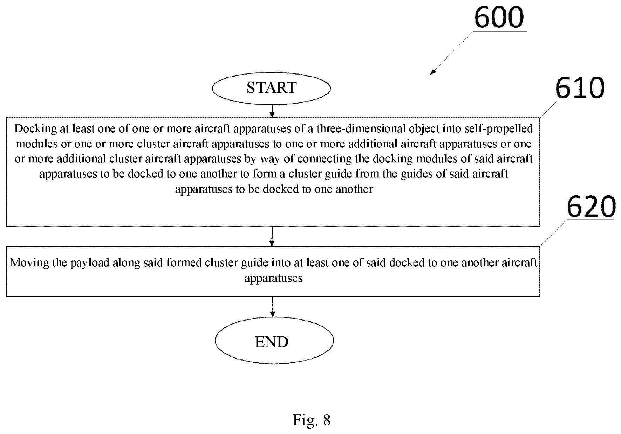

Fig. 8 is a flow diagram showing the main operations of a method 600 of movement of a payload, wherein the method 600 of movement of a payload shown in Fig. 8 may be performed using the system 500-1 for moving a payload which system may be implemented in accordance with any one of the relevant embodiments of the present invention described herein.

In particular, the method 600 of movement of a payload shown in Fig. 8 comprises the following two main operations or two main steps 610 and 620, wherein the step 610 comprises docking at least one of one or more aircraft apparatuses 100 being part of the above first embodiment of the system for moving a payload or one or more cluster aircraft apparatuses formed each from two or more docked to one another aircraft apparatuses 100 being part of the above first embodiment of the system for moving a payload to one or more additional aircraft apparatuses being part of the above first embodiment of the system for moving a payload or to one or more additional cluster aircraft apparatuses formed each from two or more docked to one another aircraft apparatuses 100 being part of the above first embodiment of the system for moving a payload by way of connecting the docking modules 130 of said aircraft apparatuses 100 to be docked to one another to form a cluster guide 145 from the guides 140 of said aircraft apparatuses 100 to be docked to one another, and the step 620 comprises moving the payload (including the payload 200) along said formed cluster guide 145 into at least one of said docked to one another aircraft apparatuses 100.

An embodiment is possible, wherein, before the step of docking, there is performed rotation of the housing of the aircraft apparatus 100 relative to the guide 140. The angle of rotation may be, for example, 1°-30° in the vertical plane and/or 90° or 45° or 180° or another angle from 1° to 180° in the horizontal plane. The rotation of the housing of the aircraft apparatus 100 enables facilitation of docking of the guide 140 to the cluster guide 145 and/or optimizes the arrangement of the air propulsion units to exclude crossing of airflows and/or collision of the components of the aircraft apparatuses 100 while docking.

Following docking, the housing of the aircraft apparatus 100 may be returned to the original position thereof relative to the guide 140 by way of rotating it back by the corresponding angle or may be further rotated relative to the guides by a different angle, for example, 10° in the vertical plane and/or 30° or 25° or 120° or another angle from 1° to 180° in the horizontal plane. The value of the rotation angle may be set taking into account the configuration of the cluster aircraft apparatus and optimized arrangement of the air propulsion units, distribution of airflows and optimized flying characteristics of the cluster aircraft apparatus. Alternatively, the housing of the aircraft apparatus 100 may remain in the same position relative to the guide as was set before docking.

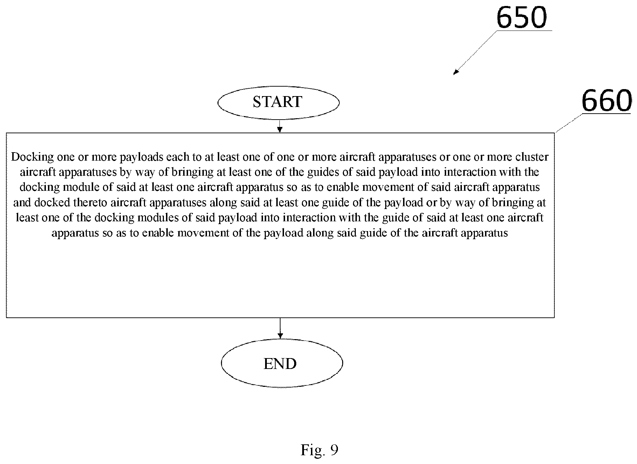

Fig. 9 is a flow diagram showing the main operations of the method 650 of movement of a payload, wherein the method 650 of movement of a payload shown in Fig. 9 comprises the following main operation or main step 660 of docking one or more payloads 200 each to at least one of one or more aircraft apparatuses 100 being part of the above first embodiment of the system for moving a payload or to one or more cluster aircraft apparatuses formed each from two or more docked to one another aircraft apparatuses 100 being part of the above first embodiment of the system for moving a payload by way of bringing at least one of the guides 240 of said payload 200 into interaction with the docking module 130 of said at least one aircraft apparatus 100 so as to enable movement of said aircraft apparatus 100 and docked thereto aircraft apparatuses 100 along said at least one guide 240 of the payload or by way of bringing at least one of the docking modules 230 of said payload into interaction with the guide 140 of said at least one aircraft apparatus so as to enable movement of the payload 200 along said guide 140 of the aircraft apparatus.

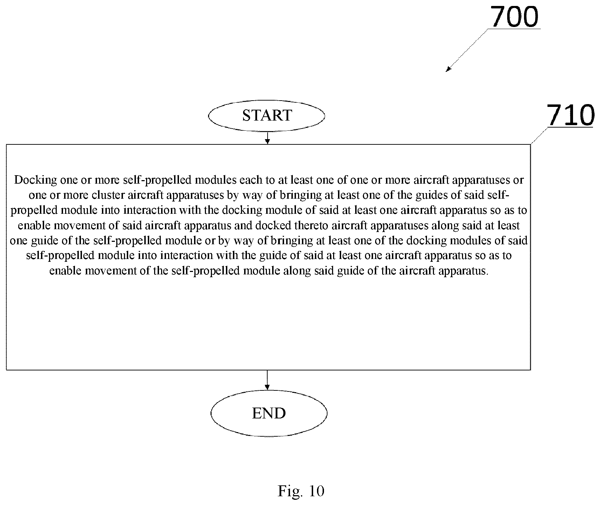

Fig. 10 is a flow diagram showing the main operations of the method 700 of movement of a payload, wherein the method 700 of movement of a payload shown in Fig. 10 comprises the following main operation or main step 710 of docking one or more above self-propelled modules each to at least one of one or more aircraft apparatuses 100 being part of the system 500-1 or the above first embodiment of the system for moving a payload or to one or more cluster aircraft apparatuses formed each from two or more docked to one another aircraft apparatuses 100 being part of the above first embodiment of the system for moving a payload by way of bringing at least one of the guides 360 of said self-propelled module into interaction with the docking module 130 of said at least one aircraft apparatus 100 so as to enable movement of said aircraft apparatus 100 and docked thereto aircraft apparatuses 100 along said at least one guide 360 of the self-propelled modules or by way of bringing at least one of the docking modules 330 of said self-propelled module into interaction with the guide 140 of said at least one aircraft apparatus 100 so as to enable movement of the self-propelled module along said guide 140 of the aircraft apparatus.

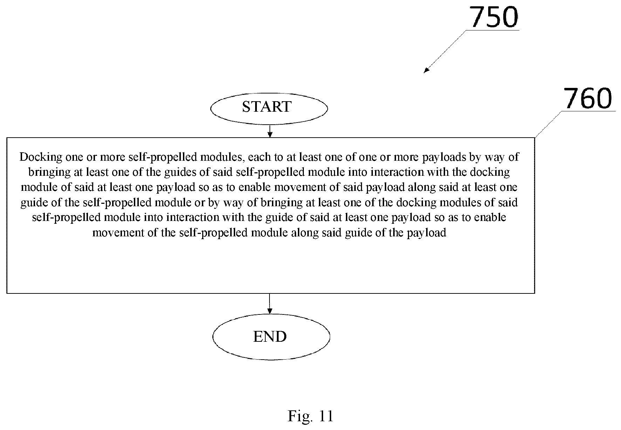

Fig. 11 is a flow diagram showing the main operations of a method 750 of movement of a payload, wherein the method 750 of movement of a payload shown in Fig. 11 comprises the following main operation or main step 760 of docking one or more above self-propelled modules each to at least one of one or more payloads 200 by way of bringing at least one of the guides 360 of said self-propelled module into interaction with the docking module 230 of said at least one payload 200 so as to enable movement of said payload 200 along said at least one guide 360 of the self-propelled module or by way of bringing at least one of the docking modules 330 of said self-propelled module into interaction with the guide 240 of said at least one payload 200 so as to enable movement of the self-propelled module along said guide 240 of the payload.

An embodiment is possible, wherein, before the step of docking, there is performed rotation of the housing of the self-propelled module 300 relative to the guide 360. The angle of rotation may be, for example, 1°-30° in the vertical plane and/or 90° or 45° or 180° or another angle from 1° to 180° in the horizontal plane. Rotation of the housing of the self-propelled module 300 enables facilitation of docking of the guide 360 to the payload 200 and/or optimizes the arrangement of the air propulsion units to exclude crossing of airflows with those of the aircraft apparatuses 100 and/or collision of the components of the self-propelled module 300 with the payload 200 while docking.

Following docking, the housing of the self-propelled module 300 may be returned to the original position thereof relative to the guide 360 by way of rotating it back by the corresponding angle or may be further rotated relative to the guides by a different angle, for example, 10° in the vertical plane and/or 30° or 25° or 120° or another angle from 1° to 180° in the horizontal plane. The value of the rotation angle may be set taking into account the configuration of the system and optimized arrangement of air propulsion units, distribution of airflows of the self-propelled module and aircraft apparatuses, and optimized flying characteristics of the system or distinct components thereof. Alternatively, the housing of the self-propelled module 300 may remain in the same position relative to the guide 360 as was set before docking.

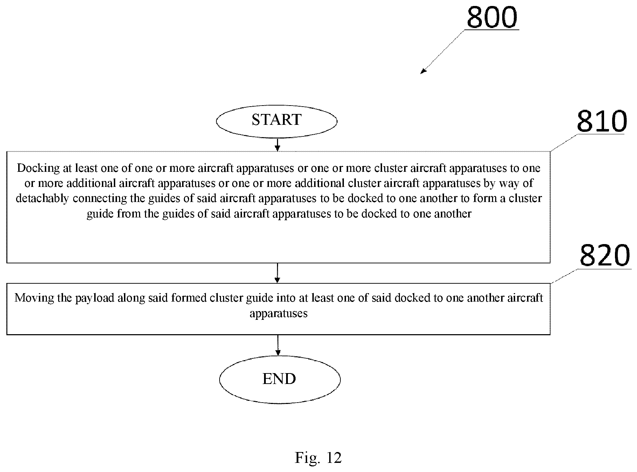

Fig. 12 is a flow diagram showing the main operations of a method 800 of movement of a payload, wherein the method 800 of movement of a payload shown in Fig. 12 comprises two main operations or two main steps 810, 820. The step 810 in the method 800 comprises docking at least one of one or more aircraft apparatuses 100 being part of the system 500-2 or the above second embodiment of the system for moving a payload or one or more cluster aircraft apparatuses formed each from two or more docked to one another aircraft apparatuses 100 being part of the second embodiment of the system for moving a payload to one or more additional aircraft apparatuses 100 being part of the second embodiment of the system for moving a payload or to one or more additional cluster aircraft apparatuses formed each from two or more docked to one another additional aircraft apparatuses 100 being part of the second embodiment of the system for moving a payload by way of detachably connecting the guides 140 of said aircraft apparatuses 100 to be docked to one another to form a cluster guide 145 from the guides 140 of said aircraft apparatuses 100 to be docked to one another. The step 820 in the method 800 is a step of moving the payload (inter alia, it can be the payload 200 as well) along the formed cluster guide 145 to at least one of the docked to one another aircraft apparatuses 100.

An embodiment is possible, wherein, prior to the movement (the step of movement) of the payload 200, there is performed rotation of the payload relative to the cluster guide 145. The angle of rotation may be, for example, 1°-30° in the vertical plane and/or 90° or 45° or 180° or another angle from 1° to 180° in the horizontal plane. Rotation of the payload 200 enables facilitation of movement of the payload 200 and/or optimizes the arrangement of the payload 200 relative to the cluster guide 145 and the housings of the aircraft apparatuses 100, and may also promote the comfort of passengers while they are present in the payload 200 or optimized flying characteristics of the system, for example, reduced aerodynamic drag.

Following movement of the payload 200, it may be returned to the original position thereof relative to the cluster guide 145 by way of rotating it back by the corresponding angle or may be further rotated relative to the cluster guide 145 by a different angle, for example, 10° in the vertical plane and/or 30° or 25° or 120° or another angle from 1° to 180° in the horizontal plane. The value of the rotation angle may be set taking into account the configuration of the system and optimized arrangement of the payload 200 relative to the air propulsion unit or optimized flying characteristics of the system, for example, reduced aerodynamic drag and/or optimized flying characteristics of the system or distinct components thereof. Alternatively, the payload 200 may remain in the same position with respect to the cluster guide 145 as was set before the beginning of movement thereof along the cluster guide 145. Furthermore, in the course of movement along the cluster guide 145, the payload 200 may perform one or more rotations with respect to the cluster guide 145, wherein the angle of each subsequent rotation may coincide with or differ relative to the previous one.

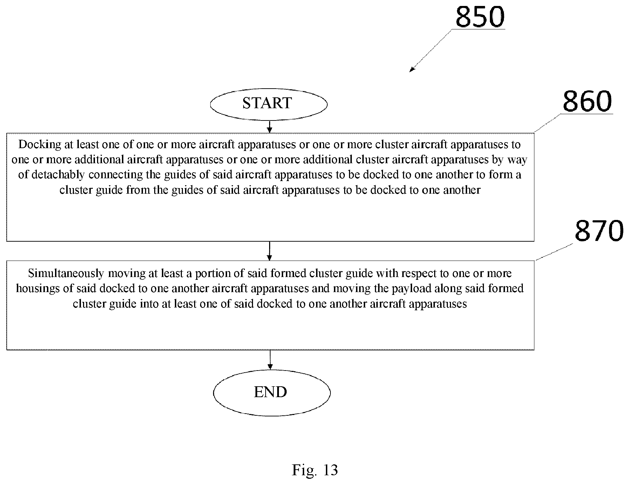

Fig. 13 is a flow diagram showing the main operations of a method 850 of movement of a payload, wherein the method 850 of movement of a payload shown in Fig. 13 comprises two main operations or two main steps 860, 870. The step 860 in the method 850 comprises docking at least one of one or more aircraft apparatuses 100 being part of the above third embodiment of the system for moving a payload or one or more cluster aircraft apparatuses formed each from two or more docked to one another aircraft apparatuses 100 being part of the above third embodiment of the system for moving a payload to one or more additional aircraft apparatuses 100 being part of the above third embodiment of the system for moving a payload or to one or more additional cluster aircraft apparatuses formed each from two or more docked to one another additional aircraft apparatuses 100 being part of the above third embodiment of the system for moving a payload by way of detachably connecting the guides 140 of said aircraft apparatuses 100 to be docked to one another to form a cluster guide 145 from the guides 140 of said aircraft apparatuses 100 to be docked to one another. The step 870 in the method 850 comprises simultaneously moving at least a portion of the formed cluster guide 145 with respect to one or more housings of the docked to one another aircraft apparatuses 100 and moving the payload (including the payload 200) along said formed cluster guide 145 into at least one of said docked to one another aircraft apparatuses 100.

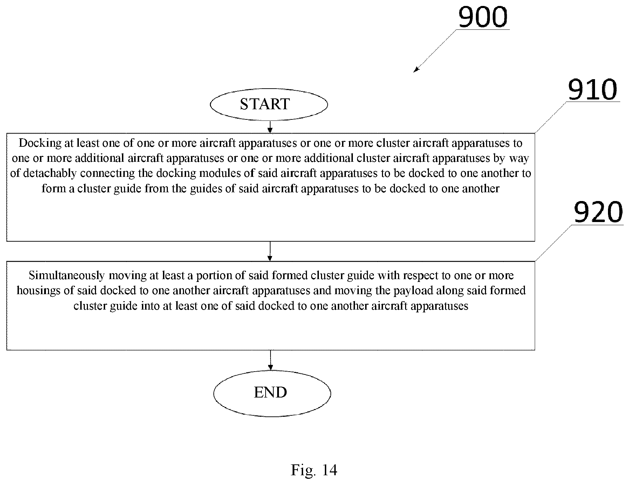

Fig. 14 is a flow diagram showing the main operations of a method 900 of movement of a payload, wherein the method 900 of movement of a payload shown in Fig. 14 comprises two main operations or two main steps 910, 920. The step 910 in the method 900 comprises docking at least one of one or more aircraft apparatuses 100 being part of the above fourth embodiment of the system for moving a payload or one or more cluster aircraft apparatuses formed each from two or more docked to one another aircraft apparatuses 100 being part of the above fourth embodiment of the system for moving a payload to one or more additional aircraft apparatuses being part of the above fourth embodiment of the system for moving a payload or to one or more additional cluster aircraft apparatuses formed each from two or more docked to one another additional aircraft apparatuses 100 being part of the above fourth embodiment of the system for moving a payload by way of detachably connecting the docking modules 130 of said aircraft apparatuses 100 to be docked to one another to form a cluster guide 145 from the guides 140 of said aircraft apparatuses 100 to be docked to one another. The step 920 in the method 900 comprises simultaneously moving at least a portion of the formed cluster guide 145 with respect to one or more housings 210 of the docked to one another aircraft apparatuses 100 and moving the payload (including the payload 200) along said formed cluster guide 145 into at least one of said docked to one another aircraft apparatuses 100.

The provided illustrative embodiments of the present invention, examples and description serve only to facilitate understanding of the principles of the claimed invention and are not limiting. Other possible embodiments of the present invention or modifications or improvements to the above embodiments of the present invention will suggest themselves to one skilled in the art after reading the above description. The scope of the present invention is limited only by the appended claims.

## Claims

1. A system for moving a payload (200), the system comprising:
two or more aircraft apparatuses (100) each having a housing (110) provided with one or more air propulsion units designed to enable the aircraft apparatus (100) to be moved in an air space and each being provided with one or more guides (140), wherein each of the guides (140) of the aircraft apparatus (100) is designed to have a payload (200) movably mounted or suspended thereon,
wherein at least one of the guides (140) of an aircraft apparatus (100) of the two or more aircraft apparatuses is further designed to be releasably connected or docked to one or more guides (140) of another aircraft apparatus (100) of the two or more aircraft apparatuses by means of one or more docking modules (130) to form a cluster guide (145), and
wherein the system further comprises a control module configured to enable said aircraft apparatuses (100) to be releasably connected or docked to one another by means of the docked guides (140) to form a cluster aircraft apparatus, and
wherein the system further comprises a payload movement module controlled by the control module,
**characterized in that**
the payload movement module is designed to grip or push the mounted or suspended payload (200) to enable the payload (200) to be controllably moved by the payload movement module along the formed cluster guide (145) to a required position on the formed cluster guide (145) in relation to at least one of the docked aircraft apparatuses (100).

2. The system according to claim 1, wherein at least some of the guides (140) of the aircraft apparatus (100) are disposed parallel to one another, perpendicular to one another and/or at a predetermined angle with respect to one another.

3. The system according to claim 1, wherein at least one of the guides (140) of the aircraft apparatus (100) is mounted on a rotary device mounted in the housing (110) of the aircraft apparatus (100) so as to enable said at least one guide (140) to rotate by a predetermined angle of rotation.

4. The system according to claim 1, wherein at least one of said guides (140) of the aircraft apparatus (100) is rotatably mounted on the housing (110) of the aircraft apparatus (100), and the housing (110) of the aircraft apparatus (100) further comprises a drive device controlled by the control module and operably coupled to said at least one guide (140) or configured to interact with said at least one guide (140) so as to enable rotation thereof by a predetermined angle of rotation.

5. The system according to claim 1, wherein at least one of said guides (140) of the aircraft apparatus (100) is configured telescopic, and the housing (110) of the aircraft apparatus (100) further comprises a drive device controlled by the control module and operably coupled to said at least one guide (140) or configured to interact with said at least one guide (140) so as to enable at least partial extension thereof.

6. The system according to claim 5, wherein the control module is further configured to present control commands to the drive device so as to enable at least partial retraction of said extended guide (140).

7. The system according to claim 1, wherein the housing (110) is configured to tilt or rotate by a predetermined angle with respect to at least one of said guides (140).

8. The system according to claim 1, wherein the housing (110) is configured to alter the shape thereof and/or the dimensions thereof.

9. The system according to claim 1, wherein at least one of said guides (140) is at least partially configured bendable or flexible.

10. The system according to claim 1, wherein at least one of said guides (140) is configured rectilinear or curvilinear.

11. The system according to claim 1, wherein at least one of said guides (140) is configured T-shaped, Z-shaped, X-shaped, Y-shaped, inverted-U-shaped, E-shaped, U-shaped, N-shaped, L-shaped, F-shaped, O-shaped, H -shaped, V-shaped, inverted-L-shaped, C-shaped or W-shaped.

12. The system according to claim 1, wherein at least one of said guides (140) is configured to enable the movement of the payload (200) along at least one of three coordinate axes or configured to move relative to the housing (110) of the aircraft apparatus (100) so as to enable the movement of the payload (200) mounted or suspended on said at least one guide (140) relative to the housing (110) of the aircraft apparatus (100).

13. The system according to claim 1, wherein the payload movement module comprises one or more controllable working members configured to interact with the payload (200) when actuated so as to enable mounting or suspension of said payload (200) on at least one of said guides (140) and to enable the movement thereof along said at least one guide (140) while actuation of said working members and further comprises a drive device controlled by the control module and operably coupled to said controllable working members so as to enable the actuation of at least one of same in response to control commands of the control module.

14. The system according to claim 1, wherein said guides (140) of the aircraft apparatus (100) comprise two or more parallel guides designed to have the payload (200) mounted or suspended thereon and designed to substantially rectilinearly move said payload (200) therealong.

15. The system according to claim 1, wherein at least one of said guides (140) is comprised of two or more portions, and wherein at least one of the portions is configured movable, and wherein the housing (110) further comprises a drive device controlled by the control module and operably coupled to said at least one movable portion of the guide (140) so as to enable the movement thereof with respect to the remaining portions of the guide (140) for altering a shape of said at least one guide (140).

16. The system according to claim 1, wherein said guides (140) of the aircraft apparatus (100) comprise two distinct guides and a movable connecting guide, each of which is configured to mount or suspend thereon the payload (200) and to move therealong said mounted payload (200), and wherein the housing (110) of the aircraft apparatus (100) further comprises a drive device controlled by the control module and operably coupled to said movable connecting guide so as to enable same to move for connecting said guides (140) to one another.

17. The system according to claim 1, wherein the payload movement module is a robotic manipulator or grip configured to grip and move the payload (200) along the formed cluster guide (145).

18. The system according to claim 1, wherein the payload movement module is a pusher configured to momentarily exert force upon the payload (200) while actuation of said pusher for moving the payload (200) along the cluster guide (145), and wherein the housing (110) of the aircraft apparatus (100) further comprises a drive device controlled by the control module and operably coupled to said pusher in a manner to actuate same.

19. The system according to claim 1, wherein the housing (110) of the aircraft apparatus (100) is further provided with one or more weight sensors, wherein each of the weight sensors is configured to measure a weight of the payload (200) at one of the spots of the load-bearing structure for payload accommodation, and wherein the weight sensors are configured to provide their readings to the control module, and wherein the control module enables control instructions to be provided to the payload movement module for moving the payload (200) along the cluster guide (145) depending on said readings of the weight sensors.

20. The system according to claim 1, wherein the payload movement module is movably mounted on at least one additional guide for moving the payload (200).

21. The system according to claim 1, wherein the payload movement module is further configured to demount the payload (200) from the guide (140).

22. The system according to claim 1, wherein at least one of said guides (140) is further configured to demount the payload (200) mounted or suspended on said at least one guide (140).

23. The system according to claim 22, wherein said at least one guide (140) has one or more payload demounting spots.

24. The system according to claim 1, wherein at least one of said docking modules is movably mounted on at least one of said guides (140).

25. The system according to claim 1, wherein the payload movement module comprises a gripping mechanism and at least one of said guides (140) is further provided with said gripping mechanism designed to grip the payload (200) so as to enable the payload (200) to be mounted or suspended on said at least one guide (140) and designed to move along said at least one guide (140) so as to enable the gripped payload (200) to be moved along said at least one guide (140).

26. The system according to claim 25, wherein said gripping mechanism is designed to be rotated to enable the rotation of said gripped payload (200) with respect to said at least one guide (140).

27. The system according to claim 1, wherein at least one of said guides (140) is movable, and wherein the housing (110) of the aircraft apparatus (100) further comprises a guide movement module controlled by the control module and designed to operably interact with said at least one movable guide (140) so as to enable the movable guide (140) and the payload (200) mounted or suspended on said at least one movable guide (140) to be moved together.

28. The system according to claim 1, wherein the control module is further configured to present control commands to the payload movement module so as to enable movement of the payload from an aircraft apparatus to be undocked to at least one of the remaining docked to one another aircraft apparatuses while presence of the aircraft apparatuses in the air space.

29. The system according to claim 1, wherein the control module is further configured to present control commands to the payload movement module so as to enable receipt of the payload from at least one of the remaining docked to one another aircraft apparatuses and to enable movement of said received payload into an the aircraft apparatus to be undocked while presence of the aircraft apparatuses in the air space.

30. The system according to claim 28, wherein the control module further enables the direction of the aircraft apparatus (100) to be undocked to a parking station for replenishing a range thereof.

31. The system according to claim 30, wherein the control module further enables the docking of the aircraft apparatus (100) with the replenished range to one of the docked aircraft apparatuses (100).

32. The system according to claim 31, wherein the control module is further configured to provide control commands to the payload movement module of the aircraft apparatus to be docked so as to enable the movement of the payload (200) from the aircraft apparatus to be docked to at least one of the docked aircraft apparatuses (100).

33. The system according to any one of claims 28-29, wherein at least two of the aircraft apparatuses (100) to be docked to one another are further provided each with an additional guide, and the control module further enables the movement of the payload movement module along an additional cluster guide formed from said additional guides upon docking said aircraft apparatuses (100) to one another.

34. The system according to claim 1, wherein the docking modules (130) are provided at adjacent ends of the docked guides (140).

35. The system according to claim 34, wherein each of the docked guides (140) are further provided with an additional docking module (130) at an opposite end thereof, the additional docking module (130) being designed to be docked to a guide of an additional aircraft apparatus (100).

36. The system according to claim 34, wherein at least a part of the docked guides (140) of the aircraft apparatus (100) are positioned perpendicular to each other or positioned at an angle to each other, and the docking modules (130) provided at the ends of the docked guides (140) are designed to be releasably connected or docked to docked guides (140) of two or more other aircraft apparatuses (100) so as to define a movement way of the payload (200).

37. The system according to claim 1, wherein at least one of the docked guides (140) is designed to be used for mounting or suspending a first payload thereon and to allow the first payload to be moved along the at least one guide (140), and at least one another guide of the docked guides (140) is designed to be used for mounting or suspending a second payload thereon and to allow the second payload to be moved along the at least one another guide (140).

38. The system according to claim 1, wherein the housing of the aircraft apparatus (100) is further provided with one or more docking modules, and each of the docking modules is designed to allow a housing of the aircraft apparatus (100) to be releasably connected to a housing of the another aircraft apparatus (100).

39. A method of moving a payload, the method comprising:
releasably connecting or docking in an air space, under control of a control module, at least one of guides (140) of a first aircraft apparatus (100) to at least one of guides (140) of a second aircraft apparatus (100) to form a cluster guide (145) comprised of the docked guides (140) and to form a cluster aircraft apparatus comprised of the first and second aircraft apparatus (100) releasably connected or docked to one another by means of the docked guides (140);
**characterized in that** the method further comprises gripping or pushing by a payload movement module controlled by the control module a payload (200) movably mounted or suspended on at least one guide (140) of the formed cluster guide (145) to move the payload (200) by means of the payload movement module along the formed cluster guide (145) to a required position on the formed cluster guide (145) in relation to at least one of the docked aircraft apparatuses (100).

40. The method according to claim 39, further comprising rotating the payload (200) relative to the cluster guide (145) prior to the movement of the payload (200) on the cluster guide (145).

41. The method according to claim 39, further comprising releasably docking in an air space, under control of a control module, a guide of an additional aircraft apparatus (100) to a docking module (130) provided at one of an opposite free ends of the formed cluster guide (145) so as to form an extended cluster guide and an extended cluster aircraft apparatus comprised of the previously formed cluster aircraft apparatus and the additional aircraft apparatus (100), and moving, under control of the control module, the payload (200) along the extended cluster guide of the extended cluster aircraft apparatus.

42. The method according to claim 39, further comprising docking of the housings of the aircraft apparatuses (100) by means of docking modules (130) provided on the housings of corresponding docked aircraft apparatuses (100).

## Patentansprüche

1. System zum Bewegen einer Nutzlast (200), umfassend:
zwei oder mehr Luftfahrzeugvorrichtungen (100), die jeweils ein Gehäuse (110) aufweisen, das mit einer oder mehreren Luftantriebseinheiten versehen ist, die dazu ausgelegt sind, die Luftfahrzeugvorrichtung (100) in einem Luftraum zu bewegen, und die jeweils mit einer oder mehreren Führungen (140) versehen sind, wobei jede der Führungen (140) der Luftfahrzeugvorrichtung (100) dazu ausgelegt ist, eine Nutzlast (200) daran beweglich montiert oder aufgehängt zu haben,
wobei mindestens eine der Führungen (140) einer Luftfahrzeugvorrichtung (100) der zwei oder mehr Luftfahrzeugvorrichtungen ferner dazu ausgelegt ist, mittels eines oder mehrerer Andockmodule (130) lösbar mit einer oder mehreren Führungen (140) einer anderen Luftfahrzeugvorrichtung (100) der zwei oder mehr Luftfahrzeugvorrichtungen verbunden oder angedockt zu werden, um eine Cluster-Führung (145) zu bilden, und
wobei das System ferner ein Steuermodul umfasst, das dazu konfiguriert ist, zu ermöglichen, dass die Luftfahrzeugvorrichtungen (100) mittels der angedockten Führungen (140) lösbar miteinander verbunden oder angedockt werden, um eine Cluster-Luftfahrzeugvorrichtung zu bilden, und
wobei das System ferner ein durch das Steuermodul gesteuertes Lastbewegungsmodul umfasst,
**dadurch gekennzeichnet, dass**
das Lastbewegungsmodul dazu ausgelegt ist, mit der montierten oder aufgehängten Nutzlast (200) zu greifen oder zu schieben, um zu ermöglichen, dass die Nutzlast (200) durch das Lastbewegungsmodul entlang der gebildeten Cluster-Führung (145) zu einer erforderlichen Position auf der gebildeten Cluster-Führung (145) in Bezug auf mindestens eine der angedockten Luftfahrzeugvorrichtungen (100) gesteuert bewegt wird.

2. System nach Anspruch 1, wobei zumindest einige der Führungen (140) der Luftfahrzeugvorrichtung (100) zueinander parallel, zueinander senkrecht und/oder in einem vorbestimmten Winkel zueinander angeordnet sind.

3. System nach Anspruch 1, wobei mindestens eine der Führungen (140) der Luftfahrzeugvorrichtung (100) auf einer im Gehäuse (110) der Luftfahrzeugvorrichtung (100) montierten Drehvorrichtung angeordnet ist, um zu ermöglichen, dass sich die zumindest eine Führung (140) um einen vorbestimmten Drehwinkel dreht.

4. System nach Anspruch 1, wobei mindestens eine der Führungen (140) der Luftfahrzeugvorrichtung (100) drehbar am Gehäuse (110) der Luftfahrzeugvorrichtung (100) gelagert ist und das Gehäuse (110) der Luftfahrzeugvorrichtung (100) ferner eine durch das Steuermodul gesteuerte Antriebsvorrichtung umfasst, die mit der zumindest einen Führung (140) betriebswirksam gekoppelt ist oder dazu konfiguriert ist, mit der zumindest einen Führung (140) zu interagieren, um deren Drehung um einen vorbestimmten Drehwinkel zu ermöglichen.

5. System nach Anspruch 1, wobei mindestens eine der Führungen (140) der Luftfahrzeugvorrichtung (100) teleskopisch ausgebildet ist und das Gehäuse (110) der Luftfahrzeugvorrichtung (100) ferner eine durch das Steuermodul gesteuerte Antriebsvorrichtung umfasst, die mit der zumindest einen Führung (140) betriebswirksam gekoppelt ist oder dazu konfiguriert ist, mit der zumindest einen Führung (140) zu interagieren, um deren zumindest teilweise Ausfahrbarkeit zu ermöglichen.

6. System nach Anspruch 5, wobei das Steuermodul ferner dazu konfiguriert ist, der Antriebsvorrichtung Steuerbefehle zu übermitteln, um das zumindest teilweise Einfahren der ausgefahrenen Führung (140) zu ermöglichen.

7. System nach Anspruch 1, wobei das Gehäuse (110) dazu ausgebildet ist, sich um einen vorbestimmten Winkel relativ zu mindestens einer der Führungen (140) zu neigen oder zu drehen.

8. System nach Anspruch 1, wobei das Gehäuse (110) dazu ausgebildet ist, seine Form und/oder seine Abmessungen zu verändern.

9. System nach Anspruch 1, wobei mindestens eine der Führungen (140) zumindest teilweise biegsam oder flexibel ausgebildet ist.

10. System nach Anspruch 1, wobei mindestens eine der Führungen (140) geradlinig oder gekrümmt ausgebildet ist.

11. System nach Anspruch 1, wobei mindestens eine der Führungen (140) T-förmig, Z-förmig, X-förmig, Y-förmig, umgekehrt U-förmig, E-förmig, U-förmig, N-förmig, L-förmig, F-förmig, O-förmig, H-förmig, V-förmig, umgekehrt L-förmig, C-förmig oder W-förmig ausgebildet ist.

12. System nach Anspruch 1, wobei mindestens eine der Führungen (140) dazu ausgebildet ist, die Bewegung der Nutzlast (200) entlang mindestens einer der drei Koordinatenachsen zu ermöglichen, oder dazu ausgebildet ist, sich relativ zum Gehäuse (110) der Luftfahrzeugvorrichtung (100) zu bewegen, um die Bewegung der an der zumindest einen Führung (140) montierten oder aufgehängten Nutzlast (200) relativ zum Gehäuse (110) der Luftfahrzeugvorrichtung (100) zu ermöglichen.

13. System nach Anspruch 1, wobei das Lastbewegungsmodul ein oder mehrere steuerbare Arbeitsglieder umfasst, die dazu ausgebildet sind, bei Betätigung mit der Nutzlast (200) zu interagieren, um die Montage oder Aufhängung der Nutzlast (200) an mindestens einer der Führungen (140) zu ermöglichen und deren Bewegung entlang der zumindest einen Führung (140) während der Betätigung der Arbeitsglieder zu ermöglichen, und ferner eine durch das Steuermodul gesteuerte Antriebsvorrichtung umfasst, die mit den steuerbaren Arbeitsgliedern betriebswirksam gekoppelt ist, um die Betätigung von zumindest einem von ihnen in Reaktion auf Steuerbefehle des Steuermoduls zu ermöglichen.

14. System nach Anspruch 1, wobei die Führungen (140) der Luftfahrzeugvorrichtung (100) zwei oder mehr parallele Führungen umfassen, die dazu ausgelegt sind, die Nutzlast (200) daran montiert oder aufgehängt zu haben, und dazu ausgelegt sind, die Nutzlast (200) im Wesentlichen geradlinig entlang derselben zu bewegen.

15. System nach Anspruch 1, wobei mindestens eine der Führungen (140) aus zwei oder mehr Abschnitten besteht und wobei mindestens einer der Abschnitte beweglich ausgebildet ist, und wobei das Gehäuse (110) ferner eine durch das Steuermodul gesteuerte Antriebsvorrichtung umfasst, die mit dem zumindest einen beweglichen Abschnitt der Führung (140) betriebswirksam gekoppelt ist, um dessen Bewegung gegenüber den übrigen Abschnitten der Führung (140) zur Formänderung der zumindest einen Führung (140) zu ermöglichen.

16. System nach Anspruch 1, wobei die Führungen (140) der Luftfahrzeugvorrichtung (100) zwei getrennte Führungen und eine bewegliche Verbindungsführung umfassen, von denen jede dazu ausgebildet ist, die Nutzlast (200) daran zu montieren oder aufzuhängen und die daran montierte Nutzlast (200) entlang derselben zu bewegen, und wobei das Gehäuse (110) der Luftfahrzeugvorrichtung (100) ferner eine durch das Steuermodul gesteuerte Antriebsvorrichtung umfasst, die mit der beweglichen Verbindungsführung betriebswirksam gekoppelt ist, um deren Bewegung zur Verbindung der Führungen (140) miteinander zu ermöglichen.

17. System nach Anspruch 1, wobei das Lastbewegungsmodul ein robotischer Manipulator oder Greifer ist, der dazu ausgebildet ist, die Nutzlast (200) zu greifen und entlang der gebildeten Cluster-Führung (145) zu bewegen.

18. System nach Anspruch 1, wobei das Lastbewegungsmodul ein Schieber ist, der dazu ausgebildet ist, während seiner Betätigung momentweise eine Kraft auf die Nutzlast (200) auszuüben, um die Nutzlast (200) entlang der Cluster-Führung (145) zu bewegen, und wobei das Gehäuse (110) der Luftfahrzeugvorrichtung (100) ferner eine durch das Steuermodul gesteuerte Antriebsvorrichtung umfasst, die mit dem Schieber betriebswirksam gekoppelt ist, um diesen zu betätigen.

19. System nach Anspruch 1, wobei das Gehäuse (110) ferner mit einem oder mehreren Gewichtssensoren versehen ist, wobei jeder der Gewichtssensoren dazu ausgebildet ist, ein Gewicht der Nutzlast (200) an einer der Stellen der tragenden Struktur zur Nutzlastaufnahme zu messen, und wobei die Gewichtssensoren dazu ausgebildet sind, ihre Messwerte dem Steuermodul bereitzustellen, und wobei das Steuermodul ermöglicht, Steueranweisungen an das Lastbewegungsmodul zur Bewegung der Nutzlast (200) entlang der Cluster-Führung (145) in Abhängigkeit von den genannten Messwerten der Gewichtssensoren bereitzustellen.

20. System nach Anspruch 1, wobei das Lastbewegungsmodul beweglich an mindestens einer zusätzlichen Führung zum Bewegen der Nutzlast (200) montiert ist.

21. System nach Anspruch 1, wobei das Lastbewegungsmodul ferner dazu ausgebildet ist, die Nutzlast (200) von der Führung (140) zu demontieren.

22. System nach Anspruch 1, wobei mindestens eine der Führungen (140) ferner dazu ausgebildet ist, die an der zumindest einen Führung (140) montierte oder aufgehängte Nutzlast (200) zu demontieren.

23. System nach Anspruch 22, wobei die zumindest eine Führung (140) eine oder mehrere Nutzlast-Demontage-Stellen aufweist.

24. System nach Anspruch 1, wobei mindestens eines der Andockmodule beweglich an mindestens einer der Führungen (140) montiert ist.

25. System nach Anspruch 1, wobei das Lastbewegungsmodul einen Greifmechanismus umfasst und mindestens eine der Führungen (140) ferner mit dem Greifmechanismus versehen ist, der dazu ausgelegt ist, die Nutzlast (200) zu greifen, um zu ermöglichen, dass die Nutzlast (200) an der zumindest einen Führung (140) montiert oder aufgehängt wird, und der dazu ausgelegt ist, sich entlang der zumindest einen Führung (140) zu bewegen, um zu ermöglichen, dass die gegriffene Nutzlast (200) entlang der zumindest einen Führung (140) bewegt wird.

26. System nach Anspruch 25, wobei der Greifmechanismus dazu ausgelegt ist, gedreht zu werden, um die Drehung der gegriffenen Nutzlast (200) relativ zu der zumindest einen Führung (140) zu ermöglichen.

27. System nach Anspruch 1, wobei mindestens eine der Führungen (140) beweglich ist und wobei das Gehäuse (110) der Luftfahrzeugvorrichtung (100) ferner ein durch das Steuermodul gesteuertes Führungsbewegungsmodul umfasst, das dazu ausgelegt ist, mit der zumindest einen beweglichen Führung (140) betriebswirksam zu interagieren, um zu ermöglichen, dass die bewegliche Führung (140) und die an der zumindest einen beweglichen Führung (140) montierte oder aufgehängte Nutzlast (200) gemeinsam bewegt werden.

28. System nach Anspruch 1, wobei das Steuermodul ferner dazu konfiguriert ist, dem Lastbewegungsmodul Steuerbefehle bereitzustellen, um die Bewegung der Nutzlast von einer Luftfahrzeugvorrichtung, die abzudocken ist, zu mindestens einer der verbleibenden miteinander angedockten Luftfahrzeugvorrichtungen während der Anwesenheit der Luftfahrzeugvorrichtungen im Luftraum zu ermöglichen.

29. System nach Anspruch 1, wobei das Steuermodul ferner dazu konfiguriert ist, dem Lastbewegungsmodul Steuerbefehle bereitzustellen, um die Aufnahme der Nutzlast von mindestens einer der verbleibenden miteinander angedockten Luftfahrzeugvorrichtungen zu ermöglichen und die Bewegung der aufgenommenen Nutzlast in eine Luftfahrzeugvorrichtung, die abzudocken ist, zu ermöglichen, während der Anwesenheit der Luftfahrzeugvorrichtungen im Luftraum.

30. System nach Anspruch 28, wobei das Steuermodul ferner ermöglicht, die Luftfahrzeugvorrichtung (100), die abzudocken ist, zu einer Parkstation zum Auffrischen ihrer Reichweite zu dirigieren.

31. System nach Anspruch 30, wobei das Steuermodul ferner ermöglicht, die Luftfahrzeugvorrichtung (100) mit aufgefrischter Reichweite mit einer der angedockten Luftfahrzeugvorrichtungen (100) zu koppeln.

32. System nach Anspruch 31, wobei das Steuermodul ferner dazu konfiguriert ist, dem Lastbewegungsmodul der anzudockenden Luftfahrzeugvorrichtung Steuerbefehle bereitzustellen, um die Bewegung der Nutzlast (200) von der anzudockenden Luftfahrzeugvorrichtung zu mindestens einer der angedockten Luftfahrzeugvorrichtungen (100) zu ermöglichen.

33. System nach einem der Ansprüche 28-29, wobei mindestens zwei der miteinander zu koppelnden Luftfahrzeugvorrichtungen (100) jeweils mit einer zusätzlichen Führung versehen sind und das Steuermodul ferner die Bewegung des Lastbewegungsmoduls entlang einer zusätzlichen Cluster-Führung ermöglicht, die aus den zusätzlichen Führungen beim Andocken der Luftfahrzeugvorrichtungen (100) miteinander gebildet wird.

34. System nach Anspruch 1, wobei die Andockmodule (130) an benachbarten Enden der angedockten Führungen (140) vorgesehen sind.

35. System nach Anspruch 34, wobei jede der angedockten Führungen (140) ferner an ihrem gegenüberliegenden Ende mit einem zusätzlichen Andockmodul (130) versehen ist, wobei das zusätzliche Andockmodul (130) dazu ausgelegt ist, an eine Führung einer zusätzlichen Luftfahrzeugvorrichtung (100) angedockt zu werden.

36. System nach Anspruch 34, wobei mindestens ein Teil der angedockten Führungen (140) der Luftfahrzeugvorrichtung (100) zueinander senkrecht angeordnet oder in einem Winkel zueinander angeordnet sind und die an den Enden der angedockten Führungen (140) vorgesehenen Andockmodule (130) dazu ausgelegt sind, lösbar mit angedockten Führungen (140) von zwei oder mehr anderen Luftfahrzeugvorrichtungen (100) verbunden oder angedockt zu werden, um einen Bewegungsweg der Nutzlast (200) festzulegen.

37. System nach Anspruch 1, wobei mindestens eine der angedockten Führungen (140) dazu ausgelegt ist, zur Montage oder Aufhängung einer ersten Nutzlast daran verwendet zu werden und die erste Nutzlast entlang der mindestens einen Führung (140) zu bewegen, und wobei mindestens eine weitere Führung der angedockten Führungen (140) dazu ausgelegt ist, zur Montage oder Aufhängung einer zweiten Nutzlast daran verwendet zu werden und die zweite Nutzlast entlang der mindestens einen weiteren Führung (140) zu bewegen.

38. System nach Anspruch 1, wobei das Gehäuse der Luftfahrzeugvorrichtung (100) ferner mit einem oder mehreren Andockmodulen versehen ist und jedes der Andockmodule dazu ausgelegt ist, zu ermöglichen, dass ein Gehäuse der Luftfahrzeugvorrichtung (100) lösbar mit einem Gehäuse der anderen Luftfahrzeugvorrichtung (100) verbunden wird.

39. Verfahren zum Bewegen einer Nutzlast, umfassend:
unter Kontrolle eines Steuermoduls mindestens eine der Führungen (140) einer ersten Luftfahrzeugvorrichtung (100) in einem Luftraum lösbar mit mindestens einer der Führungen (140) einer zweiten Luftfahrzeugvorrichtung (100) zu verbinden oder anzudocken, um eine aus den angedockten Führungen (140) gebildete Cluster-Führung (145) zu bilden und um eine aus der ersten und zweiten Luftfahrzeugvorrichtung (100), die mittels der angedockten Führungen (140) lösbar miteinander verbunden oder angedockt sind, gebildete
Cluster-Luftfahrzeugvorrichtung zu bilden;
**dadurch gekennzeichnet, dass** das Verfahren ferner umfasst,
durch ein durch das Steuermodul gesteuertes Lastbewegungsmodul eine auf mindestens einer Führung (140) der gebildeten Cluster-Führung (145) beweglich montierte oder aufgehängte Nutzlast (200) zu greifen oder zu schieben, um die Nutzlast (200) mittels des Lastbewegungsmoduls entlang der gebildeten Cluster-Führung (145) zu einer erforderlichen Position auf der gebildeten Cluster-Führung (145) in Bezug auf mindestens eine der angedockten Luftfahrzeugvorrichtungen (100) zu bewegen.

40. Verfahren nach Anspruch 39, ferner umfassend das Drehen der Nutzlast (200) relativ zur Cluster-Führung (145) vor der Bewegung der Nutzlast (200) auf der Cluster-Führung (145).

41. Verfahren nach Anspruch 39, ferner umfassend das lösbare Andocken in einem Luftraum, unter Kontrolle eines Steuermoduls, einer Führung einer zusätzlichen Luftfahrzeugvorrichtung (100) an ein an einem der gegenüberliegenden freien Enden der gebildeten Cluster-Führung (145) vorgesehenes Andockmodul (130), um eine verlängerte Cluster-Führung und eine verlängerte Cluster-Luftfahrzeugvorrichtung zu bilden, die aus der zuvor gebildeten Cluster-Luftfahrzeugvorrichtung und der zusätzlichen Luftfahrzeugvorrichtung (100) besteht, und das Bewegen der Nutzlast (200) entlang der verlängerten Cluster-Führung der verlängerten Cluster-Luftfahrzeugvorrichtung unter Kontrolle des Steuermoduls.

42. Verfahren nach Anspruch 39, ferner umfassend das Andocken der Gehäuse der Luftfahrzeugvorrichtungen (100) mittels an den Gehäusen der entsprechenden angedockten Luftfahrzeugvorrichtungen (100) vorgesehenen Andockmodulen (130).

## Revendications

1. Système pour déplacer une charge utile (200), le système comprenant:
deux dispositifs aériens (100) ou plus, chacun ayant un boîtier (110) pourvu d'une ou plusieurs unités de propulsion aérienne conçues pour permettre le déplacement du dispositif aérien (100) dans un espace aérien et chacun étant pourvu d'un ou plusieurs guides (140), chacun des guides (140) du dispositif aérien (100) étant conçu pour porter de manière mobile ou suspendre une charge utile (200),
au moins un des guides (140) d'un dispositif aérien (100) desdits deux dispositifs aériens ou plus étant en outre conçu pour être relié ou amarré de manière libérable, au moyen d'un ou de plusieurs modules d'amarrage (130), à un ou plusieurs guides (140) d'un autre dispositif aérien (100) desdits deux dispositifs aériens ou plus afin de former un guide de cluster (145), et
le système comprenant en outre un module de commande configuré pour permettre que lesdits dispositifs aériens (100) soient reliés ou amarrés de manière libérable l'un à l'autre au moyen des guides (140) amarrés afin de former un dispositif aérien de cluster, et
le système comprenant en outre un module de déplacement de charge commandé par le module de commande,
**caractérisé en ce que**
le module de déplacement de charge est conçu pour saisir ou pousser, avec la charge utile (200) montée ou suspendue, de manière à permettre à la charge utile (200) d'être déplacée de façon contrôlée par le module de déplacement de charge le long du guide de cluster (145) formé, jusqu'à une position requise sur le guide de cluster (145) formé, par rapport à au moins l'un des dispositifs aériens (100) amarrés.

2. Système selon la revendication 1, dans lequel au moins certains des guides (140) du dispositif aérien (100) sont disposés parallèlement les uns aux autres, perpendiculairement les uns aux autres et/ou selon un angle prédéterminé les uns par rapport aux autres.

3. Système selon la revendication 1, dans lequel au moins un des guides (140) du dispositif aérien (100) est monté sur un dispositif rotatif monté dans le boîtier (110) du dispositif aérien (100) de manière à permettre audit au moins un guide (140) de pivoter d'un angle de rotation prédéterminé.

4. Système selon la revendication 1, dans lequel au moins un des guides (140) du dispositif aérien (100) est monté rotatif sur le boîtier (110) du dispositif aérien (100), et le boîtier (110) du dispositif aérien (100) comprend en outre un dispositif d'entraînement commandé par le module de commande et couplé de manière fonctionnelle audit au moins un guide (140) ou configuré pour interagir avec ledit au moins un guide (140) afin de permettre sa rotation d'un angle de rotation prédéterminé.

5. Système selon la revendication 1, dans lequel au moins un des guides (140) du dispositif aérien (100) est de configuration télescopique, et le boîtier (110) du dispositif aérien (100) comprend en outre un dispositif d'entraînement commandé par le module de commande et couplé de manière fonctionnelle audit au moins un guide (140) ou configuré pour interagir avec ledit au moins un guide (140) afin de permettre son extension au moins partielle.

6. Système selon la revendication 5, dans lequel le module de commande est en outre configuré pour présenter des commandes au dispositif d'entraînement de manière à permettre la rétraction au moins partielle dudit guide (140) étendu.

7. Système selon la revendication 1, dans lequel le boîtier (110) est configuré pour s'incliner ou pivoter d'un angle prédéterminé par rapport à au moins l'un des guides (140).

8. Système selon la revendication 1, dans lequel le boîtier (110) est configuré pour modifier sa forme et/ou ses dimensions.

9. Système selon la revendication 1, dans lequel au moins l'un des guides (140) est au moins partiellement pliable ou flexible.

10. Système selon la revendication 1, dans lequel au moins l'un des guides (140) est rectiligne ou curviligne.

11. Système selon la revendication 1, dans lequel au moins l'un des guides (140) présente une configuration en T, en Z, en X, en Y, en U inversé, en E, en U, en N, en L, en F, en O, en H, en V, en L inversé, en C ou en W.

12. Système selon la revendication 1, dans lequel au moins l'un des guides (140) est configuré pour permettre le déplacement de la charge utile (200) le long d'au moins un des trois axes de coordonnées ou configuré pour se déplacer par rapport au boîtier (110) du dispositif aérien (100) de manière à permettre le déplacement de la charge utile (200) montée ou suspendue sur ledit au moins un guide (140) par rapport au boîtier (110) du dispositif aérien (100).

13. Système selon la revendication 1, dans lequel le module de déplacement de charge comprend un ou plusieurs organes de travail commandables configurés pour interagir avec la charge utile (200) lorsqu'ils sont actionnés, de manière à permettre la fixation ou la suspension de ladite charge utile (200) sur au moins l'un des guides (140) et à permettre son déplacement le long dudit au moins un guide (140) pendant l'actionnement desdits organes de travail, et comprend en outre un dispositif d'entraînement commandé par le module de commande et couplé de manière fonctionnelle auxdits organes de travail commandables de manière à permettre l'actionnement d'au moins l'un d'entre eux en réponse aux commandes du module de commande.

14. Système selon la revendication 1, dans lequel les guides (140) du dispositif aérien (100) comprennent deux guides parallèles ou plus conçus pour porter ou suspendre la charge utile (200) et pour déplacer sensiblement de manière rectiligne ladite charge utile (200) le long de ceux-ci.

15. Système selon la revendication 1, dans lequel au moins l'un des guides (140) est constitué de deux portions ou plus, au moins l'une des portions étant mobile, et dans lequel le boîtier (110) comprend en outre un dispositif d'entraînement commandé par le module de commande et couplé de manière fonctionnelle audit au moins une portion mobile du guide (140) de manière à permettre son déplacement par rapport aux autres portions du guide (140) pour modifier une forme dudit au moins un guide (140).

16. Système selon la revendication 1, dans lequel les guides (140) du dispositif aérien (100) comprennent deux guides distincts et un guide de liaison mobile, chacun étant configuré pour porter ou suspendre la charge utile (200) et pour déplacer ladite charge utile (200) le long de celui-ci, et dans lequel le boîtier (110) du dispositif aérien (100) comprend en outre un dispositif d'entraînement commandé par le module de commande et couplé de manière fonctionnelle audit guide de liaison mobile de manière à permettre son déplacement pour relier les guides (140) entre eux.

17. Système selon la revendication 1, dans lequel le module de déplacement de charge est un manipulateur robotisé ou un préhenseur configuré pour saisir et déplacer la charge utile (200) le long du guide de cluster (145) formé.

18. Système selon la revendication 1, dans lequel le module de déplacement de charge est un pousseur configuré pour exercer momentanément une force sur la charge utile (200) lors de son actionnement afin de déplacer la charge utile (200) le long du guide de cluster (145), et dans lequel le boîtier (110) du dispositif aérien (100) comprend en outre un dispositif d'entraînement commandé par le module de commande et couplé de manière fonctionnelle audit pousseur de manière à l'actionner.

19. Système selon la revendication 1, dans lequel le boîtier (110) est en outre pourvu d'un ou de plusieurs capteurs de poids, chacun des capteurs de poids étant configuré pour mesurer un poids de la charge utile (200) à l'un des emplacements de la structure porteuse destinée à l'accueil de la charge, les capteurs de poids étant configurés pour fournir leurs mesures au module de commande, et le module de commande permettant de fournir des instructions de commande au module de déplacement de charge pour déplacer la charge utile (200) le long du guide de cluster (145) en fonction desdites mesures des capteurs de poids.

20. Système selon la revendication 1, dans lequel le module de déplacement de charge est monté mobile sur au moins un guide supplémentaire pour le déplacement de la charge utile (200).

21. Système selon la revendication 1, dans lequel le module de déplacement de charge est en outre configuré pour démonter la charge utile (200) du guide (140).

22. Système selon la revendication 1, dans lequel au moins l'un des guides (140) est en outre configuré pour démonter la charge utile (200) montée ou suspendue sur ledit au moins un guide (140).

23. Système selon la revendication 22, dans lequel ledit au moins un guide (140) comporte un ou plusieurs emplacements de démontage de charge utile.

24. Système selon la revendication 1, dans lequel au moins l'un des modules d'amarrage est monté mobile sur au moins l'un des guides (140).

25. Système selon la revendication 1, dans lequel le module de déplacement de charge comprend un mécanisme de préhension, et au moins l'un des guides (140) est en outre pourvu dudit mécanisme de préhension conçu pour saisir la charge utile (200) de manière à permettre que la charge utile (200) soit montée ou suspendue sur ledit au moins un guide (140), et conçu pour se déplacer le long dudit au moins un guide (140) de manière à permettre que la charge utile (200) saisie soit déplacée le long dudit au moins un guide (140).

26. Système selon la revendication 25, dans lequel le mécanisme de préhension est conçu pour être entraîné en rotation afin de permettre la rotation de ladite charge utile (200) saisie par rapport audit au moins un guide (140).

27. Système selon la revendication 1, dans lequel au moins l'un des guides (140) est mobile, et dans lequel le boîtier (110) du dispositif aérien (100) comprend en outre un module de déplacement de guide commandé par le module de commande et conçu pour interagir de manière fonctionnelle avec ledit au moins un guide (140) mobile de manière à permettre que le guide (140) mobile et la charge utile (200) montée ou suspendue sur ledit au moins un guide (140) mobile soient déplacés conjointement.

28. Système selon la revendication 1, dans lequel le module de commande est en outre configuré pour présenter des commandes au module de déplacement de charge de manière à permettre le déplacement de la charge utile depuis un dispositif aérien devant être désamarré vers au moins l'un des dispositifs aériens restant amarrés l'un à l'autre, pendant la présence des dispositifs aériens dans l'espace aérien.

29. Système selon la revendication 1, dans lequel le module de commande est en outre configuré pour présenter des commandes au module de déplacement de charge de manière à permettre la réception de la charge utile depuis au moins l'un des dispositifs aériens restant amarrés l'un à l'autre et à permettre le déplacement de ladite charge utile reçue dans un dispositif aérien devant être désamarré, pendant la présence des dispositifs aériens dans l'espace aérien.

30. Système selon la revendication 28, dans lequel le module de commande permet en outre d'orienter le dispositif aérien (100) devant être désamarré vers une station de stationnement afin de reconstituer son autonomie.

31. Système selon la revendication 30, dans lequel le module de commande permet en outre l'amarrage du dispositif aérien (100) dont l'autonomie a été reconstituée à l'un des dispositifs aériens (100) amarrés.

32. Système selon la revendication 31, dans lequel le module de commande est en outre configuré pour fournir des commandes au module de déplacement de charge du dispositif aérien devant être amarré de manière à permettre le déplacement de la charge utile (200) depuis le dispositif aérien devant être amarré vers au moins l'un des dispositifs aériens (100) amarrés.

33. Système selon l'une des revendications 28 à 29, dans lequel au moins deux des dispositifs aériens (100) devant être amarrés l'un à l'autre sont en outre chacun pourvus d'un guide supplémentaire, et le module de commande permet en outre le déplacement du module de déplacement de charge le long d'un guide de cluster supplémentaire formé à partir desdits guides supplémentaires lors de l'amarrage des dispositifs aériens (100) l'un à l'autre.

34. Système selon la revendication 1, dans lequel les modules d'amarrage (130) sont prévus aux extrémités adjacentes des guides (140) amarrés.

35. Système selon la revendication 34, dans lequel chacun des guides (140) amarrés est en outre pourvu, à son extrémité opposée, d'un module d'amarrage supplémentaire (130), le module d'amarrage supplémentaire (130) étant conçu pour être amarré à un guide d'un dispositif aérien (100) supplémentaire.

36. Système selon la revendication 34, dans lequel au moins une partie des guides (140) amarrés du dispositif aérien (100) sont disposés perpendiculairement les uns aux autres ou selon un angle les uns par rapport aux autres, et les modules d'amarrage (130) prévus aux extrémités des guides (140) amarrés sont conçus pour être reliés ou amarrés de manière libérable aux guides (140) amarrés de deux autres dispositifs aériens (100) ou plus de manière à définir un trajet de déplacement de la charge utile (200).

37. Système selon la revendication 1, dans lequel au moins l'un des guides (140) amarrés est conçu pour être utilisé afin d'y monter ou y suspendre une première charge utile et pour permettre le déplacement de la première charge utile le long dudit au moins un guide (140), et au moins un autre guide parmi les guides (140) amarrés est conçu pour être utilisé afin d'y monter ou y suspendre une seconde charge utile et pour permettre le déplacement de la seconde charge utile le long dudit au moins un autre guide (140).

38. Système selon la revendication 1, dans lequel le boîtier du dispositif aérien (100) est en outre pourvu d'un ou de plusieurs modules d'amarrage, chacun des modules d'amarrage étant conçu pour permettre qu'un boîtier du dispositif aérien (100) soit relié de manière libérable à un boîtier de l'autre dispositif aérien (100).

39. Procédé de déplacement d'une charge utile, le procédé comprenant:
relier ou amarrer de manière libérable, dans un espace aérien et sous le contrôle d'un module de commande, au moins l'un des guides (140) d'un premier dispositif aérien (100) à au moins l'un des guides (140) d'un second dispositif aérien (100) afin de former un guide de cluster (145) constitué des guides (140) amarrés et de former un dispositif aérien de cluster constitué du premier et du second dispositifs aériens (100) reliés ou amarrés de manière libérable l'un à l'autre au moyen des guides (140) amarrés;
**caractérisé en ce que** le procédé comprend en outre
saisir ou pousser, par un module de déplacement de charge commandé par le module de commande, une charge utile (200) montée ou suspendue de manière mobile sur au moins un guide (140) du guide de cluster (145) formé, afin de déplacer la charge utile (200), au moyen du module de déplacement de charge, le long du guide de cluster (145) formé jusqu'à une position requise sur le guide de cluster (145) formé par rapport à au moins l'un des dispositifs aériens (100) amarrés.

40. Procédé selon la revendication 39, comprenant en outre la rotation de la charge utile (200) par rapport au guide de cluster (145) avant le déplacement de la charge utile (200) sur le guide de cluster (145).

41. Procédé selon la revendication 39, comprenant en outre l'amarrage libérable, dans un espace aérien et sous le contrôle d'un module de commande, d'un guide d'un dispositif aérien (100) supplémentaire à un module d'amarrage (130) prévu à l'une des extrémités libres opposées du guide de cluster (145) formé, de manière à former un guide de cluster prolongé et un dispositif aérien de cluster prolongé constitué du dispositif aérien de cluster précédemment formé et du dispositif aérien (100) supplémentaire, et le déplacement, sous le contrôle du module de commande, de la charge utile (200) le long du guide de cluster prolongé du dispositif aérien de cluster prolongé.

42. Procédé selon la revendication 39, comprenant en outre l'amarrage des boîtiers des dispositifs aériens (100) au moyen de modules d'amarrage (130) prévus sur les boîtiers des dispositifs aériens (100) correspondants amarrés.
